(19) Europäisches Patentamt / European Patent Office / Office européen des brevets

(11) **EP 4 482 185 A1**

(12) **EUROPEAN PATENT APPLICATION**
published in accordance with Art. 153(4) EPC

(43) Date of publication:
**25.12.2024 Bulletin 2024/52**

(21) Application number: **22926460.1**

(22) Date of filing: **18.02.2022**

(51) International Patent Classification (IPC):
**H04W 12/04** $^{(2021.01)}$

(52) Cooperative Patent Classification (CPC):
**H04W 12/04**

(86) International application number:
**PCT/CN2022/076818**

(87) International publication number:
**WO 2023/155128 (24.08.2023 Gazette 2023/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
• **WANG, Huiming**
  **Dongguan, Guangdong 523860 (CN)**
• **GAN, Lu**
  **Dongguan, Guangdong 523860 (CN)**
• **WEI, Xuan**
  **Dongguan, Guangdong 523860 (CN)**
• **SHI, Cong**
  **Dongguan, Guangdong 523860 (CN)**
• **XU, Weijie**
  **Dongguan, Guangdong 523860 (CN)**

(74) Representative: **RGTH**
**Patentanwälte PartGmbB**
**Neuer Wall 10**
**20354 Hamburg (DE)**

(54) **KEY GENERATION METHOD, INFORMATION VERIFICATION METHOD, AND DEVICES**

(57) This application relates to a key generation method, an information check method, a device, a computer-readable storage medium, a computer program product, and a computer program. The method includes: transmitting, by a first device, a first wireless signal, and receiving a first reflected signal, where the first reflected signal is transmitted by a second device based on the first wireless signal; and generating, by the first device, a first key based on received strength of the first reflected signal.

A first device transmits a first wireless signal and receives a first reflected signal, where the first reflected signal is transmited by a second device based on the first wireless signal transmited by the first device — S210

The first device generates a first key based on received strength of the first reflected signal — S220

FIG. 2

EP 4 482 185 A1

**Description**

**TECHNICAL FIELD**

This application relates to the communications field, and more specifically, to a key generation method, an information check method, a device, a computer-readable storage medium, a computer program product, and a computer program.

**BACKGROUND**

In a communication scenario, interaction between two devices generally needs to be performed in a secure environment. Therefore, both of the devices need to be provided with keys. However, in a process in which the two devices generate respective keys, how to ensure randomness of the generated keys and further ensure security of the keys becomes a problem that needs to be resolved.

**SUMMARY**

Embodiments of this application provide a key generation method, an information check method, a device, a computer-readable storage medium, a computer program product, and a computer program.

An embodiment of this application provides a key generation method, including: transmitting, by a first device, a first wireless signal, and receiving a first reflected signal, where the first reflected signal is transmitted by a second device based on the first wireless signal; and generating, by the first device, a first key based on received strength of the first reflected signal.

An embodiment of this application provides a key generation method, including: receiving, by a second device, a first wireless signal; and generating, by the second device, a second key based on received strength of the first wireless signal.

An embodiment of this application provides an information check method, including: transmitting, by a first device, fourth information to a second device, where the fourth information includes check information generated based on a first key, the first key is related to received strength of a first reflected signal, and the first reflected signal is transmitted by the second device based on a first wireless signal transmitted by the first device; and receiving, by the first device, fifth information transmitted by the second device, where the fifth information includes a check result of checking on a second key against the first key, and the second key is related to received strength of receiving the first wireless signal by the second device.

An embodiment of this application provides an information check method, including: receiving, by a second device, fourth information transmitted by a first device, where the fourth information includes check information generated based on a first key, the first key is related to received signal strength of a first reflected signal, and the first reflected signal is transmitted by the second device based on a first wireless signal transmitted by the first device; and transmitting, by the second device, fifth information to the first device, where the fifth information includes a check result of checking on a second key against the first key, and the second key is related to received strength of receiving the first wireless signal by the second device.

An embodiment of this application provides a first device, including: a first communications unit, configured to transmit a first wireless signal and receive a first reflected signal, where the first reflected signal is transmitted by a second device based on the first wireless signal; and a first processing unit, configured to generate a first key based on received strength of the first reflected signal.

An embodiment of this application provides a second device, including: a second communications unit, configured to receive a first wireless signal; and a second processing unit, configured to generate a second key based on received strength of the first wireless signal.

An embodiment of this application provides a first device, including: a first communications unit, configured to: transmit fourth information to a second device, where the fourth information includes check information generated based on a first key, the first key is related to received strength of a first reflected signal, and the first reflected signal is transmitted by the second device based on a first wireless signal transmitted by the first device; and receive fifth information transmitted by the second device, where the fifth information includes a check result of checking on a second key against the first key, and the second key is related to received strength of receiving the first wireless signal by the second device.

An embodiment of this application provides a second device, including: a second communications unit, configured to: receive fourth information transmitted by a first device, where the fourth information includes check information generated based on a first key, the first key is related to received signal strength of a first reflected signal, and the first reflected signal is transmitted by the second device based on a first wireless signal transmitted by the first device; and transmit fifth information to the first device, where the fifth information includes a check result of checking on a second key against the first key, and the second key is related to received strength of receiving the first wireless signal by the second device.

An embodiment of this application provides a first device, including a processor and a memory. The memory is configured to store a computer program, and the processor is configured to invoke and run the computer program stored in the memory, to cause the first device to execute a foregoing method.

An embodiment of this application provides a second device, including a processor and a memory. The memory is configured to store a computer program, and the processor is configured to invoke and run the computer program stored in the memory, to cause the second device to execute a foregoing method.

An embodiment of this application provides a chip, configured to implement a foregoing method.

Specifically, the chip includes a processor, configured to invoke a computer program from a memory and run the computer program, to cause a device on which the chip is installed to execute a foregoing method.

An embodiment of this application provides a computer-readable storage medium, configured to store a computer program. The computer program, when is run by a device, causes the device to execute a foregoing method.

An embodiment of this application provides a computer program product, including computer program instructions, and the computer program instructions cause a computer to execute a foregoing method.

An embodiment of this application provides a computer program. The computer program, when is run on a computer, causes the computer to execute a foregoing method.

By using the solutions provided in embodiments of this application, a first key may be generated based on received strength of a reflected signal of a wireless signal. Because the reflected signal is obtained based on reflection of the wireless signal, the solutions are more applicable to a zero-power-consumption scenario. In addition, because the first key is obtained according to the received strength of the reflected signal of the wireless signal transmitted by a first device, randomness of the generated key may be ensured, and further security of the key is ensured.

## BRIEF DESCRIPTION OF DRAWINGS

FIG. 1 is a schematic diagram of an application scenario according to an embodiment of this application.
FIG. 2 is a schematic flowchart 1 of a key generation method according to an embodiment of this application.
FIG. 3 is a schematic flowchart 2 of a key generation method according to an embodiment of this application.
FIG. 4 is a schematic flowchart 3 of a key generation method according to an embodiment of this application.
FIG. 5 is a schematic flowchart 4 of a key generation method according to an embodiment of this application.
FIG. 6 is a schematic flowchart 1 of an information check method according to an embodiment of this application.
FIG. 7 is a schematic flowchart 2 of an information check method according to an embodiment of this application.
FIG. 8a is an exemplary and schematic flowchart 1 according to an embodiment of this application.
FIG. 8b is a schematic diagram of an example scenario according to an embodiment of this application.
FIG. 9 is an exemplary and schematic flowchart 2 according to an embodiment of this application.
FIG. 10a is an exemplary and schematic flowchart 3 according to an embodiment of this application.
FIG. 10b is a schematic diagram of a scenario in which a first indicator bit and a second indicator bit are generated according to an embodiment of this application.
FIG. 11 is a comparison diagram of results of a plurality of quantization methods.
FIG. 12 is a schematic block diagram of a first device according to an embodiment of this application.
FIG. 13 is a schematic block diagram of a second device according to another embodiment of this application.
FIG. 14 is a schematic diagram of a zero-power-consumption communications system based on backscatter according to an embodiment of this application.
FIG. 15 is a schematic diagram of a scenario of a hybrid zero-power-consumption communications system based on cellular communication and/or sidelink communication according to an embodiment of this application.
FIG. 16 is a schematic block diagram of a communications device according to an embodiment of this application.
FIG. 17 is a schematic block diagram of a chip according to an embodiment of this application.
FIG. 18 is a schematic block diagram of a communications system according to an embodiment of this application.

## DESCRIPTION OF EMBODIMENTS

The following describes the technical solutions in embodiments of this application with reference to the accompanying drawings in embodiments of this application.

The technical solutions in embodiments of this application may be applied to various communications systems, for example, a global system for mobile communications (Global System of Mobile communication, GSM), a code division multiple access (Code Division Multiple Access, CDMA) system, a wideband code division multiple access (Wideband Code Division Multiple Access, WCDMA) system, general packet radio service (General Packet Radio Service, GPRS), a long-term evolution (Long Term Evolution, LTE) system, an advanced long-term evolution (Advanced long term evolution, LTE-A) system, a new radio (New Radio, NR) system, an evolved system of an NR system, an LTE-based access to unlicensed spectrum (LTE-based access to unlicensed spectrum, LTE-U) system, an NR-based access to unlicensed spectrum (NR-based access to unlicensed spectrum, NR-U) system, a non-terrestrial networks (Non-Terrestrial Networks, NTN) system, a universal mobile telecommunication system (Universal Mobile Telecommunication System, UMTS), a wireless local area network (Wireless Local Area Networks, WLAN), wireless fidelity (Wireless Fidelity, WiFi), a fifth-generation (5th-Generation, 5G) system, or another communications system.

Generally, a quantity of connections supported by a conventional communications system is limited and is also easy to implement. However, with development of communication technologies, a mobile communications system would not only support conventional communication, but also support, for example, device-to-device (Device to Device, D2D) communication, machine to machine (Machine to Machine, M2M) communication, machine type communication (Machine Type Communication, MTC), vehicle to vehicle (Vehicle to Vehicle, V2V) communication, or vehicle to everything (Vehicle to everything, V2X) communication. Embodiments of this application may also be applied to these communications systems.

In a possible implementation, a communications system in embodiments of this application may be applied to a carrier aggregation (Carrier Aggregation, CA) scenario, a dual connectivity (Dual Connectivity, DC) scenario, or a standalone (Standalone, SA) networking scenario.

In a possible implementation, a communications system in embodiments of this application may be applied to an unlicensed spectrum, and the unlicensed spectrum may also be considered as a shared spectrum. Alternatively, the communications system in embodiments of this application may be applied to a licensed spectrum, and the licensed spectrum may also be considered as a non-shared spectrum.

Embodiments of this application are described with reference to a network device and a terminal device. The terminal device may also be referred to as a user equipment (User Equipment, UE), an access terminal, a user unit, a user station, a mobile site, a mobile station, a remote station, a remote terminal, a mobile device, a user terminal, a terminal, a wireless communications device, a user agent, a user apparatus, or the like.

The terminal device may be a station (STAION, ST) in a WLAN, a cellular phone, a cordless phone, a session initiation protocol (Session Initiation Protocol, SIP) phone, a wireless local loop (Wireless Local Loop, WLL) station, a personal digital assistant (Personal Digital Assistant, PDA) device, a handheld device with a wireless communication function, a computing device or another processing device connected to a wireless modem, a vehicle-mounted device, a wearable device, a terminal device in a next-generation communications system such as an NR network, a terminal device in a future evolved public land mobile network (Public Land Mobile Network, PLMN), or the like.

In embodiments of this application, the terminal device may be deployed on land, including being indoors or outdoors, handheld, wearable, or vehicle-mounted. The terminal device may also be deployed on water (for example, on a ship), or may be deployed in the air (for example, on an airplane, an air balloon, or a satellite).

In embodiments of this application, the terminal device may be a mobile phone (Mobile Phone), a tablet computer (Pad), a computer with a wireless transceiver function, a virtual reality (Virtual Reality, VR) terminal device, an augmented reality (Augmented Reality, AR) terminal device, a wireless terminal device in industrial control (industrial control), a wireless terminal device in self-driving (self driving), a wireless terminal device in remote medical (remote medical), a wireless terminal device in smart grid (smart grid), a wireless terminal device in transportation safety (transportation safety), a wireless terminal device in smart city (smart city), a wireless terminal device in smart home (smart home), or the like.

By way of example rather than limitation, in embodiments of this application, the terminal device may alternatively be a wearable device. The wearable device may also be referred to as a smart wearable device, and is a general term for wearable devices such as glasses, gloves, watches, clothes, and shoes that are intelligently designed and developed based on daily wearing by using a wearable technology. The wearable device is a portable device that can be directly worn or integrated into clothes or accessories of a user. In addition to being a hardware device, the wearable device can also realize powerful features by means of software support, data interaction, and cloud interaction. In a broad sense, smart wearable devices may include a full-featured and large-sized device that can provide full or partial functions without relying on a smart phone, for example, a smart watch or smart glasses, and devices that focus on only a specific type of application function and need to cooperate with another device such as a smart phone for use, for example, various smart bracelets and smart jewelry for physical sign monitoring.

In embodiments of this application, the network device may be a device configured to communicate with a mobile device. The network device may be an access point (Access Point, AP) in a WLAN, a base transceiver station (Base Transceiver Station, BTS) in GSM or CDMA, a Node B (NodeB, NB) in WCDMA, an evolved Node B (Evolutional Node B, eNB, or eNodeB) in LTE, a relay station or an access point, a vehicle-mounted device, a wearable device, a network device (gNB) in an NR network, a network device in a future evolved PLMN network, a network device in an NTN network, or the like.

By way of example rather than limitation, in embodiments of this application, the network device may have a mobility characteristic. For example, the network device may be a mobile device. Optionally, the network device may be a satellite or a balloon station. For example, the satellite may be a low earth orbit (low earth orbit, LEO) satellite, a medium earth orbit (medium earth orbit, MEO) satellite, a geostationary earth orbit (geostationary earth orbit, GEO) satellite, a high elliptical orbit (High Elliptical Orbit, HEO) satellite, or the like. Optionally, the network device may alternatively be a base station disposed in a location such as land or water.

In embodiments of this application, the network device may provide a service for a cell. The terminal device communicates with the network device by using a transmission resource (for example, a frequency domain resource or a spectrum resource) used by the cell. The cell may be a cell corresponding to the network device (for example, a base station). The cell may belong to a macro station or may belong to a base station corresponding to a small cell (Small cell). The small cell herein may include a metro cell (Metro cell), a micro cell (Micro cell), a pico cell (Pico cell), a femto cell (Femto cell), or the like. These small cells have a characteristic of a small coverage range and low transmit power, and are applicable to providing a high-rate data transmission service.

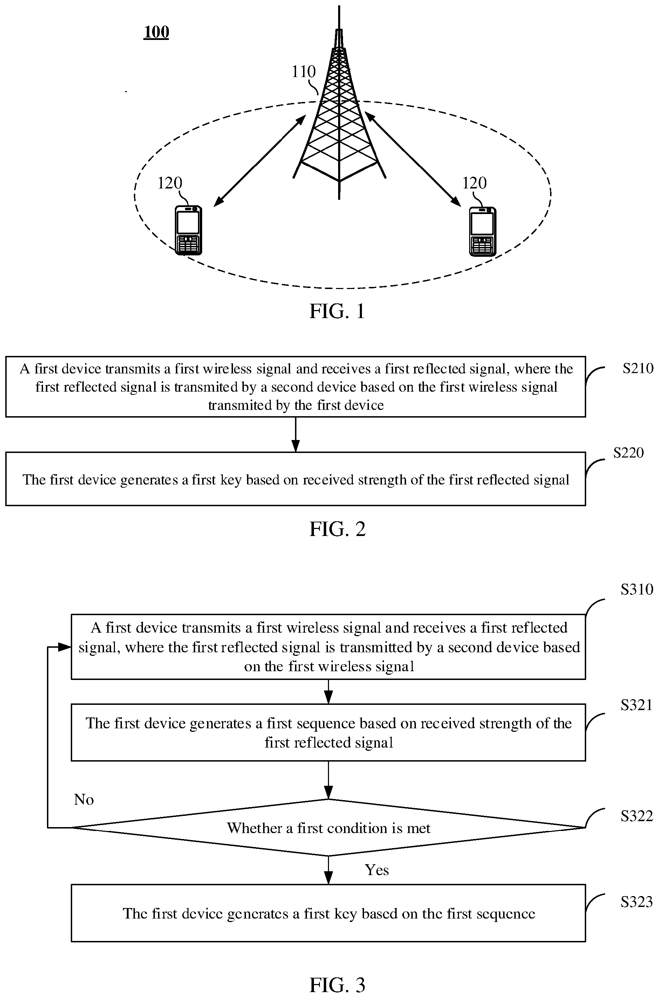

FIG. 1 exemplarily shows a communications system 100. The communications system includes one network device 110 and two terminal devices 120. In a possible implementation, the communications system 100 may include a plurality of network devices 110, and another quantity of terminal devices 120 may be included within a coverage range of each network device 110, which is not limited in embodiments of this application.

In a possible implementation, the communications system 100 may further include other network entities such as a mobility management entity (Mobility Management Entity, MME) or an access and mobility management function (Access and Mobility Management Function, AMF), which is not limited in embodiments of this application.

The network device may further include an access network device and a core network device. That is, the wireless communications system further includes a plurality of core networks configured to communicate with the access network device. The access network device may be an evolved node B (evolutional node B, which may be referred to as an eNB or an e-NodeB for short), a macro base station, a micro base station (also referred to as a "small cell"), a pico base station, an access point (access point, AP), a transmission point (transmission point, TP), or a new generation Node B (new generation Node B, gNodeB), or the like in a long-term evolution (long-term evolution, LTE) system, a next-generation (mobile communications system) (next radio, NR) system, or an authorized auxiliary access long-term evolution (authorized auxiliary access long-term evolution, LAA-LTE) system.

It should be understood that a device having a communication function in a network or a system in embodiments of this application may be referred to as a communications device. The communications system shown in FIG. 1 is used as an example. The communications device may include a network device and a terminal device that have a communication function. The network device and the terminal device may be specific devices in embodiments of this application. Details are not described herein again. The communications device may further include another device in the communications system, for example, another network entity such as a network controller or a mobility management entity, which is not limited in embodiments of this application.

It should be understood that the terms "system" and "network" may often be used interchangeably herein. In this specification, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

It should be understood that, the "indication" mentioned in embodiments of this application may be a direct indication or an indirect indication, or indicate an association. For example, if A indicates B, it may mean that A directly indicates B, for example, B can be obtained from A. Alternatively, it may mean that A indicates B indirectly, for example, A indicates C, and B can be obtained from C. Alternatively, it may mean that there is an association between A and B.

In the description of embodiments of this application, the term "corresponding" may mean that there is a direct or indirect correspondence between two elements, or that there is an association between two elements, or that there is a relationship of "indicating" and "being indicated", "configuring" and "being configured", or the like.

To facilitate understanding of the technical solutions in embodiments of this application, the following describes related technologies in embodiments of this application. As optional solutions, the following related technologies may be randomly combined with the technical solutions in embodiments of this application, all of which are within the protection scope of embodiments of this application.

FIG. 2 is a schematic flowchart of a key generation method according to an embodiment of this application. Optionally, the method may be applied to the system shown in FIG. 1, but is not limited thereto. The method includes at least a part of the following content.

S210: A first device transmits a first wireless signal and receives a first reflected signal, where the first reflected signal is transmitted by a second device based on the first wireless signal transmitted by the first device.

S220: The first device generates a first key based on received strength of the first reflected signal.

In this embodiment, the first device and the second device may vary with scenarios. For example, the first device may be a reader (tag reader), and the second device may specifically be a zero-power-consumption device, for example, a tag (tag). For another example, the first device may be any one of an access network device (for example, a base station, an eNB, or a gNB), a user equipment (UE, User Equipment), a customer-premises equipment (CPE, Customer Premise Equipment), or the like. Correspondingly, the second device may be any one of a zero-power-consumption device, an internet of things (Internet of Things, IoT) device, a passive internet of things (Passive Internet of Things, Passive IoT) device, or the like. It should be understood that, the foregoing is merely an example for description. In actual processing, the first device and the second device may separately be another type of device, and are not enumerated exhaustively herein.

In S210, the first wireless signal may be a first wireless signal transmitted by the first device this time. Correspondingly, the first reflected signal may also be a first reflected signal received this time.

That a first device transmits a first wireless signal may refer to: transmitting, by the first device, the first wireless signal based on a wireless signal transmission period. The wireless signal transmission period may be configured in advance, for example, may be 1s or 2s, or may be longer or shorter, which is not enumerated exhaustively herein.

That is, the first device may periodically transmit a first wireless signal, and receive a first reflected signal corresponding to the first wireless signal.

The first wireless signal may be used by the second device to generate a second key.

In S220, that the first device generates a first key based on received strength of the first reflected signal may include: generating, by the first device, a first sequence based on the received strength of the first reflected signal, and generating, by the first device, the first key based on the first sequence.

The generating, by the first device, the first key based on the first sequence may specifically include: in a case in which a first condition is met, generating, by the first device, the first key based on the first sequence.

The first condition includes at least one of the following: a total length of the first sequence is greater than or equal to a preset length; or a quantity of times the first wireless signal is transmitted reaches a preset quantity, where the first wireless signal is used by the second device to generate the second key.

In addition, the following may be further included: In a case in which the first condition is not met, the first device returns to execute S210, that is, the first device continues to transmit a first wireless signal and receive a first reflected signal.

The preset length may be represented as "keylen". The preset length may be set in advance according to an actual requirement, and a unit of the preset length may be bit. For example, the preset length may be 16 bits, 24 bits, or 8 bits, or may be longer or shorter, which is not enumerated exhaustively herein.

The preset quantity may be set in advance according to an actual situation, for example, may be 8, 6, or 1, or may be larger or smaller, which is not enumerated exhaustively. Alternatively, the preset quantity may be determined based on the preset length. For example, if it is determined in advance that a length of information obtained by performing quantization processing once according to a preset quantization algorithm is A1 bits, and the preset length is B1 bits, the preset quantity may be equal to B1 divided by A1 (that is, the preset quantity = B1/A1).

That the first wireless signal is used by the second device to generate the second key may refer to: The first wireless signal may carry a data packet, and the data packet is used for extraction by the second device to generate the second key.

The foregoing first condition may include any one of the foregoing, that is, the first condition may include that the total length of the first sequence is greater than or equal to the preset length or that the quantity of times the first wireless signal is transmitted reaches the preset quantity. Alternatively, in a case in which the preset quantity is determined based on the preset length, the first condition may include that the total length of the first sequence is greater than or equal to the preset length and that the quantity of times the first wireless signal is transmitted reaches the preset quantity.

It should be noted that the first device may further execute the following processing: transmitting, by the first device, second information to the second device, where the second information includes at least one of the following: the preset length or the preset quantity.

That is, the preset length and/or the preset quantity may be saved in the first device in advance. Before executing the foregoing S210, the first device may transmit the second information to the second device in advance, so that the second device may determine a second condition of the second device based on the foregoing preset length and/or the foregoing preset quantity.

In one case, content included in the second information may be related to content included in the first condition. For example, if the first device determines that the first condition is only that the total length of the first sequence is greater than or equal to the preset length, the first device may set (or include) only the preset length in the second information. If the first device determines that the first condition is only that the quantity of times the first wireless signal is transmitted reaches the preset quantity, the first device may set (or include) only the preset quantity in the second information.

In another case, the content included in the second information may not be related to the content included in the first condition. That is, no matter which of the foregoing is the content of the first condition, the second information may include the preset length and the preset quantity. In this case, a rule may be set in the first device and the second device in advance. This rule may specify whether a preset length or a preset quantity is used as a determining condition for the respective first device and the second device, for example, the first condition for the first device and the second condition for the second device.

With reference to FIG. 3, specific processes of the foregoing S210 and S220 is described, and may include: S310: The first device transmits the first wireless signal and receives the first reflected signal, where the first reflected signal is transmitted by the second device based on the first wireless signal.

Correspondingly, specific process of the foregoing S220 may include:

S321: The first device generates the first sequence based on the received strength of the first reflected signal.

S322: The first device determines whether the first condition is met, and if the first condition is met, the first device executes S323, or if the first condition is not met, the first device returns to execute S310.

S323: The first device generates the first key based on the first sequence.

The foregoing S310 to S322 may be a loop process; S323 may not be executed until it is determined in S322 that the first condition is met. That is, in a case in which it is determined that the first condition is met after at least one loop process is completed, the first device generates the first key based on the first sequence. In this embodiment, any one of the foregoing at least one loop process is referred to as the $i^{th}$ loop process.

In the $i^{th}$ loop process, that the first device transmits the first wireless signal and receives the first reflected signal in S310 specifically refers to: transmitting, by the first device, the $i^{th}$ first wireless signal, and receiving the $i^{th}$ first reflected signal, where i is an integer greater than or equal to 1.

The following separately describes two processing manners of generating the first key based on the $i^{th}$ loop process and with reference to the foregoing S321 to S323.

A first processing manner:

In S321, that the first device generates the first sequence based on the received strength of the first reflected signal may specifically be: generating, by the first device, the $i^{th}$ first initial binary sequence based on received strength of the $i^{th}$ first reflected signal; and combining, by the first device, the $i^{th}$ first initial binary sequence and the $(i-1)^{th}$ first combination sequence, to obtain the $i^{th}$ first combination sequence, and using the $i^{th}$ first combination sequence as the first sequence.

The generating, by the first device, the $i^{th}$ first initial binary sequence based on received strength of the $i^{th}$ first reflected signal may include: determining, by the first device, the $i^{th}$ path loss based on the received strength of the $i^{th}$ first reflected signal and transmission strength of the $i^{th}$ first wireless signal; determining, by the first device, the $i^{th}$ channel estimation value based on the $i^{th}$ path loss and the transmission strength of the $i^{th}$ first wireless signal; and quantizing, by the first device, the $i^{th}$ channel estimation value based on a preset quantization algorithm, to obtain the $i^{th}$ first initial binary sequence.

The determining, by the first device, the $i^{th}$ path loss based on the received strength of the $i^{th}$ first reflected signal and transmission strength of the $i^{th}$ first wireless signal may include: subtracting, by the first device, a reflection loss of the second device and the received strength of the $i^{th}$ first reflected signal from a sum of the transmission strength of the $i^{th}$ first wireless signal, an antenna gain of the first device, and an antenna gain of the second device, to obtain a first value; and dividing the first value by 2 to obtain the $i^{th}$ path loss.

The transmission strength of the $i^{th}$ first wireless signal may specifically refer to continuous carrier strength of the $i^{th}$ first wireless signal.

The $i^{th}$ first wireless signal may be transmitted by using a fixed power or a randomly changing power, which is determined by the first device. Therefore, the first device may learn of the transmission strength of the $i^{th}$ first wireless signal in advance. The fixed power may be set in advance according to an actual situation, and is not limited in this embodiment. The randomly changing power may be randomly selected by the first device from a plurality of preset powers set in advance, or may be randomly selected by the first device from a preset power range supported by the first device, which is not limited.

The received strength of the $i^{th}$ first reflected signal may be an average value of a plurality of measurement values obtained by performing a plurality of times of measurement on the $i^{th}$ first reflected signal. Alternatively, the received strength of the $i^{th}$ first reflected signal may be a measurement value obtained by measuring the $i^{th}$ first reflected signal once.

Specifically, the received strength of the $i^{th}$ first reflected signal may be an average value of a plurality of measurement values obtained by performing a plurality of times of measurement on the $i^{th}$ first reflected signal based on a preset first period during a coherence time. A length of the coherence time may be set in advance or determined in advance, and the preset first period may also be set according to an actual situation. For example, the length of the coherence time is 1s, and the preset first period may be 0.2s. The foregoing is merely an example for description. In actual processing, the coherence time is within the protection scope of this embodiment as long as the coherence time is greater than duration of a plurality of preset first periods.

The antenna gain of the first device may be preset, for example, may be set in advance upon factory delivery of the first device. A unit of the antenna gain of the first device may be dBd, dBi, or the like. For example, if the first device is a single antenna, the antenna gain of the first device may be set to 0. Certainly, depending on an actual situation, the antenna gain of the first device may be set to different values, for example, 16 dBd. It should be understood that this is merely an example for description, and is not intended to limit an actual value of the antenna gain of the first device.

The antenna gain of the second device may be preset, or may be obtained by the first device in advance. A unit of the antenna gain of the second device may be dBd, dBi, or the like. The antenna gain of the second device being preset may refer to manually setting the antenna gain of the second device in the first device in advance before this embodiment is executed. The antenna gain of the second device being obtained by the first device in advance may refer to: Before executing this embodiment, the first device exchanges a parameter with the second device, and a device parameter transmitted by the second device may include the antenna gain of the second device. Correspondingly, the first device may obtain the antenna gain of the second device from the device parameter transmitted by the second device.

A value of the antenna gain of the second device may be different depending on an actual situation. For example, if the second device is a single antenna, the antenna gain of the second device may be set to 0 dBd. Certainly, depending on an actual situation, the antenna gain of the second device may be set to different values, for example, 16 dBd. It should be understood that this is merely an example for description, and is not intended to limit an actual value of the antenna gain of the second device. It should be further understood that the actual value of the antenna gain of the second device may be the same as or different from that of the antenna gain of the first device, which is not limited in this embodiment.

The reflection loss of the second device may be set in advance, and a unit of the reflection loss of the second device may be dB (decibel), Np (neper), or another unit, which is not enumerated exhaustively.

For example, the transmission strength of the $i^{th}$ first wireless signal is represented as $RSSI_{Reader, i}$, the antenna gain of the first device is represented as $G_{Reader}$ (its value may be 0), the antenna gain of the second device is represented as $G_{Tag}$ (its value may be 0), the received strength of the $i^{th}$ first reflected signal is represented as $RSSI_{TRes,i}$, the reflection loss of the second device is represented as $loss_{back}$, and the $i^{th}$ path loss is represented as $\overline{\overline{loss_{RT,i}}}$. The $i^{th}$ path loss may be obtained through calculation by using the following formula:

$$\overline{\overline{loss_{RT,i}}} = \left( RSSI_{Reader,i} + G_{Reader} - loss_{back} + G_{Tag} - RSSI_{TRes,i} \right) / 2.$$

The determining, by the first device, the $i^{th}$ channel estimation value based on the $i^{th}$ path loss and the transmission strength of the $i^{th}$ first wireless signal may include: subtracting, by the first device, the $i^{th}$ path loss from a sum of adding up the transmission strength of the $i^{th}$ first wireless signal and an antenna gain of the first device, to obtain the $i^{th}$ channel estimation value.

For example, the transmission strength of the $i^{th}$ first wireless signal is represented as $RSSI_{Reader, i}$, the antenna gain of the first device is represented as $G_{Reader}$, the $i^{th}$ path loss is represented as $\overline{\overline{loss_{RT,i}}}$, and the $i^{th}$ channel estimation value is represented as $RSSI_{Tag}$, i. The $i^{th}$ channel estimation value may be obtained through calculation by using the following formula:

$$RSSI_{Tag}, \ i = RSSI_{Reader,i} + G_{Reader} - \overline{\overline{loss_{RT,i}}}.$$

Then, the first device may quantize the $i^{th}$ channel estimation value based on a preset quantization algorithm, to obtain the $i^{th}$ first initial binary sequence.

The preset quantization algorithm may include one of the following: a channel quantization CQ algorithm, a uniform quantization algorithm, a channel quantization with guard-band CQG algorithm, or a channel quantization alternating CQA algorithm.

That is, the $i^{th}$ channel estimation value is quantized based on any one of the foregoing preset quantization algorithms, to obtain the $i^{th}$ first initial binary sequence.

It should be noted that the first device and the second device need to use a same preset quantization algorithm, for example, both use the CQ algorithm, or both use the CQA algorithm.

In an implementation, that the first device quantizes the $i^{th}$ channel estimation value based on a preset quantization algorithm, to obtain the $i^{th}$ first initial binary sequence may specifically include: quantizing, by the first device, the $i^{th}$ channel estimation value based on the preset quantization algorithm and first strength feature related information, to obtain the $i^{th}$ first initial binary sequence, where the first strength feature related information includes at least one of the following: an average value of first strength feature information or a standard deviation of the first strength feature information.

The average value of the first strength feature information and the standard deviation of the strength feature information may be set in advance, or may be obtained based on the $i^{th}$ channel estimation value that is determined based on the received strength of the $i^{th}$ first reflected signal, or may be obtained based on the first i channel estimation values that are determined based on received strength of the first i first reflected signals.

For example, a manner of determining the average value of the first strength feature information may be: dividing, by i, a sum of adding up the first i channel estimation values, to obtain the average value of the strength feature information.

A manner of determining the standard deviation of the first strength feature information may be: dividing, by i, a sum of adding up the first i channel estimation values, to obtain an average value; separately subtracting the average value from the first i channel estimation values, to calculate separately and obtain i squared values; and dividing, by i, a sum of adding up the i squared values, so as to calculate a square root and obtain the standard deviation of the first strength feature information.

The quantizing the $i^{th}$ channel estimation value based on the preset quantization algorithm and first strength feature related information, to obtain the $i^{th}$ first initial binary sequence may be: determining that a square root of the $i^{th}$ channel estimation value falls within a corresponding target threshold range of a plurality of threshold ranges, where the plurality of threshold ranges are obtained through calculation based on the first strength feature related information, and different threshold ranges in the plurality of threshold ranges correspond to different quantized values; and using a quantized value corresponding to the target threshold range as the $i^{th}$ first initial binary sequence.

For example, the average value of the first strength feature information may be represented as , and the standard deviation of the first strength feature information may be represented as $\sigma 1$. The plurality of threshold ranges may specifically include four threshold ranges. The four threshold ranges and different quantized values corresponding to different threshold ranges are respectively represented as follows: Within a threshold range less than $\mu 1 - 0.6745\sigma 1$, (that is, $< \mu 1 - 0.6745\sigma 1$), a corresponding quantized value is "00"; within a threshold range greater than or equal to $\mu 1 - 0.6745\sigma 1$ and less than $\mu$ (that is, $[\mu 1 - 0.6745\sigma 1, \mu 1)$), a corresponding quantized value is "01"; within a threshold range greater than or equal to $\mu 1$ and less than $\mu 1 + 0.6745\sigma 1$ (that is, $[\mu 1, \mu 1 + 0.6745\sigma 1)$), a corresponding quantized value is "11"; within a threshold range greater than or equal to $\mu 1 + 0.6745\sigma 1$ (that is, $\geq \mu 1 + 0.6745\sigma 1$), a corresponding quantized value is "10". The $i^{th}$ first initial binary sequence is represented as $Q_{R,\ i}$, and the $i^{th}$ first initial binary sequence may be determined by using the following formula:

$$Q_{R,i} = \begin{cases} 00 & \sqrt{RSSI_{Tag,i}} < \mu 1 - 0.6745\sigma 1 \\ 01 & \sqrt{RSSI_{Tag,i}} \in [\mu 1 - 0.6745\sigma 1, \mu 1) \\ 11 & \sqrt{RSSI_{Tag,i}} \in [\mu 1, \mu 1 + 0.6745\sigma 1) \\ 10 & \sqrt{RSSI_{Tag,i}} \geq \mu 1 + 0.6745\sigma 1 \end{cases}.$$

After the $i^{th}$ first initial binary sequence is obtained in the $i^{th}$ loop process, the first device combines the $i^{th}$ first initial binary sequence and the $(i-1)^{th}$ first combination sequence, to obtain the $i^{th}$ first combination sequence, and uses the $i^{th}$ first combination sequence as the first sequence.

In a case in which i is equal to 1, the $(i-1)^{th}$ first combination sequence may be empty or 0. In a case in which i is greater than 1, the $(i-1)^{th}$ first combination sequence may be a first combination sequence obtained after the previous loop process, that is, a first combination sequence obtained after the $(i-1)^{th}$ loop process.

For example, in a case in which i is greater than 1, the $i^{th}$ first combination sequence is represented as $Q_{Reader}(i)$, the $(i-1)^{th}$ first combination sequence is represented as $Q_{Reader}(i-1)$, and the $i^{th}$ first initial binary sequence may be represented as $Q_{R,\ i}$. The $i^{th}$ first combination sequence may be obtained by using the following formula:

$$Q_{Reader}(i) = Q_{Reader}(i-1) \|_{\|} Q_{R,\ i}.$$

After a process of the foregoing S321 is completed, the first sequence obtained after the $i^{th}$ loop process may be obtained. After the $i^{th}$ loop process is completed, the first sequence may be obtained. In this case, a first sequence obtained after the previous loop process (that is, the $(i-1)^{th}$ loop process) may be deleted, and only the first sequence obtained after the current loop process is saved.

Then, S322 is executed. If it is determined that the first condition is met, S323 is executed, that is, the first device generates the first key based on the first sequence.

That the first device generates the first key based on the first sequence may specifically refer to: using, by the first device, the first sequence as the first key. That is, the first device may directly use the foregoing first sequence as the first key.

A second processing manner:

In S321, that the first device generates the first sequence based on the received strength of the first reflected signal may specifically be: generating, by the first device, the $i^{th}$ first initial binary sequence based on received strength of the $i^{th}$ first reflected signal; and combining, by the first device, the $i^{th}$ first initial binary sequence and the $(i-1)^{th}$ first combination sequence, to obtain the $i^{th}$ first combination sequence, and using the $i^{th}$ first combination sequence as the first sequence.

The generating, by the first device, the $i^{th}$ first initial binary sequence based on received strength of the $i^{th}$ first reflected signal may include: determining, by the first device, the $i^{th}$ path loss based on the received strength of the $i^{th}$ first reflected signal and transmission strength of the $i^{th}$ first wireless signal; determining, by the first device, the $i^{th}$ channel estimation value based on the $i^{th}$ path loss and the transmission strength of the $i^{th}$ first wireless signal; and quantizing, by the first device, the $i^{th}$ channel estimation value based on a preset quantization algorithm, to obtain the $i^{th}$ first initial binary sequence.

The determining, by the first device, the $i^{th}$ path loss based on the received strength of the $i^{th}$ first reflected signal and transmission strength of the $i^{th}$ first wireless signal may include: subtracting, by the first device, a reflection loss of the second device and the received strength of the $i^{th}$ first reflected signal from a sum of the transmission strength of the $i^{th}$ first wireless signal, an antenna gain of the first device, and an antenna gain of the second device, to obtain a first value; and dividing the first value by 2 to obtain the $i^{th}$ path loss. It should be understood that specific process of the determining, by the first device, the $i^{th}$ path loss based on the received strength of the $i^{th}$ first reflected signal and transmission strength of the $i^{th}$ first wireless signal is the same as that in the foregoing first processing manner, and therefore is not described again.

The determining, by the first device, the $i^{th}$ channel estimation value based on the $i^{th}$ path loss and the transmission strength of the $i^{th}$ first wireless signal may include: subtracting, by the first device, the $i^{th}$ path loss from a sum of adding up the transmission strength of the $i^{th}$ first wireless signal and an antenna gain of the first device, to obtain the $i^{th}$ channel estimation value. It should be understood that specific process of the determining, by the first device, the $i^{th}$ channel estimation value based on the $i^{th}$ path loss and the transmission strength of the $i^{th}$ first wireless signal is the same as that in the foregoing first processing manner, and therefore is not described again.

The preset quantization algorithm may include one of the following: a channel quantization CQ algorithm, a uniform quantization algorithm, a channel quantization with guard-band CQG algorithm, or a channel quantization alternating CQA algorithm. That is, the $i^{th}$ channel estimation value is quantized based on any one of the foregoing preset quantization algorithms, to obtain the $i^{th}$ first initial binary sequence.

It should be noted that the first device and the second device need to use a same preset quantization algorithm, for example, both use the CQ algorithm, or both use the CQA algorithm.

The quantizing, by the first device, the $i^{th}$ channel estimation value based on a preset quantization algorithm, to obtain the $i^{th}$ first initial binary sequence may specifically include: quantizing, by the first device, the $i^{th}$ channel estimation value based on the preset quantization algorithm and strength feature related information, to obtain the $i^{th}$ first initial binary sequence, where the strength feature related information includes at least one of the following: an average value of strength feature information or a standard deviation of the strength feature information. Specific process of the quantizing, by the first device, the $i^{th}$ channel estimation value based on a preset quantization algorithm, to obtain the $i^{th}$ first initial binary sequence is the same as that in the foregoing first processing manner, and is not described again.

Different from that in the foregoing first processing manner, in the second processing manner, when the first device executes the process of quantizing the $i^{th}$ channel estimation value based on a preset quantization algorithm, to obtain the $i^{th}$ first initial binary sequence, the following may be further included: in a case in which the $i^{th}$ channel estimation value falls within a first quantization range, setting, by the first device, the $i^{th}$ first indicator bit to a first value, where the $i^{th}$ first indicator bit is one of M first indicator bits; or in a case in which the $i^{th}$ channel estimation value does not fall within the first quantization range, setting, by the first device, the $i^{th}$ first indicator bit to a second value.

The first value is different from the second value, and the first value and the second value may be set according to an actual situation, as long as both the first device and the second device determine a same meaning therefor. For example, the first value may be 0, and the second value may be 1. For another example, the first value may be 1, and the second value may be 0. This is not enumerated exhaustively herein.

Further, after the $i^{th}$ first initial binary sequence is obtained, the first device combines the $i^{th}$ first initial binary sequence and the $(i-1)^{th}$ first combination sequence, to obtain the $i^{th}$ first combination sequence, and uses the $i^{th}$ first combination sequence as the first sequence.

Specifically, in a case in which i is equal to 1, the $(i-1)^{th}$ first combination sequence may be empty or 0. In a case in which i is greater than 1, the $(i-1)^{th}$ first combination sequence may be a first combination sequence obtained after the previous loop process, that is, the $(i-1)^{th}$ loop process. For example, in a case in which i is greater than 1, if the $i^{th}$ first initial binary sequence is obtained, the $i^{th}$ first combination sequence is represented as $Q_{Reader}(i)$, the $(i-1)^{th}$ first combination sequence is represented as $Q_{Reader}(i-1)$, and the $i^{th}$ first initial binary sequence may be represented as $Q_{R,\ i}$. The $i^{th}$ first combination sequence may be obtained by using the following formula:

$$Q_{Reader}\left(i\right) = Q_{Reader}\left(i-1\right) \parallel Q_{R,\ i} \ .$$

After a process of the foregoing S321 is completed, the first sequence obtained after the $i^{th}$ loop process may be obtained. After the $i^{th}$ loop process is completed, the first sequence may be obtained. In this case, a first sequence obtained after the previous loop process (that is, the $(i-1)^{th}$ loop process) may be deleted, and only the first sequence obtained after the current loop process is saved.

Then, S322 is executed. If it is determined that the first condition is met, S323 is executed, that is, the first device generates the first key based on the first sequence. In addition, while determining that the first condition is met, the first device may further obtain M first indicator bits, where the M first indicator bits are used to indicate whether a channel estimation value obtained by the first device based on received strength of M first reflected signals falls within the first quantization range.

Correspondingly, the method may further include: transmitting, by the first device, first information to the second device, where the first information includes the M first indicator bits. The M first indicator bits included in the first information may specifically be a first GIB (guard-band indicator bit, Guardband Indicator Bit) sequence. The M first indicator bits in the first information may be used as quantization indication information, and may be used to enable the second device to generate a second key based on the M first indicator bits.

In the second processing manner, the second device also obtains M second indicator bits based on whether the first wireless signal received by the second device falls within a second quantization range. Therefore, in this processing manner, when the process of S323, that is, generating the first key by the first device based on the first sequence, is executed,, the first device does not directly use the first sequence as the first key, but needs to make reference to the M second indicator bits transmitted by the second device so as to generate the first key. Detailed description is as follows: The method may further include: receiving, by the first device, third information transmitted by the second device, where the third information includes the M second indicator bits. The M second indicator bits may specifically be a second GIB sequence.

In S323, that the first device generates the first key based on the first sequence includes: obtaining, by the first device, a second sequence based on the first sequence, and using the second sequence as the first key.

The obtaining, by the first device, a second sequence based on the first sequence includes: determining, by the first device, a target binary sequence from the first sequence based on M second indicator bits, where the M second indicator bits are used to indicate whether received strength of receiving M first wireless signals by the second device falls within the second quantization range; and forming, by the first device, the second sequence based on the target binary sequence.

The determining, by the first device, a target binary sequence from the first sequence based on M second indicator bits includes: combining, by the first device, the M second indicator bits and the M first indicator bits, to obtain M combination indicator bits, and determining, by the first device, the target binary sequence from the first sequence based on the M combination indicator bits.

The combining, by the first device, the M second indicator bits and the M first indicator bits, to obtain M combination indicator bits includes: in a case in which both the $r^{th}$ second indicator bit and the $r^{th}$ first indicator bit are a first value, determining, by the first device, that the $r^{th}$ combination indicator bit is the first value, where r is an integer greater than or equal to 1 and less than or equal to M; or in a case in which at least one of the $r^{th}$ second indicator bit and the $r^{th}$ first indicator bit is a second value, determining, by the first device, that the $r^{th}$ combination indicator bit is the second value.

For example, the first value is 0, and the second value is 1. If M is 4, the M second indicator bits are four second indicator bits, and the M first indicator bits are four first indicator bits. It is assumed that the four second indicator bits are "0010", and the four first indicator bits are "0100". If r is 1, it indicates that the $1^{st}$ second indicator bit is the first value, that is, 0, and the $1^{st}$ first indicator bit is also 0. In this case, the first combination indicator bit is the first value, that is, 0. If r is 2, the $2^{nd}$ second indicator bit is the first value, that is, 0, and the $2^{nd}$ first indicator bit is the second value, that is, 1. In this case, the second combination indicator bit is the second value, that is, 1. By analogy, four combination indicator bits finally obtained are "0110".

The determining the target binary sequence from the first sequence based on the M combination indicator bits includes: in a case in which the $j^{th}$ combination indicator bit in the M combination indicator bits is a first value, determining, by the first device, that the j<sup>th</sup> group of binary bits in the first sequence is one of the target binary sequence, where j is an integer greater than or equal to 1 and less than or equal to M.

For example, the first device may obtain a quantity of bits corresponding to one combination indicator bit in advance, for example, one combination indicator bit corresponds to four bits. If j is equal to 1, the first combination indicator bit corresponds to the first to fourth bits in the first sequence, that is, the first group of binary bits is the first to fourth bits in the first sequence. If j is equal to 2, the second combination indicator bit corresponds to the fifth to eighth bits in the first sequence, that is, the second group of binary bits is the fifth to eighth bits in the first sequence. The rest can be deduced by analogy, and is not enumerated exhaustively.

In addition, the following may be further included: in a case in which the j<sup>th</sup> combination indicator bit in the M combination indicator bits is a second value, skipping performing, by the first device, a process of extracting a target binary sequence.

Specifically, if the j<sup>th</sup> combination indicator bit in the M combination indicator bits is the second value, the first device may not perform the process of extracting a target binary sequence, and may further delete (or discard) the j<sup>th</sup> group of binary bits.

For example, the first value is 0, and the second value is 1. If M is 4, the M second indicator bits are four second indicator bits. It is assumed that the four second indicator bits are "0010", and the four first indicator bits are "0100". Four combination indicator bits finally obtained are "0110". If j is equal to 1, the first combination indicator bit corresponding to j is equal to 0, and the first group of binary bits in the first sequence (for example, the first to fourth bits in the first sequence) may be used as a target binary sequence. If j is equal to 2, the second combination indicator bit corresponding to j is equal to 1 (that is, the second value), and the first device may not perform the process of extracting a target binary sequence. By analogy, both the first group of binary bits in the first sequence (for example, the first to fourth bits in the first sequence) and the fourth group of binary bits in the first sequence (for example, the 13th to 16th bits in the first sequence) may be finally used as target binary sequences.

The forming, by the first device, the second sequence based on the target binary sequence may specifically include: combining, by the first device, the target binary sequence, to obtain the second sequence. The combining, by the first device, the target binary sequence, to obtain the second sequence may refer to: combining, by the first device, the target binary sequence in an order, to obtain the second sequence. The order may be a sequential order of the target binary sequence in the first sequence.

After the first device combines the target binary sequence and obtains the second sequence, the first device may directly use the second sequence as the first key.

It may be learned that, by using the solution provided in this embodiment, a first key may be generated based on received strength of a reflected signal of a wireless signal. Because the reflected signal is obtained through reflection of the wireless signal, the solution is more applicable to a zero-power-consumption scenario. In addition, because the first key is obtained according to the received strength of the reflected signal of the wireless signal transmitted by a first device, randomness of the generated key may be ensured, and further security of the key is ensured.

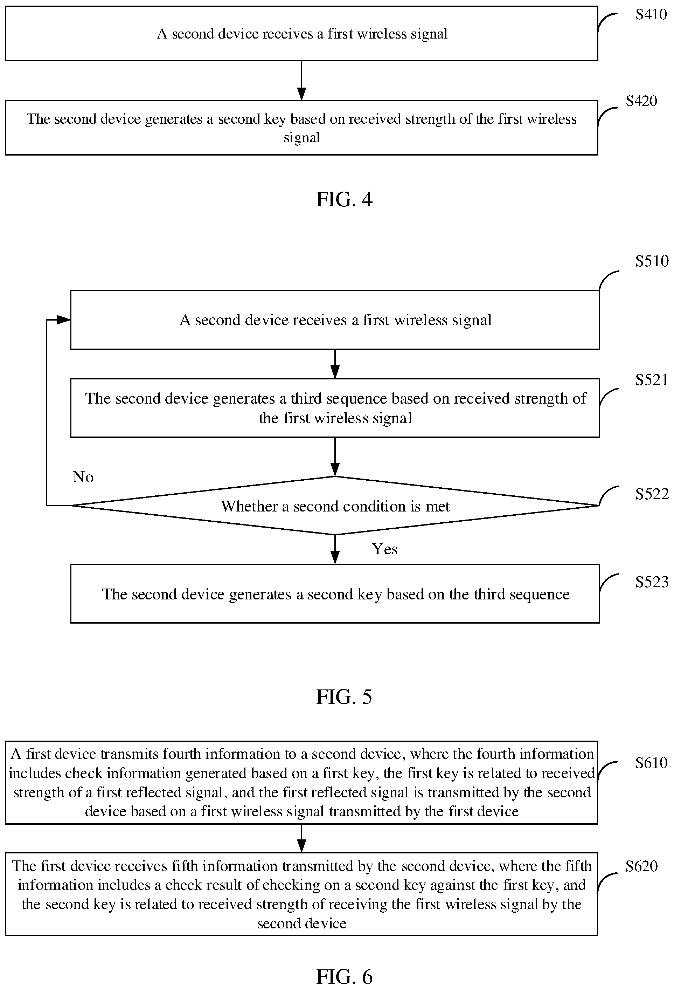

FIG. 4 is a schematic flowchart of a key generation method according to an embodiment of this application. Optionally, the method may be applied to the system shown in FIG. 1, but is not limited thereto. The method includes at least a part of the following content.

S410: A second device receives a first wireless signal.

S420: The second device generates a second key based on received strength of the first wireless signal.

In S410, the first wireless signal may be transmitted by a first device. Accordingly, S410 may further include: transmitting, by the second device, a first reflected signal to the first device. That is, in a case in which the second device receives the first wireless signal transmitted by the first device this time, the second device transmits the first reflected signal to the first device. The first reflected device is used by the first device to generate a first key.

In this embodiment, the first device and the second device may vary with scenarios. For example, the first device may be a reader (tag reader), and the second device may specifically be a zero-power-consumption device, for example, a tag (tag). For another example, the first device may be any one of an access network device (for example, a base station, an eNB, or a gNB), a user equipment (UE, User Equipment), a customer-premises equipment (CPE, Customer Premise Equipment), or the like. Correspondingly, the second device may be any one of a zero-power-consumption device, an internet of things (Internet of Things, IoT) device, a passive internet of things (Passive Internet of Things, Passive IoT) device, or the like. It should be understood that, the foregoing is merely an example for description. In actual processing, the first device and the second device may separately be another type of device, but are not enumerated exhaustively herein.

In S420, that the second device generates a second key based on received strength of the first wireless signal may include: generating, by the second device, a third sequence based on the received strength of the first wireless signal, and generating, by the second device, the second key based on the third sequence.

The generating, by the second device, the second key based on the third sequence may specifically include: in a case in which a second condition is met, generating, by the second device, the second key based on the third sequence.

The second condition includes at least one of the following: a total length of the third sequence is greater than or equal to a preset length; or a quantity of times the first wireless signal is received reaches a preset quantity, where the first wireless signal is used by the second device to generate the second key.

In addition, the following may be further included: In a case in which the second condition is not met, the second device returns to execute S410, that is, the second device continues to receive the first wireless signal and continues to transmit the first reflected signal to the first device.

The preset length may be represented as "keylen". The preset length may be set in advance according to an actual requirement, and a unit of the preset length may be bit. For example, the preset length may be 16 bits, 24 bits, or 8 bits, or may be longer or shorter, which is not enumerated exhaustively herein.

The preset quantity may be set in advance according to an actual situation, for example, may be 8, 6, or 1, or may be larger or smaller, which is not enumerated exhaustively. Alternatively, the preset quantity may be determined based on the preset length. For example, if it is determined in advance that a length of information obtained by performing quantization processing once according to a preset quantization algorithm is A1 bits, and the preset length is B1 bits, the preset quantity may be equal to B1 divided by A1 (that is, the preset quantity = B1/A1).

That the first wireless signal is used by the second device to generate the second key may refer to: The first wireless signal may carry a data packet, and the data packet is used for extraction by the second device to generate the second key.

The foregoing second condition may include any one of the foregoing, that is, the second condition may include that the total length of the third sequence is greater than or equal to the preset length or that the quantity of times the first wireless signal is received reaches the preset quantity. Alternatively, in a case in which the preset quantity is determined based on the preset length, the second condition may include that the total length of the third sequence is greater than or equal to the preset length and that the quantity of times the first wireless signal is received reaches the preset quantity.

It should be noted that the second device may further execute the following processing: receiving, by the second device, second information transmitted by the first device, where the second information includes at least one of the following: the preset length or the preset quantity.

That is, before executing the foregoing S410, the second device receives the second information transmitted by the first device, to determine the second condition based on the foregoing preset length and/or the foregoing preset quantity included in the second information.

With reference to FIG. 5, specific processes of the foregoing S410 and S420 is described, and may include:
S510: The second device receives the first wireless signal.

Correspondingly, specific process of the foregoing S420 may include:

S521: The second device generates the third sequence based on the received strength of the first wireless signal.
S522: The second device determines whether the second condition is met, and if the second condition is met, the second device executes S523, or if the second condition is not met, the second device returns to execute S510.
S523: The second device generates the second key based on the third sequence.

The foregoing S510 to S522 may be a loop process; S523 may not be executed until it is determined in S522 that the second condition is met. That is, in a case in which it is determined that the second condition is met after at least one loop process is completed, the second device generates the second key based on the third sequence. In this embodiment, any one of the foregoing at least one loop process is referred to as the $w^{th}$ loop process.

In the $w^{th}$ loop process, that the second device receives the first wireless signal in S510 specifically refers to: receiving, by the second device, the $w^{th}$ first wireless signal, where w is an integer greater than or equal to 1.

The following separately describes two processing manners of generating the second key based on the $w^{th}$ loop process and with reference to the foregoing S521 to S523.

A first processing manner:

In S521, that the second device generates the third sequence based on the received strength of the first wireless signal specifically refers to: generating, by the second device, the $w^{th}$ second initial binary sequence based on received strength of the $w^{th}$ first wireless signal, where w is an integer greater than or equal to 1; and combining, by the second device, the $w^{th}$ second initial binary sequence and the $(w-1)^{th}$ second combination sequence, to obtain the $w^{th}$ second combination sequence, and using the $w^{th}$ first combination sequence as the third sequence.

The generating, by the second device, the $w^{th}$ second initial binary sequence based on received strength of the $w^{th}$ first wireless signal may include: quantizing, by the second device, the received strength of the $w^{th}$ first wireless signal based on a preset quantization algorithm, to obtain the $w^{th}$ second initial binary sequence.

The received strength of the $w^{th}$ first wireless signal is an average value of a plurality of measurement values obtained by performing a plurality of times of measurement on the $w^{th}$ first wireless signal.

Specifically, the received strength of the $w^{th}$ first wireless signal may be an average value of a plurality of measurement values obtained by performing a plurality of times of measurement on the $w^{th}$ first wireless signal based on a preset second period during a coherence time. A length of the coherence time may be set in advance or determined in advance, and the preset second period may be set according to an actual situation. For example, the length of the coherence time is 1s, and the preset second period may be 0.2s. The foregoing is merely an example for description. In actual processing, the coherence time is within the protection scope of this embodiment as long as the coherence time is greater than duration of a plurality of preset second periods.

The preset quantization algorithm may include one of the following: a channel quantization CQ algorithm, a uniform quantization algorithm, a channel quantization with guard-band CQG algorithm, or a channel quantization alternating CQA algorithm.

That is, the received strength of the $w^{th}$ first wireless signal is quantized based on any one of the foregoing preset quantization algorithms, to obtain the $w^{th}$ second initial binary sequence.

It should be noted that the first device and the second device need to use a same preset quantization algorithm, for example, both use the CQ algorithm, or both use the CQA algorithm.

In an implementation, the quantizing, by the second device, the received strength of the $w^{th}$ first wireless signal based on a preset quantization algorithm, to obtain the $w^{th}$ second initial binary sequence may specifically include: quantizing, by the second device, the received strength of the $w^{th}$ first wireless signal based on the preset quantization algorithm and second strength feature related information, to obtain the $w^{th}$ second initial binary sequence, where the second strength feature related information includes at least one of the following: an average value of second strength feature information or a standard deviation of the second strength feature information.

The average value of the second strength feature information and the standard deviation of the second strength feature information may be set in advance, or may be determined based on the received strength of the $w^{th}$ first wireless signal, or may be determined based on received strength of the first w first wireless signals.

For example, a manner of determining the average value of the second strength feature information may be: dividing, by w, a sum of adding up the received strength of the first w first wireless signals, to obtain the average value of the strength feature information.

A manner of determining the standard deviation of the second strength feature information may be: dividing, by w, a sum of adding up the received strength of the first w first wireless signals, to obtain an average value; separately subtracting the average value from the received strength of the first w first wireless signals, to calculate separately and obtain w squared values; and dividing, by w, a sum of adding up the w squared values, so as to calculate a square root and obtain the standard deviation of the second strength feature information.

The quantizing, by the second device, the received strength of the $w^{th}$ first wireless signal based on the preset quantization algorithm and second strength feature related information, to obtain the $w^{th}$ second initial binary sequence may be: determining, by the second device, that a square root of the $w^{th}$ first wireless signal falls within a corresponding target threshold range of a plurality of threshold ranges, where the plurality of threshold ranges are obtained through calculation based on the second strength feature related information, and different threshold ranges in the plurality of threshold ranges correspond to different quantized values; and using a quantized value corresponding to the target threshold range as the $w^{th}$ second initial binary sequence.

For example, the average value of the second strength feature information may be represented as , and the standard deviation of the strength feature information may be represented as $\sigma 2$. The plurality of threshold ranges may specifically include four threshold ranges, and different threshold ranges in the plurality of threshold ranges correspond to different quantized values, which are respectively represented as follows: Within a threshold range less than $\mu 2 - 0.6745\sigma 2$, (that is, $< \mu 2 - 0.6745\sigma 2$), a corresponding quantized value is "00"; within a threshold range greater than or equal to $\mu 2 - 0.6745\sigma 2$ and less than $\mu$ (that is, $[\mu 2 - 0.6745\sigma 2, \mu 2)$), a corresponding quantized value is "01"; within a threshold range greater than or equal to $\mu 2$ and less than $\mu 2 + 0.6745\sigma 2$ (that is, $[\mu 2, \mu 2 + 0.6745\sigma 2)$), a corresponding quantized value is "11"; within a threshold range greater than or equal to $\mu 2 + 0.6745\sigma 2$ (that is, $\geq \mu 2 + 0.6745\sigma 2$), a corresponding quantized value is "10". The $w^{th}$ second initial binary sequence is represented as $Q_{R,\,w}$, and the received strength of the $w^{th}$ first wireless signal is represented as $RSSI_{Tag,w}$. The $w^{th}$ second initial binary sequence may be determined by using the following formula:

$$Q_{R,w} = \begin{cases} 00 & \sqrt{RSSI_{Tag,w}} < \mu 2 - 0.6745\sigma 2 \\ 01 & \sqrt{RSSI_{Tag,w}} \in [\mu 2 - 0.6745\sigma 2, \mu 2) \\ 11 & \sqrt{RSSI_{Tag,w}} \in [\mu 2, \mu 2 + 0.6745\sigma 2) \\ 10 & \sqrt{RSSI_{Tag,w}} \geq \mu 2 + 0.6745\sigma 2 \end{cases}.$$

After the $w^{th}$ second initial binary sequence is obtained in the $w^{th}$ loop process, the second device combines the $w^{th}$ second initial binary sequence and the $(w-1)^{th}$ second combination sequence, to obtain the $w^{th}$ second combination sequence, and uses the $w^{th}$ second combination sequence as the third sequence.

In a case in which w is equal to 1, the $(w-1)^{th}$ second combination sequence may be empty or 0. In a case in which w is greater than 1, the $(w-1)^{th}$ second combination sequence may be a second combination sequence obtained after the previous loop process, that is, a second combination sequence obtained after the $(w-1)^{th}$ loop process.

For example, in a case in which w is greater than 1, the $w^{th}$ second combination sequence is represented as $Q_{Tag}(w)$, the $(w-1)^{th}$ second combination sequence is represented as $Q_{Tag}(w - 1)$, and the $w^{th}$ second initial binary sequence may be represented as $Q_{R, w}$. The $w^{th}$ second combination sequence may be obtained by using the following formula:

$$Q_{Tag}\left(w\right) = Q_{Tag}\left(w-1\right)_{\parallel} Q_{R,\ w}.$$

After a process of the foregoing S521 is completed, the third sequence obtained after the $w^{th}$ loop process may be obtained. After the $w^{th}$ loop process is completed, the third sequence may be obtained. In this case, a third sequence obtained after the previous loop process (that is, the $(w-1)^{th}$ loop process) may be deleted, and only the third sequence obtained after the current loop process is saved.

Then, S522 is executed. If it is determined that the second condition is met, S523 is executed, that is, the second device generates the second key based on the third sequence.

That the second device generates the second key based on the third sequence may specifically refer to: using, by the second device, the third sequence as the second key.

A second processing manner:

In S521, that the second device generates the third sequence based on the received strength of the first wireless signal specifically refers to: generating, by the second device, the $w^{th}$ second initial binary sequence based on received strength of the $w^{th}$ first wireless signal, where w is an integer greater than or equal to 1; and combining, by the second device, the $w^{th}$ second initial binary sequence and the $(w-1)^{th}$ second combination sequence, to obtain the $w^{th}$ second combination sequence, and using the $w^{th}$ first combination sequence as the third sequence.

The generating, by the second device, the $w^{th}$ second initial binary sequence based on received strength of the $w^{th}$ first wireless signal may include: quantizing, by the second device, the received strength of the $w^{th}$ first wireless signal based on a preset quantization algorithm, to obtain the $w^{th}$ second initial binary sequence.

The received strength of the $w^{th}$ first wireless signal is an average value of a plurality of measurement values obtained by performing a plurality of times of measurement on the $w^{th}$ first wireless signal.

Specifically, the received strength of the $w^{th}$ first wireless signal may be an average value of a plurality of measurement values obtained by performing a plurality of times of measurement on the $w^{th}$ first wireless signal based on a preset second period and within a coherence time. A length of the coherence time may be set in advance or determined in advance, and the preset second period may be set according to an actual situation. For example, the length of the coherence time is 1s, and the preset second period may be 0.2s. The foregoing is merely an example for description. In actual processing, the coherence time is within the protection scope of this embodiment as long as the coherence time is greater than duration of a plurality of preset second periods.

The preset quantization algorithm includes one of the following: a channel quantization CQ algorithm, a uniform quantization algorithm, a channel quantization with guard-band CQG algorithm, or a channel quantization alternating CQA algorithm. It should be understood herein that a specific manner of performing quantization by using the preset quantization algorithm in this processing manner may be the same as specific processing in the foregoing first processing manner. Therefore, details are not described again. It should be noted that the first device and the second device need to use a same preset quantization algorithm, for example, both use the CQ algorithm, or both use the CQA algorithm. Specific process of the quantizing, by the second device, the received strength of the $w^{th}$ first wireless signal based on a preset quantization algorithm, to obtain the $w^{th}$ second initial binary sequence is the same as that in the foregoing first processing manner, and is not described again.

Different from that in the foregoing first processing manner, in the second processing manner, when the second device executes the process of quantizing the received strength of the $w^{th}$ first wireless signal based on a preset quantization algorithm, to obtain the $w^{th}$ second initial binary sequence, the following may be further included: in a case in which the received strength of the $w^{th}$ first wireless signal falls within a second quantization range, setting the $w^{th}$ second indicator bit to a first value, where the $w^{th}$ second indicator bit is one of M second indicator bits; or in a case in which the received strength of the $w^{th}$ first wireless signal does not fall within the second quantization range, setting the $w^{th}$ second indicator bit to a second value.

The first value is different from the second value, and the first value and the second value may be set according to an actual situation, as long as both the first device and the second device determine a same meaning therefor. For example, the first value may be 0, and the second value may be 1. For another example, the first value may be 1, and the second value may be 0. This is not enumerated exhaustively herein.

Further, after the $w^{th}$ second initial binary sequence is obtained in the $w^{th}$ loop process, the second device combines the $w^{th}$ second initial binary sequence and the $(w-1)^{th}$ second combination sequence, to obtain the $w^{th}$ second combination sequence, and uses the $w^{th}$ second combination sequence as the third sequence.

In a case in which w is equal to 1, the $(w-1)^{th}$ second combination sequence may be empty or 0. In a case in which w is greater than 1, the $(w-1)^{th}$ second combination sequence may be a second combination sequence obtained after the previous loop process, that is, a second combination sequence obtained after the $(w-1)^{th}$ loop process.

For example, in a case in which w is greater than 1, the $w^{th}$ second combination sequence is represented as $Q_{Tag}(w)$, the $(w-1)^{th}$ second combination sequence is represented as $Q_{Tag}(w-1)$, and the $w^{th}$ second initial binary sequence may be represented as $Q_{R,\ w}$. The $w^{th}$ second combination sequence may be obtained by using the following formula:

$$Q_{Tag}\left(w\right) = Q_{Tag}\left(w-1\right)_{\|}Q_{R,\ w}.$$

After a process of the foregoing S521 is completed, the third sequence obtained after the $w^{th}$ loop process may be obtained. After the $w^{th}$ loop process is completed, the third sequence may be obtained. In this case, a third sequence obtained after the previous loop process (that is, the $(w-1)^{th}$ loop process) may be deleted, and only the third sequence obtained after the current loop process is saved.

Then, S522 is executed. If it is determined that the second condition is met, S523 is executed, that is, the second device generates the second key based on the third sequence. In addition, while determining that the second condition is met, the second device may further obtain M second indicator bits, where the M second indicator bits are used to indicate whether received strength of M first wireless signals received by the second device falls within the second quantization range.

Correspondingly, the method may further include: transmitting, by the second device, third information to the first device, where the third information includes the M second indicator bits. The M second indicator bits included in the third information may specifically be a second GIB (guard-band indicator bit, Guardband Indicator Bit) sequence.

By using the foregoing second processing manner, the first device also obtains M first indicator bits based on whether a channel estimation value obtained based on the first reflected signal received by the first device falls within the second quantization range. Therefore, in this processing manner, when the process of S523, that is, generating the second key by the second device based on the third sequence, is executed, the second device does not directly use the third sequence as the second key, but needs to make reference to the M first indicator bits transmitted by the first device so as to generate the second key. Detailed description is as follows:

The method further includes: receiving, by the second device, first information transmitted by the first device, where the first information includes the M first indicator bits. The M first indicator bits may specifically be a first GIB sequence.

In S523, that the second device generates the second key based on the third sequence may specifically include: obtaining, by the second device, a fourth sequence based on the third sequence, and using the fourth sequence as the second key.

The obtaining, by the second device, a fourth sequence based on the third sequence includes: determining, by the second device, a target binary sequence from the third sequence based on M first indicator bits, where the M first indicator bits are used to indicate whether a channel estimation value obtained by the first device based on received strength of M first reflected signals falls within a first quantization range; and forming, by the second device, the fourth sequence based on the target binary sequence.

The determining, by the second device, a target binary sequence from the third sequence based on M first indicator bits includes: combining, by the second device, the M first indicator bits and M second indicator bits, to obtain M combination indicator bits, and determining, by the second device, the target binary sequence from the third sequence based on the M combination indicator bits.

The combining, by the second device, the M first indicator bits and M second indicator bits, to obtain M combination indicator bits includes: in a case in which both the $q^{th}$ second indicator bit and the $q^{th}$ first indicator bit are a first value, determining, by the second device, that the $q^{th}$ combination indicator bit is the first value, where q is an integer greater than or equal to 1 and less than or equal to M; or in a case in which at least one of the $q^{th}$ second indicator bit and the $q^{th}$ first indicator bit is a second value, determining, by the second device, that the $q^{th}$ combination indicator bit is the second value.

For example, the first value is 0, and the second value is 1. If M is 4, the M second indicator bits are four second indicator bits, and the M first indicator bits are four first indicator bits. It is assumed that the four second indicator bits are "0010", and the four first indicator bits are "0100". If r is 1, it indicates that the $1^{st}$ second indicator bit is the first value, that is, 0, and the $1^{st}$ first indicator bit is also 0. In this case, the first combination indicator bit is the first value, that is, 0. If r is 2, the

2nd second indicator bit is the first value, that is, 0, and the 2nd first indicator bit is the second value, that is, 1. In this case, the second combination indicator bit is the second value, that is, 1. By analogy, four combination indicator bits finally obtained are "0110".

The determining, by the second device, the target binary sequence from the third sequence based on the M combination indicator bits includes: in a case in which the $t^{th}$ combination indicator bit in the M combination indicator bits is the first value, determining, by the second device, that the $t^{th}$ group of binary bits in the third sequence is one of the target binary sequence, where the $t^{th}$ group of binary bits is generated based on received strength of the $t^{th}$ first wireless signal, and t is an integer greater than or equal to 1 and less than or equal to M.

For example, the second device may obtain a quantity of bits corresponding to one combination indicator bit in advance, for example, one combination indicator bit corresponds to four bits. If t is equal to 1, the first combination indicator bit corresponds to the first to fourth bits in the third sequence, that is, the first group of binary bits is the first to fourth bits in the third sequence. If j is equal to 2, the second combination indicator bit corresponds to the fifth to eighth bits in the third sequence, that is, the second group of binary bits is the fifth to eighth bits in the third sequence. The rest can be deduced by analogy, and is not enumerated exhaustively.

In addition, the following may be further included: in a case in which the $t^{th}$ combination indicator bit in the M combination indicator bits is a second value, skipping performing, by the second device, a process of extracting a target binary sequence.

Specifically, if the $t^{th}$ combination indicator bit in the M combination indicator bits is the second value, the second device may not perform the process of extracting a target binary sequence, and may further delete (or discard) the binary sequence.

For example, the first value is 0, and the second value is 1. If M is 4, the M second indicator bits are four second indicator bits. It is assumed that the four second indicator bits are "0010", and the four first indicator bits are "0100". Four combination indicator bits finally obtained are "0110". If t is equal to 1, the first combination indicator bit corresponding to t is equal to 0, and the first group of binary bits in the third sequence may be used as a target binary sequence. If t is equal to 2, the second combination indicator bit corresponding to t is equal to 1 (that is, the second value), and the process of extracting a target binary sequence may not be performed. Further, a binary sequence corresponding to the 2nd first wireless signal may be deleted or discarded. By analogy, the first group of binary bits and the fourth group of binary bits in the third sequence may be finally used as target binary sequences.

The forming, by the second device, the fourth sequence based on the target binary sequence may specifically include: combining, by the second device, the target binary sequence, to obtain the fourth sequence. The combining, by the second device, the target binary sequence, to obtain the fourth sequence may refer to: combining, by the second device, the target binary sequence in an order, to obtain the fourth sequence. The order may be a sequential order of the target binary sequence in the third sequence.

After the second device combines the target binary sequence and obtains the fourth sequence, the second device may directly use the fourth sequence as the second key.

It may be learned that, by using the solution provided in this embodiment, a second key may be generated based on received strength of a wireless signal. Because a second device can obtain the second key only by receiving the wireless signal, the second device is more applicable to a zero-power-consumption scenario. In addition, because the second key is obtained according to the received strength of the wireless signal transmitted by a first device, randomness of the generated key may be ensured, and further security of the key is ensured.

FIG. 6 is a schematic flowchart of an information check method according to an embodiment of this application. Optionally, the method may be applied to the system shown in FIG. 1, but is not limited thereto. The method includes at least a part of the following content.

S610: A first device transmits fourth information to a second device, where the fourth information includes check information generated based on a first key, the first key is related to received strength of a first reflected signal, and the first reflected signal is transmitted by the second device based on a first wireless signal transmitted by the first device.

S620: The first device receives fifth information transmitted by the second device, where the fifth information includes a check result of checking on a second key against the first key, and the second key is related to received strength of receiving the first wireless signal by the second device.

In this embodiment, the first device and the second device may vary with scenarios. For example, the first device may be a reader (tag reader), and the second device may specifically be a zero-power-consumption device, for example, a tag (tag). For another example, the first device may be any one of an access network device (for example, a base station, an eNB, or a gNB), a user equipment (UE, User Equipment), a customer-premises equipment (CPE, Customer Premise Equipment), or the like. Correspondingly, the second device may be any one of a zero-power-consumption device, an internet of things (Internet of Things, IoT) device, a passive internet of things (Passive Internet of Things, Passive IoT) device, or the like. It should be understood that, the foregoing is merely an example for description. In actual processing, the first device and the second device may separately be another type of device, and are not enumerated exhaustively herein.

Before executing S610, the first device may generate the first key, the first key may be related to the received strength of the first reflected signal, and the first reflected signal is transmitted by the second device based on the first wireless signal transmitted by the first device. The first wireless signal may be a first wireless signal transmitted by the first device this time. Correspondingly, the first reflected signal may also be a first reflected signal received this time. That a first device transmits a first wireless signal may refer to: transmitting, by the first device, the first wireless signal based on a wireless signal transmission period. The wireless signal transmission period may be configured in advance, for example, may be 1s or 2s, or may be longer or shorter, which is not enumerated exhaustively herein.

The first key may be generated based on a first sequence, and the first sequence is generated based on the received strength of the first reflected signal.

Specifically, the first key may be generated based on the first sequence in a case in which a first condition is met.

The first condition includes one of the following: a total length of the first sequence is greater than or equal to a preset length or a quantity of times the first wireless signal is transmitted reaches a preset quantity, where the first wireless signal is used by the second device to generate the second key.

In addition, the following may be further included: In a case in which the first condition is not met, the first device continues to transmit the first wireless signal and receive the first reflected signal.

The preset length may be represented as "keylen". The preset length may be set in advance according to an actual requirement, and a unit of the preset length may be bit. For example, the preset length may be 16 bits, 24 bits, or 8 bits, or may be longer or shorter, which is not enumerated exhaustively herein.

The preset quantity may be set in advance according to an actual situation, for example, may be 8, 6, or 1, or may be larger or smaller, which is not enumerated exhaustively. Alternatively, the preset quantity may be determined based on the preset length. For example, if it is determined in advance that a length of information obtained by performing quantization processing once according to a preset quantization algorithm is A1 bits, and the preset length is B1 bits, the preset quantity may be equal to B1 divided by A1 (that is, the preset quantity = B1/A1).

That the first wireless signal is used by the second device to generate the second key may refer to: The first wireless signal may carry a data packet, and the data packet is used for extraction by the second device to generate the second key.

The foregoing first condition may include any one of the foregoing, that is, the first condition may include that the total length of the first sequence is greater than or equal to the preset length or that the quantity of times the first wireless signal is transmitted reaches the preset quantity. Alternatively, in a case in which the preset quantity is determined based on the preset length, the first condition may include that the total length of the first sequence is greater than or equal to the preset length and that the quantity of times the first wireless signal is transmitted reaches the preset quantity.

It should be noted that the first device may further execute the following processing: transmitting, by the first device, second information to the second device, where the second information includes at least one of the following: the preset length or the preset quantity. That is, the preset length and/or the preset quantity may be saved in the first device in advance. Before executing the foregoing S610, the first device may transmit the second information to the second device in advance, so that the second device may determine a second condition of the second device based on the foregoing preset length and/or the foregoing preset quantity.

In one case, content included in the second information may be related to content included in the first condition. For example, if the first device determines that the first condition is only that the total length of the first sequence is greater than or equal to the preset length, the first device may set (or include) only the preset length in the second information. If the first device determines that the first condition is only that the quantity of times the first wireless signal is transmitted reaches the preset quantity, the first device may set (or include) only the preset quantity in the second information.

In another case, the content included in the second information may not be related to the content included in the first condition. That is, no matter which of the foregoing is the content of the first condition, the second information may include the preset length and the preset quantity. In this case, a rule may be set in the first device and the second device in advance. This rule may specify whether a preset length or a preset quantity is used as a determining condition for the respective first device and the second device, for example, the first condition for the first device and the second condition for the second device.

The foregoing process of generating the first key by the first device may specifically include: transmitting, by the first device, a first wireless signal, and receiving, by the first device, a first reflected signal, where the first reflected signal is transmitted by the second device based on the first wireless signal; and generating, by the first device, the first sequence based on the received strength of the first reflected signal; determining, by the first device, whether the first condition is met; and if the first condition is met, generating, by the first device, the first key based on the first sequence; or if the first condition is not met, continuing to transmit a first wireless signal and receive a first reflected signal.

The foregoing process may be a loop process; the first key may not be generated until it is determined that the first condition is met. In this embodiment, any one of the foregoing at least one loop process is referred to as the $i^{th}$ loop process.

In the $i^{th}$ loop process, the first device transmits the $i^{th}$ first wireless signal and receives the $i^{th}$ first reflected signal, where i is an integer greater than or equal to 1.

The following separately describes two processing manners of generating the first key based on the $i^{th}$ loop process.

A first processing manner:

The first sequence is the $i^{th}$ first combination sequence, and i is an integer greater than or equal to 1; the $i^{th}$ first combination sequence is obtained by combining the $i^{th}$ first initial binary sequence and the $(i-1)^{th}$ first combination sequence; and the $i^{th}$ first initial binary sequence is generated based on received strength of the $i^{th}$ first reflected signal.

The $i^{th}$ first initial binary sequence is obtained by quantizing the $i^{th}$ channel estimation value based on a preset quantization algorithm; the $i^{th}$ channel estimation value is determined based on the $i^{th}$ path loss and transmission strength of the $i^{th}$ first wireless signal; and the $i^{th}$ path loss is determined based on the received strength of the $i^{th}$ first reflected signal and the transmission strength of the $i^{th}$ first wireless signal.

The $i^{th}$ path loss is obtained by dividing a first value by 2, and the first value is obtained by subtracting a reflection loss of the second device and the received strength of the $i^{th}$ first reflected signal from a sum of the transmission strength of the $i^{th}$ first wireless signal, an antenna gain of the first device, and an antenna gain of the second device.

The transmission strength of the $i^{th}$ first wireless signal may specifically refer to continuous carrier strength of the $i^{th}$ first wireless signal.

The $i^{th}$ first wireless signal may be transmitted by using a fixed power or a randomly changing power, which is determined by the first device. Therefore, the first device may learn of the transmission strength of the $i^{th}$ first wireless signal in advance. The fixed power may be set in advance according to an actual situation, and is not limited in this embodiment. The randomly changing power may be randomly selected by the first device from a plurality of preset powers set in advance, or may be randomly selected by the first device from a preset power range supported by the first device, which is not limited.

The received strength of the $i^{th}$ first reflected signal may be an average value of a plurality of measurement values obtained by performing a plurality of times of measurement on the $i^{th}$ first reflected signal. Alternatively, the received strength of the $i^{th}$ first reflected signal may be a measurement value obtained by measuring the $i^{th}$ first reflected signal once.

Specifically, the received strength of the $i^{th}$ first reflected signal may be an average value of a plurality of measurement values obtained by performing a plurality of times of measurement on the $i^{th}$ first reflected signal based on a preset first period during a coherence time. A length of the coherence time may be set in advance or determined in advance, and the preset first period may also be set according to an actual situation. For example, the length of the coherence time is 1s, and the preset first period may be 0.2s. The foregoing is merely an example for description. In actual processing, the coherence time is within the protection scope of this embodiment as long as the coherence time is greater than duration of a plurality of preset first periods.

The antenna gain of the first device may be preset, for example, may be set in advance upon factory delivery of the first device. A unit of the antenna gain of the first device may be dBd, dBi, or the like. For example, if the first device is a single antenna, the antenna gain of the first device may be set to 0. Certainly, depending on an actual situation, the antenna gain of the first device may be set to different values, for example, 16 dBd. It should be understood that this is merely an example for description, and is not intended to limit an actual value of the antenna gain of the first device.

The antenna gain of the second device may be set in advance, or may be obtained by the first device in advance. A unit of the antenna gain of the second device may be dBd, dBi, or the like. The antenna gain of the second device being preset may refer to manually setting the antenna gain of the second device in the first device in advance before this embodiment is executed. The antenna gain of the second device being obtained by the first device in advance may refer to: Before executing this embodiment, the first device exchanges a parameter with the second device, and a device parameter transmitted by the second device may include the antenna gain of the second device. Correspondingly, the first device may obtain the antenna gain of the second device from the device parameter transmitted by the second device.

A value of the antenna gain of the second device may be different depending on an actual situation. For example, if the second device is a single antenna, the antenna gain of the second device may be set to 0 dBd. Certainly, depending on an actual situation, the antenna gain of the second device may be set to different values, for example, 16 dBd. It should be understood that this is merely an example for description, and is not intended to limit an actual value of the antenna gain of the second device. It should be further understood that the actual value of the antenna gain of the second device may be the same as or different from that of the antenna gain of the first device, which is not limited in this embodiment.

The reflection loss of the second device may be set in advance, and a unit of the reflection loss of the second device may be dB (decibel), Np (neper), or another unit, which is not enumerated exhaustively.

For example, the transmission strength of the $i^{th}$ first wireless signal is represented as $RSSI_{Reader, i}$, the antenna gain of the first device is represented as $G_{Reader}$, the antenna gain of the second device is represented as $G_{Tag}$, the received strength of the $i^{th}$ first reflected signal is represented as $RSSI_{TRes,i}$, the reflection loss of the second device is represented as $loss_{back}$, and the $i^{th}$ path loss is represented as $\overline{\overline{loss}}_{RT,i}$. The $i^{th}$ path loss may be obtained through calculation by using the following formula:

$$\overline{\overline{loss}}_{RT,i} = \left( RSSI_{Reader,i} + G_{Reader} - loss_{back} + G_{Tag} - RSSI_{TRes,i} \right) / 2 .$$

The $i^{th}$ channel estimation value is obtained by subtracting the $i^{th}$ path loss from a sum of adding up the transmission strength of the $i^{th}$ first wireless signal and the antenna gain of the first device.

For example, the transmission strength of the $i^{th}$ first wireless signal is represented as $RSSI_{Reader, i}$, the antenna gain of the first device is represented as $G_{Reader}$, the $i^{th}$ path loss is represented as $\overline{\overline{loss}}_{RT,i}$, and the $i^{th}$ channel estimation value is represented as $RSSI_{Tag, i}$. The $i^{th}$ channel estimation value may be obtained through calculation by using the following formula:

$$RSSI_{Tag,} \; i = RSSI_{Reader,i} + G_{Reader} - \overline{\overline{loss}}_{RT,i} .$$

The $i^{th}$ first initial binary sequence is obtained by quantizing the $i^{th}$ channel estimation value based on a preset quantization algorithm. The preset quantization algorithm may include one of the following: a channel quantization CQ algorithm, a uniform quantization algorithm, a channel quantization with guard-band CQG algorithm, or a channel quantization alternating CQA algorithm.

That is, the $i^{th}$ channel estimation value is quantized based on any one of the foregoing preset quantization algorithms, to obtain the $i^{th}$ first initial binary sequence.

It should be noted that the first device and the second device need to use a same preset quantization algorithm, for example, both use the CQ algorithm, or both use the CQA algorithm.

In an implementation, the $i^{th}$ first initial binary sequence is obtained by quantizing the $i^{th}$ channel estimation value based on the preset quantization algorithm and first strength feature related information, where the first strength feature related information includes at least one of the following: an average value of first strength feature information or a standard deviation of the first strength feature information.

The average value of the first strength feature information and the standard deviation of the strength feature information may be set in advance, or may be obtained based on the $i^{th}$ channel estimation value that is determined based on the received strength of the $i^{th}$ first reflected signal, or may be obtained based on the first i channel estimation values that are determined based on received strength of the first i first reflected signals.

For example, a manner of determining the average value of the first strength feature information may be: dividing, by I, a sum of adding up the first i channel estimation values, to obtain the average value of the strength feature information.

A manner of determining the standard deviation of the first strength feature information may be: dividing, by i, a sum of adding up the first i channel estimation values, to obtain an average value; separately subtracting the average value from the first i channel estimation values, to calculate separately and obtain i squared values; and dividing, by i, a sum of adding up the i squared values, so as to calculate a square root and obtain the standard deviation of the first strength feature information.

That the $i^{th}$ channel estimation value is quantized based on the preset quantization algorithm and first strength feature related information, to obtain the $i^{th}$ first initial binary sequence may be: determining that a square root of the $i^{th}$ channel estimation value falls within a corresponding target threshold range of a plurality of threshold ranges, where the plurality of threshold ranges are obtained through calculation based on the first strength feature related information, and different threshold ranges in the plurality of threshold ranges correspond to different quantized values; and using a quantized value corresponding to the target threshold range as the $i^{th}$ first initial binary sequence.

For example, the average value of the first strength feature information may be represented as , and the standard deviation of the first strength feature information may be represented as . The plurality of threshold ranges may specifically include four threshold ranges. The four threshold ranges and different quantized values corresponding to different threshold ranges are respectively represented as follows: Within a threshold range less than $\mu1 - 0.6745\sigma1$, (that is, $< \mu1 - 0.6745\sigma1$), a corresponding quantized value is "00"; within a threshold range greater than or equal to $\mu1 - 0.6745\sigma1$ and less than $\mu$ (that is, $[\mu1 - 0.6745\sigma1, \mu1)$), a corresponding quantized value is "01"; within a threshold range greater than or equal to $\mu1$ and less than $\mu1 + 0.6745\sigma1$ (that is, $[\mu1, \mu1 + 0.6745\sigma1)$), a corresponding quantized value is "11"; within a threshold range greater than or equal to $\mu1 + 0.6745\sigma1$ (that is, $\geq \mu1 + 0.6745\sigma1$), a corresponding quantized value is "10". The $i^{th}$ first initial binary sequence is represented as $Q_{R, i}$, and the $i^{th}$ first initial binary sequence may be determined by using the following formula:

$$Q_{R,i} = \begin{cases} 00 & \sqrt{RSSI_{Tag,i}} < \mu 1 - 0.6745\sigma 1 \\ 01 & \sqrt{RSSI_{Tag,i}} \in [\mu 1 - 0.6745\sigma 1, \mu 1) \\ 11 & \sqrt{RSSI_{Tag,i}} \in [\mu 1, \mu 1 + 0.6745\sigma 1) \\ 10 & \sqrt{RSSI_{Tag,i}} \geq \mu 1 + 0.6745\sigma 1 \end{cases}.$$

In the $i^{th}$ loop process, the $i^{th}$ first combination sequence is obtained by combining the $i^{th}$ first initial binary sequence and the $(i-1)^{th}$ first combination sequence.

In a case in which i is equal to 1, the $(i-1)^{th}$ first combination sequence may be empty or 0. In a case in which i is greater than 1, the $(i-1)^{th}$ first combination sequence may be a first combination sequence obtained after the previous loop process, that is, a first combination sequence obtained after the $(i-1)^{th}$ loop process.

For example, in a case in which i is greater than 1, the $i^{th}$ first combination sequence is represented as $Q_{Reader}(i)$, the $(i-1)^{th}$ first combination sequence is represented as $Q_{Reader}(i-1)$, and the $i^{th}$ first initial binary sequence may be represented as $Q_{R,i}$. The $i^{th}$ first combination sequence may be obtained by using the following formula:

$$Q_{Reader}(i) = Q_{Reader}(i-1) \parallel Q_{R,i}.$$

After the $i^{th}$ loop process is completed, the first sequence may be obtained. The first sequence is the $i^{th}$ first combination sequence. In this case, a first sequence obtained after the previous loop process (that is, the $(i-1)^{th}$ loop process) may be deleted, and only the first sequence obtained after the current loop process is saved.

After the first sequence is obtained, the first key may be generated. Specifically, the first key is generated based on the first sequence in a case in which the first condition is met. Detailed description of the first condition is the same as that in the foregoing embodiment, and is not described again herein.

In this processing manner, the first key is the first sequence. That is, the first device may directly use the foregoing first sequence as the first key.

A second processing manner:

The first sequence is the $i^{th}$ first combination sequence, and i is an integer greater than or equal to 1; the $i^{th}$ first combination sequence is obtained by combining the $i^{th}$ first initial binary sequence and the $(i-1)^{th}$ first combination sequence; and the $i^{th}$ first initial binary sequence is generated based on received strength of the $i^{th}$ first reflected signal.

The $i^{th}$ first initial binary sequence is obtained by quantizing the $i^{th}$ channel estimation value based on a preset quantization algorithm; the $i^{th}$ channel estimation value is determined based on the $i^{th}$ path loss and transmission strength of the $i^{th}$ first wireless signal; and the $i^{th}$ path loss is determined based on the received strength of the $i^{th}$ first reflected signal and the transmission strength of the $i^{th}$ first wireless signal.

The $i^{th}$ path loss is obtained by dividing a first value by 2, and the first value is obtained by subtracting a reflection loss of the second device and the received strength of the $i^{th}$ first reflected signal from a sum of the transmission strength of the $i^{th}$ first wireless signal, an antenna gain of the first device, and an antenna gain of the second device. A specific calculation manner of the $i^{th}$ path loss is the same as that in the foregoing first processing manner, and therefore is not described again.

The $i^{th}$ channel estimation value is obtained by subtracting the $i^{th}$ path loss from a sum of adding up the transmission strength of the $i^{th}$ first wireless signal and an antenna gain of the first device. It should be understood that a specific calculation manner of the $i^{th}$ channel estimation value is the same as that in the foregoing first processing manner, and therefore is not described again.

The preset quantization algorithm may include one of the following: a channel quantization CQ algorithm, a uniform quantization algorithm, a channel quantization with guard-band CQG algorithm, or a channel quantization alternating CQA algorithm. That is, the $i^{th}$ channel estimation value is quantized based on any one of the foregoing preset quantization algorithms, to obtain the $i^{th}$ first initial binary sequence.

It should be noted that the first device and the second device need to use a same preset quantization algorithm, for example, both use the CQ algorithm, or both use the CQA algorithm.

In an implementation, the $i^{th}$ first initial binary sequence is obtained by quantizing the $i^{th}$ channel estimation value based on the preset quantization algorithm and first strength feature related information, where the first strength feature related information includes at least one of the following: an average value of first strength feature information or a standard deviation of the first strength feature information. The specific manner of determining the foregoing $i^{th}$ first initial binary sequence is the same as that in the foregoing first processing manner, and is not described again.

Different from that in the foregoing first processing manner, in the second processing manner, when the first device executes the process of quantizing the $i^{th}$ channel estimation value based on a preset quantization algorithm, to obtain the $i^{th}$ first initial binary sequence, the following may be further included: in a case in which the $i^{th}$ channel estimation value falls within a first quantization range, setting, by the first device, the $i^{th}$ first indicator bit to a first value, where the $i^{th}$ first indicator bit is one of M first indicator bits; or in a case in which the $i^{th}$ channel estimation value does not fall within the first quantization range, setting, by the first device, the $i^{th}$ first indicator bit to a second value.

The first value is different from the second value, and the first value and the second value may be set according to an actual situation, as long as both the first device and the second device determine a same meaning therefor. For example, the first value may be 0, and the second value may be 1. For another example, the first value may be 1, and the second value may be 0. This is not enumerated exhaustively herein.

In the $i^{th}$ loop process, the $i^{th}$ first combination sequence is obtained by combining the $i^{th}$ first initial binary sequence and the $(i-1)^{th}$ first combination sequence.

Specifically, in a case in which i is equal to 1, the $(i-1)^{th}$ first combination sequence may be empty or 0. In a case in which i is greater than 1, the $(i-1)^{th}$ first combination sequence may be a first combination sequence obtained after the previous loop process, that is, the $(i-1)^{th}$ loop process. For example, in a case in which i is greater than 1, if the $i^{th}$ first initial binary sequence is obtained, the $i^{th}$ first combination sequence is represented as $Q_{Reader}(i)$, the $(i-1)^{th}$ first combination sequence is represented as $Q_{Reader}(i-1)$, and the $i^{th}$ first initial binary sequence may be represented as $Q_{R,\,i}$. The $i^{th}$ first combination sequence may be obtained by using the following formula:

$$Q_{Reader}\left(i\right) = Q_{Reader}\left(i-1\right)_{\|}Q_{R,\,i}\,.$$

After the $i^{th}$ loop process is completed, the first sequence may be obtained. The first sequence is the $i^{th}$ first combination sequence. In this case, a first sequence obtained after the previous loop process (that is, the $(i-1)^{th}$ loop process) may be deleted, and only the first sequence obtained after the current loop process is saved. After the first sequence is obtained, the first key may be generated. Specifically, the first key is generated based on the first sequence in a case in which the first condition is met. Detailed description of the first condition is the same as that in the foregoing embodiment, and is not described again herein.

In addition, while determining that the first condition is met, the first device may further obtain M first indicator bits, where the M first indicator bits are used to indicate whether a channel estimation value obtained by the first device based on received strength of M first reflected signals falls within the first quantization range.

Correspondingly, the method may further include: transmitting, by the first device, first information to the second device, where the first information includes the M first indicator bits. The M first indicator bits included in the first information may specifically be a first GIB (guard-band indicator bit, Guardband Indicator Bit) sequence. The M first indicator bits in the first information may be used as quantization indication information, and may be used to enable the second device to generate a second key based on the M first indicator bits.

In the second processing manner, the second device also obtains M second indicator bits based on whether the first wireless signal received by the second device falls within a second quantization range. Therefore, in this processing manner, the first sequence is not directly used as the first key, but it's needed to make reference to the M second indicator bits transmitted by the second device so as to generate the first key. Detailed description is as follows:

The method may further include: receiving, by the first device, third information transmitted by the second device, where the third information includes the M second indicator bits. The M second indicator bits may specifically be a second GIB sequence.

The first key is a second sequence obtained based on the first sequence.

The second sequence includes a target binary sequence, the target binary sequence is determined from the first sequence based on M second indicator bits, and the M second indicator bits are used to indicate whether received strength of receiving M first wireless signals by the second device falls within a second quantization range.

The target binary sequence is determined from the first sequence based on M combination indicator bits, and the M combination indicator bits are obtained by combining the M second indicator bits and the M first indicator bits.

A specific processing manner of obtaining the M combination indicator bits by the first device may include: in a case in which both the $r^{th}$ second indicator bit and the $r^{th}$ first indicator bit are a first value, determining, by the first device, that the $r^{th}$ combination indicator bit is the first value, where r is an integer greater than or equal to 1 and less than or equal to M; or in a case in which at least one of the $r^{th}$ second indicator bit and the $r^{th}$ first indicator bit is a second value, determining, by the first device, that the $r^{th}$ combination indicator bit is the second value.

For example, the first value is 0, and the second value is 1. If M is 4, the M second indicator bits are four second indicator bits, and the M first indicator bits are four first indicator bits. It is assumed that the four second indicator bits are "0010", and the four first indicator bits are "0100". If r is 1, it indicates that the $1^{st}$ second indicator bit is the first value, that is, 0, and the $1^{st}$ first indicator bit is also 0. In this case, the first combination indicator bit is the first value, that is, 0. If r is 2, the $2^{nd}$ second indicator bit is the first value, that is, 0, and the $2^{nd}$ first indicator bit is the second value, that is, 1. In this case, the second combination indicator bit is the second value, that is, 1. By analogy, four combination indicator bits finally obtained are "0110".

The determining the target binary sequence from the first sequence based on the M combination indicator bits includes: in a case in which the $j^{th}$ combination indicator bit in the M combination indicator bits is a first value, determining, by the first device, that the $j^{th}$ group of binary bits in the first sequence is one of the target binary sequence, where j is an integer greater than or equal to 1 and less than or equal to M.

For example, the first device may obtain a quantity of bits corresponding to one combination indicator bit in advance, for example, one combination indicator bit corresponds to four bits. If j is equal to 1, the first combination indicator bit corresponds to the first to fourth bits in the first sequence, that is, the first group of binary bits is the first to fourth bits in the first sequence. If j is equal to 2, the second combination indicator bit corresponds to the fifth to eighth bits in the first sequence, that is, the second group of binary bits is the fifth to eighth bits in the first sequence. The rest can be deduced by analogy, and is not enumerated exhaustively.

In addition, the following may further be included: in a case in which the $j^{th}$ combination indicator bit in the M combination indicator bits is a second value, skipping performing, by the first device, a process of extracting a target binary sequence.

Specifically, if the $j^{th}$ combination indicator bit in the M combination indicator bits is the second value, the first device may not perform the process of extracting a target binary sequence, and may further delete (or discard) the $j^{th}$ group of binary bits.

For example, the first value is 0, and the second value is 1. If M is 4, the M second indicator bits are four second indicator bits. It is assumed that the four second indicator bits are "0010", and the four first indicator bits are "0100". Four combination indicator bits finally obtained are "0110". If j is equal to 1, the first combination indicator bit corresponding to j is equal to 0, and the first group of binary bits in the first sequence (for example, the first to fourth bits in the first sequence) may be used as one target binary sequence. If j is equal to 2, the second combination indicator bit corresponding to j is equal to 1 (that is, the second value), and the first device may not perform the process of extracting a target binary sequence. By analogy, both the first group of binary bits in the first sequence (for example, the first to fourth bits in the first sequence) and the fourth group of binary bits in the first sequence (for example, the 13th to 16th bits in the first sequence) may be finally used as target binary sequences.

The second sequence includes the target binary sequence. Specifically, the second sequence is obtained by combining the target binary sequence in an order. The order may be a sequential order of the target binary sequence in the first sequence. The first key is the second sequence obtained based on the first sequence, that is, the first device may directly use the second sequence as the first key.

After the foregoing process is completed, S610 may be executed, that is, the first device transmits the fourth information to the second device.

A process of executing S610 may specifically include: generating, by the first device, check information based on the first key, and generating the fourth information based on the check information; and transmitting, by the first device, the fourth information to the second device.

The check information is one of the following: a first parity check code generated based on the first key or information obtained by performing hash calculation based on the first key.

The following separately describes three implementations of the foregoing S610.

Manner 1:

The first parity check code generated based on the first key may be set to 1 in a case in which the first key includes an odd quantity of specified values, or the first parity check code may be set to 0 in a case in which the first key does not include an odd quantity of specified values, where the specified value may be 1. Alternatively, the first parity check code may be set to 1 in a case in which the first key includes an even quantity of specified values, or the first parity check code may be set to 0 in a case in which the first key does not include an even quantity of specified values. Similarly, the specified value may be 1. Certainly, there may also be another implementation, and as long as the first parity check code is generated based on the first key, it is within the protection scope of this embodiment, and the first parity check code is not enumerated exhaustively in this embodiment.

Further, the fourth information may be generated based on the check information, for example, the check information is added to the fourth information, and then the first device transmits the fourth information to the second device.

Manner 2:

The information obtained by performing hash calculation based on the first key may be information obtained by performing calculation on the first key based on a hash function. Details on the hash function are not described in this embodiment. Further, the fourth information may be generated based on the check information, and then the first device transmits the fourth information to the second device.

Manner 3:

The information obtained by performing hash calculation based on the first key may be information obtained by performing hash calculation on a result obtained by performing decryption with the first key. Specifically, the check information may be a second result obtained by performing hash calculation on a second random number, and the second random number is obtained by decrypting a first result based on the first key.

That a first device transmits fourth information to a second device may include: in a case in which the first device receives sixth information transmitted by the second device, transmitting, by the first device, the fourth information to the second device, where the sixth information includes a first result obtained after a first random number is encrypted based on the second key.

The in a case in which the first device receives sixth information transmitted by the second device, transmitting, by the first device, the fourth information to the second device may specifically include: in a case in which the first device receives the sixth information transmitted by the second device, obtaining, by the first device from the sixth information, the first result obtained after the first random number is encrypted based on the second key; decrypting, by the first device, the first result based on the first key, to obtain the second random number; performing, by the first device, calculation on the second random number based on a hash function, to obtain a second result, and using the second result as the check information; generating, by the first device, the fourth information based on the check information; and transmitting, by the first device, the fourth information to the second device.

The decrypting, by the first device, the first result based on the first key, to obtain the second random number may be determined by using the following formula:

$$ \mathrm{RN16'} = \mathrm{Decryption}_{K_{Reader}}(\mathrm{TReply}). $$

RN16' is the second random number, TReply is the first result, $\mathrm{Decryption}_{K_{Reader}}(\cdot)$ represents a decryption operator at the first device end under a condition that the first key exists, that is, a calculation manner (or method) in which the first device performs decryption based on the first key.

The first device performs calculation on the second random number based on the hash function, to obtain the second result. The second result may be represented as Hash(RN16'), where RN16' is the second random number, and Hash ( ) is the hash function.

In this manner, the following may be further included: in a case in which the first device does not receive the sixth information transmitted by the second device, transmitting, by the first device, a second wireless signal to the second device.

The second wireless signal is used to instruct the second device to decrement a count value of a slot counter, and is not used by the second device to generate the second key.

Specifically, in a case in which the first device completes the transmitting of the first wireless signal and does not receive the sixth information transmitted by the second device, the first device transmits the second wireless signal to the second device.

A manner of determining, by the first device, whether the transmitting of the first wireless signal is completed may include: determining, by the first device, whether the first condition is met, and in a case in which the first device determines that the first condition is met, determining that the transmitting of the first wireless signal is completed. That is, in a case in which the first device determines that the first condition is met, the first device may not only generate the first key based on the first sequence, but also determine that the transmitting of the first wireless signal used for the second device to generate the second key is completed. In this embodiment, the first wireless signal. It should be noted that the foregoing first wireless signal may also be used to instruct the second device to decrement the count value of the slot counter.

Further, if the first device determines that the transmitting of the first wireless signal is completed, and currently does not receive the sixth information transmitted by the second device, the first device may periodically transmit a second wireless signal. A difference between the second wireless signal and the first wireless signal lies in that the second wireless signal is not used by the second device to generate the second key, and is only used to instruct the second device to decrement the count value of the slot counter. A period of transmitting a second wireless signal may be set according to an actual situation, and may be the same as or different from a transmission period of transmitting the first wireless signal, which is not limited herein.

After completing that a first device transmits fourth information to a second device, S620 may be executed, that is, the first device receives fifth information transmitted by the second device.

The fifth information may include the check result of checking on the second key against the first key, and the second key is related to the received strength of receiving the first wireless signal by the second device.

In one case, the fifth information includes one of the following: a first check result, where the first check result indicates that the second key is consistent with the first key; or a second check result, where the first check result indicates that the second key is inconsistent with the first key.

That is, the fifth information directly includes the check result of checking on the second key against the first key. That is, the fifth information includes the first check result or the second check result.

The foregoing first check result and the foregoing second check result may be represented by indication information or an indicator value.

For example, the foregoing first check result and the foregoing second check result may be represented by indication information, and the indication information may specifically be Y or N, where Y may represent the first check result, and N may represent the second check result.

For another example, the foregoing first check result and the foregoing second check result may be represented by an indicator value. The indicator value may be set according to an actual situation. For example, a first indicator value may be "001" for indicating the first check result, and a second indicator value may be "010" for indicating the second check result. It should be understood that the first indicator value and the second indicator value herein are merely examples for description, and are not intended to limit actual processing.

In another case, the fifth information includes one of the following: a first check result obtained after encryption is performed based on the second key, where the first check result indicates that the second key is consistent with the first key; or a second check result, where the second check result indicates that the second key is inconsistent with the first key.

That is, the fifth information may include one of the foregoing. In addition, in a case in which it is determined on the side of the second device that the second key is consistent with the first key, the first check result may be obtained, and the first check result is encrypted by using the second key. For example, the first check result may specifically be sequence response information encrypted by using the second key, and the sequence response information may carry information indicating that the second key is consistent with the first key. In addition, the sequence response information may further carry other information, which is not limited herein. A length of the sequence response information may also be set according to an actual situation, for example, may be 135 bits, or may be longer or shorter, which all falls within the protection scope of this embodiment.

The second check result may be represented by an identifier indicating error (for example, an "error" identifier).

It may be learned that, by using the solution provided in this embodiment, in a case in which a first device generates a first key based on received strength of a reflected signal of a wireless signal, the first device generates fourth information based on the first key, and receives fifth information transmitted by a second device, where the fifth information includes a check result of checking on the first key against a second key. Because the reflected signal is obtained based on reflection of the wireless signal, it is more applicable to a zero-power-consumption scenario. In addition, because the first key is obtained according to the received strength of the reflected signal of the wireless signal transmitted by the first device, randomness of the generated key may be ensured, and further security of the key is ensured. In addition, after the first device and the second device separately generate respective keys, the second device further performs check thereon. Therefore, key consistency between the two devices is ensured, thereby ensuring security of subsequent processes of the two devices.

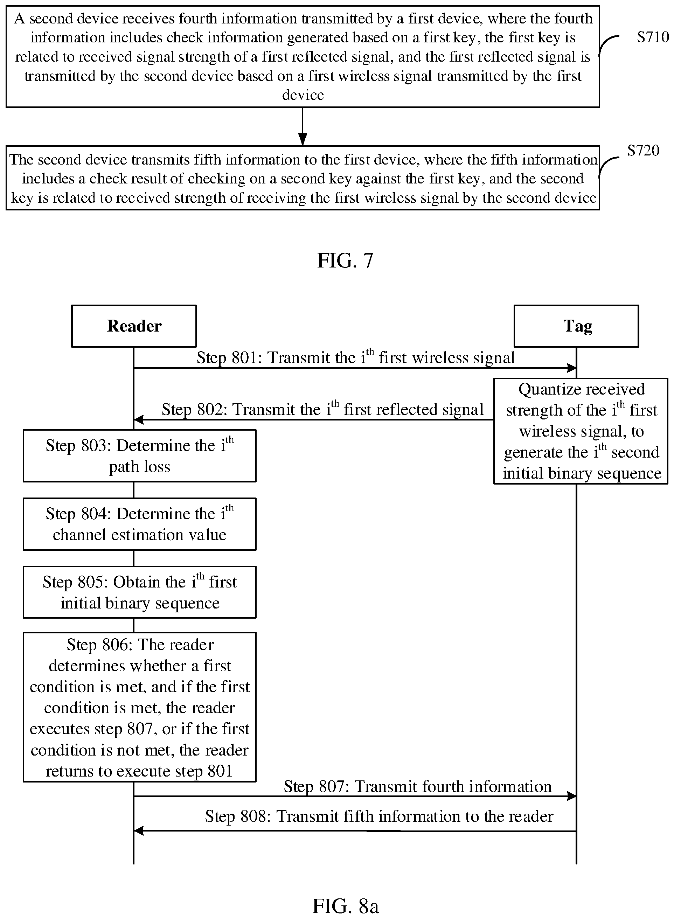

FIG. 7 is a schematic flowchart of a key generation method according to an embodiment of this application. Optionally, the method may be applied to the system shown in FIG. 1, but is not limited thereto. The method includes at least a part of the following content.

S710: A second device receives fourth information transmitted by a first device, where the fourth information includes check information generated based on a first key, the first key is related to received signal strength of a first reflected signal, and the first reflected signal is transmitted by the second device based on a first wireless signal transmitted by the first device.

S720: The second device transmits fifth information to the first device, where the fifth information includes a check result of checking on a second key against the first key, and the second key is related to received strength of receiving the first wireless signal by the second device.

In this embodiment, the first device and the second device may vary with scenarios. For example, the first device may be a reader (tag reader), and the second device may specifically be a zero-power-consumption device, for example, a tag (tag). For another example, the first device may be any one of an access network device (for example, a base station, an eNB, or a gNB), a user equipment (UE, User Equipment), a customer-premises equipment (CPE, Customer Premise Equipment), or the like. Correspondingly, the second device may be any one of a zero-power-consumption device, an internet of things (Internet of Things, IoT) device, a passive internet of things (Passive Internet of Things, Passive IoT) device, or the like. It should be understood that, the foregoing is merely an example for description. In actual processing, the first device and the second device may separately be another type of device, but are not enumerated exhaustively herein.

Before executing S710, the second device may generate the second key. The second key is generated based on a third sequence, and the third sequence is generated based on the received strength of the first wireless signal.

The second key is generated based on the third sequence in a case in which a second condition is met.

The second condition includes at least one of the following: a total length of the third sequence is greater than or equal to a preset length; or a quantity of times the first wireless signal is received reaches a preset quantity, where the first wireless signal is used by the second device to generate the second key.

In addition, the following may further be included: In a case in which the second condition is not met, the second device continues to receive a first wireless signal and continues to transmit a first reflected signal to the first device.

The preset length may be represented as "keylen". The preset length may be set in advance according to an actual requirement, and a unit of the preset length may be bit. For example, the preset length may be 16 bits, 24 bits, or 8 bits, or may be longer or shorter, which is not enumerated exhaustively herein.

The preset quantity may be set in advance according to an actual situation, for example, may be 8, 6, or 1, or may be larger or smaller, which is not enumerated exhaustively. Alternatively, the preset quantity may be determined based on the preset length. For example, if it is determined in advance that a length of information obtained by performing quantization processing once according to a preset quantization algorithm is A1 bits, and the preset length is B1 bits, the preset quantity may be equal to B1 divided by A1 (that is, the preset quantity = B1/A1).

That the first wireless signal is used by the second device to generate the second key may refer to: The first wireless signal may carry a data packet, and the data packet is used for extraction by the second device to generate the second key.

The foregoing second condition may include any one of the foregoing, that is, the second condition may include that the total length of the third sequence is greater than or equal to the preset length or that the quantity of times the first wireless signal is received reaches the preset quantity. Alternatively, in a case in which the preset quantity is determined based on the preset length, the second condition may include that the total length of the third sequence is greater than or equal to the preset length and that the quantity of times the first wireless signal is received reaches the preset quantity.

It should be noted that the second device may further execute the following processing: receiving, by the second device, second information transmitted by the first device, where the second information includes at least one of the following: the preset length or the preset quantity; and determining the second condition based on the foregoing preset length and/or the foregoing preset quantity included in the second information.

Specifically, the second device receives the first wireless signal; the second device generates the third sequence based on the received strength of the first wireless signal; the second device determines whether the second condition is met; and if the second condition is met, the second device generates the second key based on the third sequence; or if the second condition is not met, the second device continues to receive a first wireless signal.

That is, in a case in which it is determined that the second condition is met after at least one loop process is completed, the second device generates the second key based on the third sequence. In this embodiment, any one of the foregoing at least one loop process is referred to as the $w^{th}$ loop process.

In the $w^{th}$ loop process, the second device receives the $w^{th}$ first wireless signal, where w is an integer greater than or equal to 1. The following separately describes two processing manners of generating the second key by the second device based on the $w^{th}$ loop process.

A first processing manner:

The third sequence is the $w^{th}$ second combination sequence, and w is an integer greater than or equal to 1; the $w^{th}$ second combination sequence is obtained by combining the $w^{th}$ second initial binary sequence and the $(w-1)^{th}$ second combination sequence; and the $w^{th}$ second initial binary sequence is generated based on received strength of the $w^{th}$ first wireless signal.

The $w^{th}$ second initial binary sequence is obtained by quantizing the received strength of the $w^{th}$ first wireless signal based on a preset quantization algorithm.

The received strength of the $w^{th}$ first wireless signal is an average value of a plurality of measurement values obtained by performing a plurality of times of measurement on the $w^{th}$ first wireless signal. Alternatively, the received strength of the $w^{th}$ first wireless signal is a measurement value obtained by measuring the $w^{th}$ first wireless signal once.

Specifically, the received strength of the $w^{th}$ first wireless signal may be an average value of a plurality of measurement values obtained by performing a plurality of times of measurement on the $w^{th}$ first wireless signal based on a preset second period during a coherence time. A length of the coherence time may be set in advance or determined in advance, and the preset second period may be set according to an actual situation. For example, the length of the coherence time is 1s, and the preset second period may be 0.2s. The foregoing is merely an example for description. In actual processing, the coherence time is within the protection scope of this embodiment as long as the coherence time is greater than duration of a plurality of preset second periods.

The preset quantization algorithm may include one of the following: a channel quantization CQ algorithm, a uniform quantization algorithm, a channel quantization with guard-band CQG algorithm, or a channel quantization alternating CQA algorithm.

That is, the received strength of the $w^{th}$ first wireless signal is quantized based on any one of the foregoing preset quantization algorithms, to obtain the $w^{th}$ second initial binary sequence.

It should be noted that the first device and the second device need to use a same preset quantization algorithm, for example, both use the CQ algorithm, or both use the CQA algorithm.

In an implementation, the $w^{th}$ second initial binary sequence is obtained by quantizing the received strength of the $w^{th}$ first wireless signal based on the preset quantization algorithm and second strength feature related information, where the second strength feature related information includes at least one of the following: an average value of second strength feature information or a standard deviation of the second strength feature information.

The average value of the second strength feature information and the standard deviation of the second strength feature information may be set in advance, or may be determined based on the received strength of the $w^{th}$ first wireless signal, or may also be determined based on received strength of the first w first wireless signals.

For example, a manner of determining the average value of the second strength feature information may be: dividing, by w, a sum of adding up the received strength of the first w first wireless signals, to obtain the average value of the strength feature information.

A manner of determining the standard deviation of the second strength feature information may be: dividing, by w, a sum of adding up the received strength of the first w first wireless signals, to obtain an average value; separately subtracting the average value from the received strength of the first w first wireless signals, to calculate separately and obtain w squared values; and dividing, by w, a sum of adding up the w squared values, ,so as to calculate a square root and obtain the standard deviation of the second strength feature information.

The quantizing, by the second device, the received strength of the $w^{th}$ first wireless signal based on the preset quantization algorithm and second strength feature related information, to obtain the $w^{th}$ second initial binary sequence may be: determining, by the second device, that a square root of the $w^{th}$ first wireless signal falls within a corresponding target threshold range of a plurality of threshold ranges, where the plurality of threshold ranges are obtained through calculation based on the second strength feature related information, and different threshold ranges in the plurality of threshold ranges correspond to different quantized values; and using a quantized value corresponding to the target threshold range as the $w^{th}$ second initial binary sequence.

For example, the average value of the second strength feature information may be represented as $\mu2$, and the standard deviation of the strength feature information may be represented as $\sigma2$. The plurality of threshold ranges may specifically include four threshold ranges, and different threshold ranges in the plurality of threshold ranges correspond to different quantized values, which are respectively represented as follows: Within a threshold range less than $\mu2 - 0.6745\sigma2$, (that is, $< \mu2 - 0.6745\sigma2$), a corresponding quantized value is "00"; within a threshold range greater than or equal to $\mu2 - 0.6745\sigma2$ and less than $\mu$ (that is, $[\mu2 - 0.6745\sigma2, \mu2)$), a corresponding quantized value is "01"; within a threshold range greater than or equal to $\mu2$ and less than $\mu2 + 0.6745\sigma2$ (that is, $[\mu2, \mu2 + 0.6745\sigma2)$), a corresponding quantized value is "11"; within a threshold range greater than or equal to $\mu2 + 0.6745\sigma2$ (that is, $\geq \mu2 + 0.6745\sigma2$), a corresponding quantized value is "10". The $w^{th}$ second initial binary sequence is represented as $Q_{R, w}$, and the received strength of the $w^{th}$ first wireless signal is represented as $RSSI_{Tag,w}$. The $w^{th}$ second initial binary sequence may be determined by using the following formula:

$$Q_{R,w} = \begin{cases} 00 & \sqrt{RSSI_{Tag,w}} < \mu2 - 0.6745\sigma2 \\ 01 & \sqrt{RSSI_{Tag,w}} \in [\mu2 - 0.6745\sigma2, \mu2) \\ 11 & \sqrt{RSSI_{Tag,w}} \in [\mu2, \mu2 + 0.6745\sigma2) \\ 10 & \sqrt{RSSI_{Tag,w}} \geq \mu2 + 0.6745\sigma2 \end{cases}.$$

In the $w^{th}$ loop process, the $w^{th}$ second combination sequence is obtained by combining the $w^{th}$ second initial binary sequence and the $(w-1)^{th}$ second combination sequence. The third sequence is the $w^{th}$ second combination sequence, and w is an integer greater than or equal to 1.

In a case in which w is equal to 1, the $(w-1)^{th}$ second combination sequence may be empty or 0. In a case in which w is greater than 1, the $(w-1)^{th}$ second combination sequence may be a second combination sequence obtained after the previous loop process, that is, a second combination sequence obtained after the $(w-1)^{th}$ loop process.

For example, in a case in which w is greater than 1, the $w^{th}$ second combination sequence is represented as $Q_{Tag}$(w), the $(w-1)^{th}$ second combination sequence is represented as $Q_{Tag}(w - 1)$, and the $w^{th}$ second initial binary sequence may be represented as $Q_{R, w}$. The $w^{th}$ second combination sequence may be obtained by using the following formula:

$$Q_{Tag}\left(w\right) = Q_{Tag}\left(w-1\right)_{\parallel} Q_{R, w}.$$

After the foregoing process is completed, the third sequence obtained after the $w^{th}$ loop process may be obtained. After the $w^{th}$ loop process is completed, the third sequence may be obtained. In this case, a third sequence obtained after the previous loop process (that is, the $(w-1)^{th}$ loop process) may be deleted, and only the third sequence obtained after the current loop process is saved. The second key is the third sequence, that is, the second device uses the third sequence as the second key.

A second processing manner:

The third sequence is the $w^{th}$ second combination sequence, and w is an integer greater than or equal to 1; the $w^{th}$ second combination sequence is obtained by combining the $w^{th}$ second initial binary sequence and the $(w-1)^{th}$ second combination sequence; and the $w^{th}$ second initial binary sequence is generated based on received strength of the $w^{th}$ first wireless signal.

The $w^{th}$ second initial binary sequence is obtained by quantizing the received strength of the $w^{th}$ first wireless signal based on a preset quantization algorithm.

The received strength of the $w^{th}$ first wireless signal is an average value of a plurality of measurement values obtained by performing a plurality of times of measurement on the $w^{th}$ first wireless signal. Alternatively, the received strength of the $w^{th}$ first wireless signal is a measurement value obtained by measuring the $w^{th}$ first wireless signal once.

Specifically, the received strength of the $w^{th}$ first wireless signal may be an average value of a plurality of measurement values obtained by performing a plurality of times of measurement on the $w^{th}$ first wireless signal based on a preset second period during a coherence time. A length of the coherence time may be set in advance or determined in advance, and the preset second period may be set according to an actual situation. For example, the length of the coherence time is 1s, and the preset second period may be 0.2s. The foregoing is merely an example for description. In actual processing, the coherence time is within the protection scope of this embodiment as long as the coherence time is greater than duration of a plurality of preset second periods.

The preset quantization algorithm includes one of the following: a channel quantization CQ algorithm, a uniform quantization algorithm, a channel quantization with guard-band CQG algorithm, or a channel quantization alternating CQA algorithm. It should be understood herein that a specific manner of performing quantization by using the preset quantization algorithm in this processing manner may be the same as specific processing in the foregoing first processing manner. Therefore, details are not described again. It should be noted that the first device and the second device need to use a same preset quantization algorithm, for example, both use the CQ algorithm, or both use the CQA algorithm. Specific process of the quantizing, by the second device, the received strength of the $w^{th}$ first wireless signal based on a preset quantization algorithm, to obtain the $w^{th}$ second initial binary sequence is the same as that in the foregoing first processing manner, and is not described again.

Different from that in the foregoing first processing manner, in the second processing manner, when the second device executes the process of quantizing the received strength of the $w^{th}$ first wireless signal based on a preset quantization algorithm, to obtain the $w^{th}$ second initial binary sequence, the following may further be included: in a case in which the received strength of the $w^{th}$ first wireless signal falls within a second quantization range, setting the $w^{th}$ second indicator bit to a first value, where the $w^{th}$ second indicator bit is one of M second indicator bits; or in a case in which the received strength of the $w^{th}$ first wireless signal does not fall within the second quantization range, setting the $w^{th}$ second indicator bit to a second value.

The first value is different from the second value, and the first value and the second value may be set according to an actual situation, as long as both the first device and the second device determine a same meaning therefor. For example, the first value may be 0, and the second value may be 1. For another example, the first value may be 1, and the second value may be 0. This is not enumerated exhaustively herein.

In the $w^{th}$ loop process, the $w^{th}$ second combination sequence is obtained by combining the $w^{th}$ second initial binary sequence and the $(w-1)^{th}$ second combination sequence. The third sequence is the $w^{th}$ second combination sequence, and w is an integer greater than or equal to 1.

In a case in which w is equal to 1, the $(w-1)^{th}$ second combination sequence may be empty or 0. In a case in which w is greater than 1, the $(w-1)^{th}$ second combination sequence may be a second combination sequence obtained after the previous loop process, that is, a second combination sequence obtained after the $(w-1)^{th}$ loop process.

For example, in a case in which w is greater than 1, the $w^{th}$ second combination sequence is represented as $Q_{Tag}$

(w), the (w-1)th second combination sequence is represented as $Q_{Tag}(w - 1)$, and the wth second initial binary sequence may be represented as $Q_{R, w}$. The wth second combination sequence may be obtained by using the following formula:

$$Q_{Tag}\left(w\right) = Q_{Tag}\left(w-1\right)_{\|}Q_{R, w}.$$

After the foregoing process is completed, the third sequence obtained after the wth loop process may be obtained. After the wth loop process is completed, the third sequence may be obtained. In this case, a third sequence obtained after the previous loop process (that is, the (w-1)th loop process) may be deleted, and only the third sequence obtained after the current loop process is saved.

Correspondingly, the method may further include: transmitting, by the second device, third information to the first device, where the third information includes the M second indicator bits. The M second indicator bits included in the third information may specifically be a second GIB (guard-band indicator bit, Guardband Indicator Bit) sequence.

By using the foregoing second processing manner, the first device also obtains M first indicator bits based on whether a channel estimation value obtained based on the first reflected signal received by the first device falls within the second quantization range. Therefore, in this processing manner, the second key is a fourth sequence obtained based on the third sequence. Detailed description is as follows:

The method further includes: receiving, by the second device, first information transmitted by the first device, where the first information includes the M first indicator bits. The M first indicator bits may specifically be a first GIB sequence.

The fourth sequence includes a target binary sequence, the target binary sequence is determined from the third sequence based on M first indicator bits, and the M first indicator bits are used to indicate whether a channel estimation value obtained by the first device based on received strength of M first reflected signals falls within a first quantization range.

The target binary sequence is determined from the third sequence based on M combination indicator bits, and the M combination indicator bits are obtained by combining the M second indicator bits and the M first indicator bits.

The combining, by the second device, the M first indicator bits and M second indicator bits, to obtain M combination indicator bits includes: in a case in which both the qth second indicator bit and the qth first indicator bit are a first value, determining, by the second device, that the qth combination indicator bit is the first value, where q is an integer greater than or equal to 1 and less than or equal to M; or in a case in which at least one of the qth second indicator bit and the qth first indicator bit is a second value, determining, by the second device, that the qth combination indicator bit is the second value.

For example, the first value is 0, and the second value is 1. If M is 4, the M second indicator bits are four second indicator bits, and the M first indicator bits are four first indicator bits. It is assumed that the four second indicator bits are "0010", and the four first indicator bits are "0100". If r is 1, it indicates that the 1st second indicator bit is the first value, that is, 0, and the 1st first indicator bit is also 0. In this case, the first combination indicator bit is the first value, that is, 0. If r is 2, the 2nd second indicator bit is the first value, that is, 0, and the 2nd first indicator bit is the second value, that is, 1. In this case, the second combination indicator bit is the second value, that is, 1. By analogy, four combination indicator bits finally obtained are "0110".

The determining, by the second device, the target binary sequence from the third sequence based on the M combination indicator bits includes: in a case in which the tth combination indicator bit in the M combination indicator bits is the first value, determining, by the second device, that the tth group of binary bits in the third sequence is one of the target binary sequence, where the tth group of binary bits is generated based on received strength of the tth first wireless signal, and t is an integer greater than or equal to 1 and less than or equal to M.

For example, the second device may obtain a quantity of bits corresponding to one combination indicator bit in advance, for example, one combination indicator bit corresponds to four bits. If t is equal to 1, the first combination indicator bit corresponds to the first to fourth bits in the third sequence, that is, the first group of binary bits is the first to fourth bits in the third sequence. If j is equal to 2, the second combination indicator bit corresponds to the fifth to eighth bits in the third sequence, that is, the second group of binary bits is the fifth to eighth bits in the third sequence. The rest can be deduced by analogy, and is not enumerated exhaustively.

In addition, the following may be further included: in a case in which the tth combination indicator bit in the M combination indicator bits is a second value, skipping performing, by the second device, a process of extracting a target binary sequence.

Specifically, if the tth combination indicator bit in the M combination indicator bits is the second value, the second device may not perform the process of extracting a target binary sequence, and may further delete (or discard) this binary sequence.

For example, the first value is 0, and the second value is 1. If M is 4, the M second indicator bits are four second indicator bits. It is assumed that the four second indicator bits are "0010", and the four first indicator bits are "0100". Four combination indicator bits finally obtained are "0110". If t is equal to 1, the first combination indicator bit corresponding to t is equal to 0, and the first group of binary bits in the third sequence may be used as one target binary sequence. If t is equal to 2, the second combination indicator bit corresponding to t is equal to 1 (that is, the second value), and the process of extracting a target binary sequence may not be performed. Further, a binary sequence corresponding to the $2^{nd}$ first wireless signal may be deleted or discarded. By analogy, the first group of binary bits and the fourth group of binary bits in the third sequence may be finally used as target binary sequences.

The forming, by the second device, the fourth sequence based on the target binary sequence may specifically include: combining, by the second device, the target binary sequence, to obtain the fourth sequence. The combining, by the second device, the target binary sequence, to obtain the fourth sequence may refer to: combining, by the second device, the target binary sequence in an order, to obtain the fourth sequence. The order may be a sequential order of the target binary sequence in the third sequence.

After the second device combines the target binary sequence and obtains the fourth sequence, the second device may directly use the fourth sequence as the second key.

After the foregoing process is completed, the foregoing S710 may be executed, that is, the second device receives the fourth information transmitted by the first device. The fourth information includes the check information generated based on the first key. The check information is one of the following: a first parity check code generated based on the first key or information obtained by performing hash calculation based on the first key. The following separately describes specific manners of performing check by the second device.

Manner 1:

The check information is the first parity check code generated based on the first key.

The method may further include: generating, by the second device, a second parity check code based on the second key, and determining a check result based on the second parity check code and the first parity check code.

A manner of generating the second parity check code based on the second key is the same as a manner of generating the first parity check code based on the first key by the first device. For example, the second parity check code may be set to 1 in a case in which the second key includes an odd quantity of specified values, or the second parity check code may be set to 0 in a case in which the second key does not include an odd quantity of specified values, where the specified value may be 1. Alternatively, the second parity check code may be set to 1 in a case in which the second key includes an even quantity of specified values, or the second parity check code may be set to 0 in a case in which the second key does not include an even quantity of specified values. Similarly, the specified value may be 1. Certainly, there may also be another implementation, and as long as the second parity check code is generated based on the second key, it is within the protection scope of this embodiment, and the second parity check code is not enumerated exhaustively in this embodiment.

The determining a check result based on the second parity check code and the first parity check code may specifically be: in a case in which the second parity check code is consistent with the first parity check code, obtaining a first check result, where the first check result indicates that the second key is consistent with the first key; or in a case in which the second parity check code is inconsistent with the first parity check code, obtain a second check result, where the second check result indicates that the second key is inconsistent with the first key.

The second device may generate the fifth information based on the check result, and the fifth information may include the first check result or the second check result.

Manner 2:

The check information is the information obtained by performing hash calculation based on the first key. The check information may specifically be information obtained by performing calculation on the first key based on a hash function. Details on the hash function are not described in this embodiment.

The method may further include: performing, by the second device, hash calculation based on the second key, to obtain comparison information; and determining a check result based on the comparison information and the information obtained by performing hash calculation based on the first key.

The determining a check result based on the comparison information and the information obtained by performing hash calculation based on the first key may specifically be: in a case in which the comparison information is consistent with the information obtained by performing hash calculation based on the first key, obtaining a first check result, where the first check result indicates that the second key is consistent with the first key; or in a case in which the comparison information is inconsistent with the information obtained by performing hash calculation based on the first key, obtaining a second check result, where the second check result indicates that the second key is inconsistent with the first key.

Manner 3:

The check information is reference information obtained by performing hash calculation based on the first key. The check information may specifically be a second result obtained by performing hash calculation on a second random number, and the second random number is obtained by decrypting a first result based on the first key.

In this manner, before S710 is executed, the following may be further included: in a case in which a count value of a slot counter is reset to zero, transmitting, by the second device, sixth information to the first device, where the sixth information includes a first result obtained after a first random number is encrypted based on the second key.

The in a case in which a count value of a slot counter is reset to zero, transmitting, by the second device, sixth information to the first device may specifically include: determining whether the count value of the slot counter is reset to zero; in a case in which the count value of the slot counter is reset to zero, generating, by the second device, the sixth information based on the first result obtained after the first random number is encrypted based on the second key; and transmitting, by the second device, the sixth information to the first device.

The count value of the slot counter is decremented based on the first wireless signal; and/or, the count value of the slot counter is decremented based on a second wireless signal, where the second wireless signal is used to instruct the second device to decrement a count value of a slot counter, and is not used by the second device to generate the second key.

That is, each time the second device receives a first wireless signal and/or a second wireless signal, the second device subtracts 1 from the count value of the slot counter.

The first result obtained after the second device encrypts the first random number based on the second key may be represented by using the following formula:

$$ \text{TReply} = \text{Encryption}_{K_{Tag}}(\text{RN16}). $$

TReply represents the first result, RN16 represents the first random number, and $\text{Encryption}_{K_{Tag}}(\cdot)$ represents an encryption operator of the second device under a condition that the second key exists.

After receiving the fourth information, the second device may obtain the check information from the fourth information. Then, the following processing may be executed: performing, by the second device, hash calculation on the first random number, to obtain a third result; and performing, by the second device, consistency check on the third result against the second result, to obtain a check result.

The performing, by the second device, hash calculation on the first random number (represented as RN16) may be represented as Hash(RN16). The second result may be obtained by performing hash calculation based on the second random number (represented as RN16') on the side of the first device, and may be represented as Hash(RN16').

The performing, by the second device, consistency check on the third result against the second result, to obtain a check result includes: in a case in which the third result is consistent with the second result, obtaining, by the second device, a first check result, where the first check result indicates that the second key is consistent with the first key; or in a case in which the third result is inconsistent with the second result, obtaining, by the second device, a second check result, where the second check result indicates that the second key is inconsistent with the first key.

After the foregoing process is completed, S720 may be executed finally, that is, the second device transmits the fifth information to the first device.

In one case, the fifth information includes one of the following: a first check result, where the first check result indicates that the second key is consistent with the first key; or a second check result, where the first check result indicates that the second key is inconsistent with the first key.

That is, the fifth information directly includes the check result of checking on the second key against the first key. That is, the fifth information includes the first check result or the second check result.

The foregoing first check result and the foregoing second check result may be represented by indication information or an indicator value.

For example, the foregoing first check result and the foregoing second check result may be represented by indication information, and the indication information may specifically be Y or N, where Y may represent the first check result, and N may represent the second check result.

For another example, the foregoing first check result and the foregoing second check result may be represented by an indicator value. The indicator value may be set according to an actual situation. For example, a first indicator value may be "001" for indicating the first check result, and a second indicator value may be "010" for indicating the second check result. It should be understood that the first indicator value and the second indicator value herein are merely examples for description, and are not intended to limit actual processing. In another case, the fifth information includes one of the following:

The fifth information includes one of the following: a first check result obtained after encryption is performed based on the second key, where the first check result indicates that the second key is consistent with the first key; or a second check result, where the second check result indicates that the second key is inconsistent with the first key.

Specifically, in a case in which the second device determines that the second key is consistent with the first key, the first check result may be obtained, and the first check result is encrypted by using the second key, to obtain the first check result obtained after the encryption is performed based on the second key. Then, the first check result obtained after the encryption is performed based on the second key is added to the fifth information. For example, the first check result may specifically be sequence response information encrypted by using the second key, and the sequence response information may carry information indicating that the second key is consistent with the first key. In addition, the sequence response information may further carry other information, which is not limited herein. A length of the sequence response information may also be set according to an actual situation, for example, may be 135 bits, or may be longer or shorter, which all falls within the protection scope of this embodiment.

In a case in which the second device determines that the second key is inconsistent with the first key, the second check result may be obtained. The second check result may be represented by an identifier indicating error (for example, an "error" identifier), and the second device adds the identifier indicating error to the fifth information.

It may be learned that, by using the solution provided in this embodiment, in a case in which a second device generates a second key based on received strength of a wireless signal, the second device receives fourth information transmitted by a first device and generated based on a first key, and transmits fifth information to the first device, where the fifth information includes a check result of checking on the first key against the second key. Because a reflected signal is obtained based on reflection of the wireless signal, it is more applicable to a zero-power-consumption scenario. In addition, because the first key is obtained according to received strength of the reflected signal of the wireless signal transmitted by the first device, randomness of the generated key may be ensured, and further security of the key is ensured. In addition, after the first device and the second device generate respective keys, the second device further performs check thereon. Therefore, key consistency between the two devices is ensured, thereby ensuring security of subsequent process of the two devices.

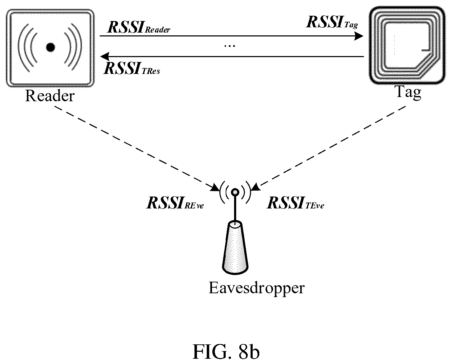

Finally, with reference to FIG. 8a and FIG. 8b, an example in which a first device is a reader (tag reader) and a second device is a tag (tag) is used to describe the foregoing key generation method and the foregoing information check method, which includes:

Step 801: The reader transmits the $i^{th}$ first wireless signal, and i is an integer greater than or equal to 1.

The $i^{th}$ first wireless signal may be a first wireless signal transmitted in any one of a plurality of loop processes. That is, the $i^{th}$ first wireless signal is any one of a plurality of first wireless signals transmitted by the reader in a plurality of times, and processing for the plurality of first wireless signals transmitted in the plurality of times is the same. For ease of description, the plurality of first wireless signals transmitted in the plurality of times are not described one by one in this embodiment.

Transmission strength of the $i^{th}$ first wireless signal is represented as $RSSI_{Reader, i}$.

Specifically, the transmission strength of the $i^{th}$ first wireless signal may use a fixed power or a randomly changing power.

Specifically, the $i^{th}$ first wireless signal includes but is not limited to a signal that carries signalling (for example, the $i^{th}$ signal that carries signalling) or a carrier signal that is used to supply power to the tag (for example, the $i^{th}$ carrier signal).

Step 802: The tag receives the $i^{th}$ first wireless signal, and transmits the $i^{th}$ first reflected signal to the reader.

Specifically, the tag receives the $i^{th}$ first wireless signal (for example, the $i^{th}$ carrier signal), measures received strength (which may be represented as $RSSI_{Tag,i}$) of the $i^{th}$ first wireless signal (for example, the $i^{th}$ carrier signal), and stores the received strength. Then, the tag transmits the $i^{th}$ first reflected signal to the reader within a coherence time.

The transmitting the $i^{th}$ first reflected signal to the reader may refer to: The tag attaches a message $TResponse, i$ (which may be referred to as the $i^{th}$ response message) to the $i^{th}$ first reflected signal (or a carrier of the $i^{th}$ first reflected signal) and backscatters the $i^{th}$ first reflected signal to the reader.

It should be understood that a zero-power-consumption device (that is, a zero-power-consumption tag) cannot proactively transmit a signal. Therefore, a processing procedure of the foregoing steps 801 and 802 cannot be reversed.

Specifically, to reduce an impact of a high or low electrical level of data per se or noise, the received strength (which may be represented as $RSSI_{Tag,i}$) of the $i^{th}$ first wireless signal may be an average value obtained after a plurality of times of detection.

In addition, in this step, the tag may further quantize the received strength ($RSSI_{Tag,i}$) of the $i^{th}$ first wireless signal, to generate the $i^{th}$ second initial binary sequence $Q_{T,i}$. A length of the $i^{th}$ second initial binary sequence is represented as b bits.

Step 803: The reader receives the $i^{th}$ first reflected signal, and determines the $i^{th}$ path loss based on received strength of the $i^{th}$ first reflected signal and the transmission strength of the $i^{th}$ first wireless signal.

Specifically, the reader receives the $i^{th}$ first reflected signal within the coherence time, performs detection for a plurality of times, to obtain the received strength $RSSI_{TRes,i}$ of the $i^{th}$ first reflected signal, and obtains the $i^{th}$ path loss through calculation based on the received strength $RSSI_{TRes,i}$ of the $i^{th}$ first reflected signal.

The $i^{th}$ path loss specifically refers to an average loss of a round-trip path for a signal. For example, the transmission strength of the $i^{th}$ first wireless signal is represented as $RSSI_{Reader, i}$, an antenna gain of the reader is represented as $G_{Reader}$ (its value may be 0), an antenna gain of the tag is represented as $G_{Tag}$ (its value may be 0), the received strength of the $i^{th}$ first reflected signal is represented as $RSSI_{TRes,i}$ a reflection loss of the second device is represented as $loss_{back}$, and the $i^{th}$ path loss is represented as $\overline{\overline{loss_{RT,i}}}$ . The $i^{th}$ path loss may be obtained through calculation by using the following formula:

$$\overline{\overline{loss}}_{RT,i} = \left( RSSI_{Reader,i} + G_{Reader} - loss_{back} + G_{Tag} - RSSI_{TRes,i} \right)/2 \;.$$

Step 804: The reader determines the $i^{th}$ channel estimation value based on the $i^{th}$ path loss and the transmission strength of the $i^{th}$ first wireless signal.

That is, the reader estimates actual received signal strength on the tag side based on the $i^{th}$ path loss and the transmission strength of the $i^{th}$ first wireless signal. The actual received signal strength on the tag side estimated by the reader side is the $i^{th}$ channel estimation value.

For example, the transmission strength of the $i^{th}$ first wireless signal is represented as $RSSI_{Reader, i}$, the antenna gain of the reader is represented as $G_{Reader}$, the $i^{th}$ path loss is represented as $\overline{\overline{loss_{RT,i}}}$ , and the $i^{th}$ channel estimation value is represented as $RSSI_{Tag,}$ . The $i^{th}$ channel estimation value may be obtained through calculation by using the following formula:

$$\mathrm{RSSI_{Tag},\; i = RSSI_{Reader,i} + G_{Reader}} - \overline{\overline{loss}}_{RT,i} \;.$$

Step 805: The reader quantizes the $i^{th}$ channel estimation value based on a preset quantization algorithm, to obtain the $i^{th}$ first initial binary sequence.

That is, the reader quantizes the received signal strength $RSSI_{Tag}$, i (the $i^{th}$ channel estimation value) estimated in step 804, to generate the $i^{th}$ first initial binary sequence $Q_{R, i}$ with b bits on the reader side.

The quantization method may use CQ quantization or uniform quantization that requires no information interaction, or a CQG quantization method or a CQA quantization method that requires information interaction.

Step 806: The reader determines whether a first condition is met, and if the first condition is met, the reader executes S807, or if the first condition is not met, the reader returns to execute S801.

Similarly, the tag determines whether a second condition is met, and if the second condition is met, the tag executes S808, or if the second condition is not met, the tag returns to execute S802.

The first condition includes at least one of the following: a total length of a first sequence is greater than or equal to a preset length; or a quantity of times a first wireless signal is transmitted reaches a preset quantity, where the first wireless signal is used by the second device to generate a second key.

Before executing this step, the reader side combines the $i^{th}$ first initial binary sequence and the $(i-1)^{th}$ first combination sequence, to obtain the $i^{th}$ first combination sequence, and uses the $i^{th}$ first combination sequence as the first sequence.

That is, if the reader and the tag are two parties of legitimate communication, in a case in which the total length of the first sequence obtained after the reader obtains, through quantization, the $i^{th}$ first initial binary sequence with b bits based on the $i^{th}$ channel estimation value is less than a required key length KeyLen (that is, the preset length), step 801 to step 806 are repeated for a plurality of times (referred to as m times) until $m \cdot b >\_$ KeyLen (the preset length). Then, the next step is executed.

In each loop process, both parties of legitimate communication separately concatenate binary bits that are generated sequentially. For example, the $i^{th}$ first combination sequence obtained after the $i^{th}$ loop process by the reader is $Q_{Reader}(i) = Q_{Reader}(i - 1)\|Q_{R,i}$, and the $i^{th}$ second combination sequence obtained after the $i^{th}$ loop process by the tag is $Q_{Tag}(i) = Q_{Tag}(i - 1)\|Q_{T,i}$.

Due to short-term reciprocity of a wireless channel, it may be learned that $RSSI_{Tag}$, i$\approx RSSI_{Tag,i}$. Therefore, $Q_{Reader}(i) \cong Q_{Tag}(i)$.

Step 807: The reader generates a first key based on the first sequence, and transmits fourth information to the tag, where the fourth information includes check information generated based on the first key.

Specifically, the reader processes the first sequence $Q_{Reader}$, to generate the first key $K_{Reader}$ on the reader side. The reader generates the check information by using the first key $K_{Reader}$, adds the check information to the fourth information (or referred to as a negotiation information ACK), and transmits the fourth information to the tag.

The fourth information includes but is not limited to quantization indication information or check information. The quantization indication information should be adapted to the quantization method specifically used in step 805.

The check information may be a first parity check code generated based on the first key or information obtained by performing hash calculation based on the first key.

Step 808: The tag receives the fourth information, and transmits fifth information to the reader.

The fifth information includes a check result of checking on the second key against the first key, and the second key is related to received strength of receiving the first wireless signal by the second device.

Specifically, the tag parses the fourth information (or referred to as negotiation information ACK) transmitted in step 807, and the tag performs, by using the second key $K_{Tag}$, consistency check on content included in the fourth information (or referred to as negotiation information ACK). If the check succeeds, the tag returns a success response (that is, a first check result). If the check fails, the tag transmits an error identifier (that is, a second check result). The second key $K_{Tag}$ of the tag may be generated based on the quantization indication information, or may be directly generated in a case in which it is determined that the second condition is met.

With reference to FIG. 8b, the reader transmits any first wireless signal (transmission strength of the any first wireless signal is represented as $RSSI_{Reader}$ in FIG. 8b). The tag receives the first wireless signal (received strength of the first wireless signal is represented as $RSSI_{Tag}$ in FIG. 8b), and transmits a corresponding first reflected signal (received strength of the first reflected signal is represented as $RSSI_{TRes}$ in FIG. 8b) to the reader. The reader may generate a first key based on the received strength of the first reflected signal, and the tag may generate a second key based on the received strength of the first wireless signal. In a process of generating the keys by the reader and the tag, only a wireless signal and a reflected signal of the wireless signal are exchanged between the two parties. Therefore, even if another eavesdropper or eavesdropping device (for example, an eavesdropper in FIG. 8b) receives the first wireless signal or the first reflected signal (strength of the first wireless signal monitored by the eavesdropper in FIG. 8b is represented as $RSSI_{REve}$ and strength of the first reflected signal monitored by the eavesdropper is represented as $RSSI_{TEve}$), the keys of the two communication parties cannot be obtained because a manner of generating the keys by the two communication parties cannot be learned. In this way, randomness of the generated keys may be ensured, and further security of the keys is ensured.

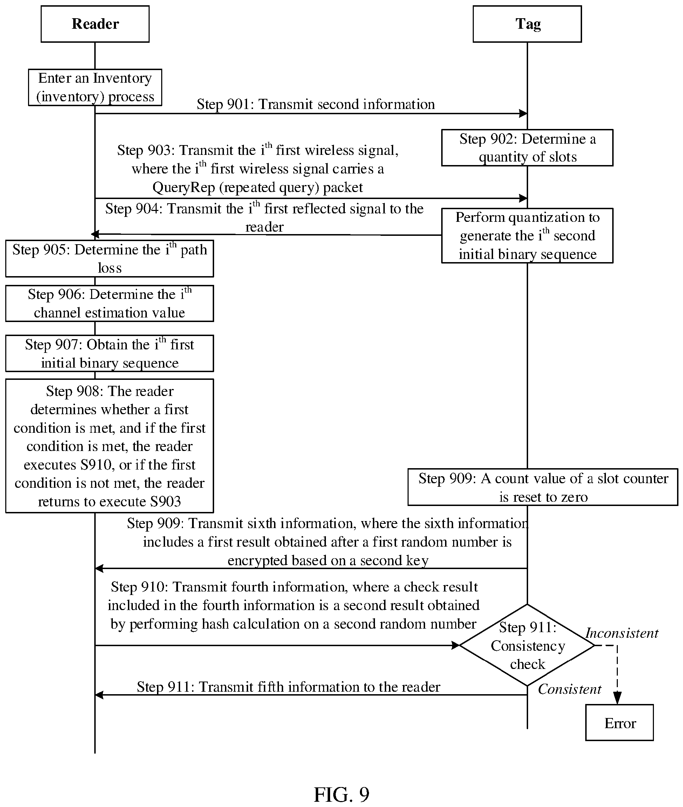

Embodiments of the foregoing key generation method and the foregoing information check method may be compatible with various zero-power-consumption device communication protocols, for example, compatible with a reader-tag signalling interaction procedure in an Inventory (inventory) process in an EPC (Evolved Packet Core, electronic product code) protocol. With reference to FIG. 9, a CQ algorithm is used as an example, and an example in which a first device is a reader and a second device is a tag is used for description. The following steps are included.

Step 901: After the reader completes a Select (select) operation, the reader enters an Inventory (inventory) process, and the reader transmits second information.

The Select (select) operation may refer to a process in which the reader obtains at least one target tag from a plurality of candidate tags. For example, three target tags may be selected from 10 candidate tags. Further, the Inventory (inventory) process (or the Inventory (inventory) procedure) may be executed for the three target tags separately. A "tag" in this embodiment may refer to any one of the target tags. Because a same processing manner may be used for each target tag, details are not described one by one.

The second information may specifically be a Query (query) command.

The second information (that is, a Query (query) command) may include a preset length and/or a preset quantity.

In addition, the Query (query) command may further include another important communication parameter, for example, may include a slot parameter Q, a matching security suite, or the like.

Step 902: The tag receives the second information and determines a quantity of slots.

After receiving the second information (which is specifically the Query (query) command), the tag may generate a second condition. In addition, the tag may also select a number ranging from m to $2^Q - 1$ as the quantity of slots, where Q is a slot parameter specified in the second information (which is specifically the Query (query) command). For example, $Q < 16$, and m is a preset quantity of data packets used to extract a key.

Step 903: The reader transmits the $i^{th}$ first wireless signal, where the $i^{th}$ first wireless signal may carry a QueryRep (repeated query) packet.

Transmission strength of the $i^{th}$ first wireless signal is represented as $RSSI_{Reader, i}$. The QueryRep (repeated query) packet may further instruct the tag to decrement a count value of a slot counter of the tag.

Step 904: The tag receives the $i^{th}$ first wireless signal, and transmits the $i^{th}$ first reflected signal to the reader.

Specifically, after receiving the $i^{th}$ first wireless signal, the tag measures received strength (represented as $RSSI_{Tag,i}$) of the $i^{th}$ first wireless signal, and stores the received strength. Then, the tag transmits the $i^{th}$ first reflected signal to the reader within a coherence time.

The transmitting the $i^{th}$ first reflected signal to the reader may refer to: The tag attaches a message *TResponse, i* to the first reflected signal and backscatters the first reflected signal to the reader.

It should be understood that a zero-power-consumption device cannot proactively transmit a signal. Therefore, a signalling procedure described in step 801 and step 802 cannot be reversed.

Specifically, to reduce an impact of a high or low electrical level of data per se or noise, $RSSI_{Tag,i}$ should be an average value obtained after a plurality of times of detection.

In addition, in this step, the tag may further quantize the received strength (represented as $RSSI_{Tag,i}$) of the $i^{th}$ first wireless signal, to generate the $i^{th}$ second initial binary sequence $Q_{T,i}$. A length of the $i^{th}$ second initial binary sequence is represented as b bits.

Step 905: The reader receives the $i^{th}$ first reflected signal, and determines the $i^{th}$ path loss based on received strength of the $i^{th}$ first reflected signal and the transmission strength of the $i^{th}$ first wireless signal.

Specifically, after receiving the $i^{th}$ first reflected signal *TResponse, i* within the coherence time, the reader performs detection for a plurality of times, to obtain an average received strength $RSSI_{TRes,i}$ of the $i^{th}$ first reflected signal, and determines the $i^{th}$ path loss.

The $i^{th}$ path loss specifically refers to an average loss of a round-trip path for a signal. For example, the transmission strength of the $i^{th}$ first wireless signal is represented as $RSSI_{Reader, i}$, an antenna gain of the reader is represented as $G_{Reader}$ (its value may be 0), an antenna gain of the tag is represented as $G_{Tag}$ (its value may be 0), the received strength of the $i^{th}$ first reflected signal is represented as $RSSI_{TRes,i}$ a reflection loss of the second device is represented as $loss_{back}$, and the $i^{th}$ path loss is represented as $\overline{\overline{loss}}_{RT,i}$. The $i^{th}$ path loss may be obtained through calculation by using the following formula:

$$\overline{\overline{loss}}_{RT,i} = \left(RSSI_{Reader,i} + G_{Reader} - loss_{back} + G_{Tag} - RSSI_{TRes,i}\right)/2 .$$

Step 906: The reader determines the $i^{th}$ channel estimation value based on the $i^{th}$ path loss and the transmission strength of the $i^{th}$ first wireless signal.

Actual received signal strength on the tag side, which is estimated by the reader, is the $i^{th}$ channel estimation value.

For example, the transmission strength of the $i^{th}$ first wireless signal is represented as $RSSI_{Reader, i}$, the antenna gain of the reader is represented as $G_{Reader}$, the $i^{th}$ path loss is represented as $\overline{\overline{loss}}_{RT,i}$, and the $i^{th}$ channel estimation value is represented as $RSSI_{Tag,}$. The $i^{th}$ channel estimation value may be obtained through calculation by using the following formula:

$$RSSI_{Tag,} \ i = RSSI_{Reader,i} + G_{Reader} - \overline{\overline{loss}}_{RT,i} .$$

Step 907: The reader quantizes the $i^{th}$ channel estimation value based on a preset quantization algorithm, to obtain the $i^{th}$ first initial binary sequence.

That is, the reader quantizes the received signal strength $RSSI_{Tag, i}$ (the $i^{th}$ channel estimation value) estimated in step 906, to generate the $i^{th}$ first initial binary sequence $Q_{R, i}$ with b bits on the reader side.

Specifically, the first device quantizes the $i^{th}$ channel estimation value based on the preset quantization algorithm and first strength feature related information, to obtain the $i^{th}$ first initial binary sequence.

The first strength feature related information includes at least one of the following: an average value of first strength feature information or a standard deviation of the first strength feature information.

The average value of the first strength feature information may be represented as $\mu 1$, and the standard deviation of the first strength feature information may be represented as $\sigma 1$. The $i^{th}$ first initial binary sequence obtained by the reader may be calculated by using the following formula:

$$Q_{R,i} = \begin{cases} 00 & \sqrt{RSSI_{Tag,i}} < \mu1 - 0.6745\sigma1 \\ 01 & \sqrt{RSSI_{Tag,i}} \in [\mu1 - 0.6745\sigma1, \mu1) \\ 11 & \sqrt{RSSI_{Tag,i}} \in [\mu1, \mu1 + 0.6745\sigma1) \\ 10 & \sqrt{RSSI_{Tag,i}} \geq \mu1 + 0.6745\sigma1 \end{cases}.$$

The same applies to a quantization algorithm at the tag end. For example, that the tag quantizes the received strength of the $i^{th}$ first wireless signal based on the preset quantization algorithm, to obtain the $i^{th}$ second initial binary sequence may specifically include: quantizing, by the tag, the received strength of the $w^{th}$ first wireless signal based on the preset quantization algorithm and second strength feature related information, to obtain the $i^{th}$ second initial binary sequence, where the second strength feature related information includes at least one of the following: an average value of second strength feature information or a standard deviation of the second strength feature information.

For example, the average value of the second strength feature information may be represented as $\mu2$, the standard deviation of the strength feature information may be represented as $\sigma2$, the $i^{th}$ second initial binary sequence is represented as $Q_{R,i}$, and the received strength of the $i^{th}$ first wireless signal is represented as $RSSI_{Tag,i}$. The $i^{th}$ second initial binary sequence may be determined by using the following formula:

$$Q_{R,i} = \begin{cases} 00 & \sqrt{RSSI_{Tag,i}} < \mu2 - 0.6745\sigma2 \\ 01 & \sqrt{RSSI_{Tag,i}} \in [\mu2 - 0.6745\sigma2, \mu2) \\ 11 & \sqrt{RSSI_{Tag,i}} \in [\mu2, \mu2 + 0.6745\sigma2) \\ 10 & \sqrt{RSSI_{Tag,i}} \geq \mu2 + 0.6745\sigma2 \end{cases}.$$

Step 908: The reader determines whether a first condition is met, and if the first condition is met, the reader executes S910, or if the first condition is not met, the reader returns to execute S903.

Similarly, the tag determines whether a second condition is met, and if the second condition is met, the tag executes S909, or if the second condition is not met, the tag returns to execute S904.

Before executing this step, the reader side combines the $i^{th}$ first initial binary sequence and the $(i-1)^{th}$ first combination sequence, to obtain the $i^{th}$ first combination sequence, and uses the $i^{th}$ first combination sequence as the first sequence.

The first condition includes at least one of the following: a total length of the first sequence is greater than or equal to a preset length; or a quantity of times the first wireless signal is transmitted reaches a preset quantity, where the first wireless signal is used by the second device to generate a second key.

That is, if the reader and the tag are two parties of legitimate communication, in a case in which the $i^{th}$ first initial binary sequence with b bits that is obtained by the reader by quantizing the $i^{th}$ channel estimation value is less than a required key length KeyLen (that is, the preset length), step 903 to step 908 are repeated for m times until m · b ≥ KeyLen (the preset length). Then, the next step is executed.

After each loop process, both parties of legitimate communication separately concatenate binary bits that are generated sequentially. For example, the $i^{th}$ first combination sequence obtained after the $i^{th}$ loop process by the reader is $Q_{Reader}(i) = QReader(i - 1)\|Q_{R,i}$, and the $i^{th}$ second combination sequence obtained after the $i^{th}$ loop process by the tag is

$$Q_{Tag}(i) = Q_{Tag}(i - 1)\|Q_{T,i}.$$

Due to short-term reciprocity of a wireless channel, it may be learned that $RSSI_{Tag,i} \approx RSSI_{Tag,i}$. Therefore, $Q_{Reader}(i) \cong Q_{Tag}(i)$.

Step 909: In a case in which a count value of a slot counter is reset to zero, the tag transmits sixth information to the reader, where the sixth information includes TReply = Encryption$_{KTag}$(RN16), that is, the sixth information includes a first result obtained after a first random number is encrypted based on the second key.

That is, the tag processes a third sequence $Q_{Tag}$, to obtain a fourth sequence, and generates the second key $K_{Tag}$ on the tag side based on the fourth sequence. The tag does not return the first result (represented as TReply) obtained through encryption by using the second key $K_{Tag}$ until a quantity of slots for the tag is reset to zero, that is, the tag transmits the sixth information that includes the first result in a selected slot (the first slot after the quantity of slots is reset to zero).

A calculation manner of the first result is: TReply = Encryption$_{\kappa Tag}$(RN16), where Encryption$_{\kappa Tag}$(·) represents an encryption operator at the tag end under a condition that $K_{Tag}$ exists, and RN16 is the first random number.

In this step, the tag enters the Reply (reply) state from Arbitrate (arbitrate).

Step 910: In a case in which the reader receives the sixth information transmitted by the tag, the reader transmits fourth information to the tag, where the fourth information includes a second result (which may be represented as Hash(RN16')) obtained by performing hash calculation on a second random number.

Specifically, the reader processes the first sequence $Q_{Reader}$, to obtain a second sequence, and generates a first key $K_{Reader}$ on the reader side based on the second sequence. The reader performs, by using a locally generated first key $K_{Reader}$, decryption on the first result TReply included in the received sixth information, to restore RN16' (that is, the second random number), that is, RN16' = Descryption$_{\kappa Reader}$(TResponse) , where Decryption$_{\kappa Reader}$(·) represents a decryption operator at the reader end under a condition that $K_{Reader}$ exists. Then, the reader transmits the fourth information.

A check result that may be included in the fourth information is the second result obtained by performing hash calculation on the second random number (which may be represented as Hash(RN16')). The fourth information may be an ACK (acknowledgment information).

Step 911: After receiving the fourth information, the tag performs consistency check and transmits fifth information to the reader.

Specifically, the tag end performs hash calculation on the first random number (RN16), to obtain a third result (which may be represented as Hash(RN16)), and performs consistency check on the third result against the second result included in the fourth information, to obtain a check result.

The performing consistency check on the third result against the second result included in the fourth information may be used to verify whether RN16' is consistent with RN16. If the verification succeeds, the fifth information that includes a first check result obtained after encryption is performed based on the second key is transmitted, for example, a 135-bit sequence response encrypted by using $K_{Reader}$ (the second key), which may further include another bit such as EPC. If the verification fails, the fifth information that includes a second check result is transmitted, where the second check result may be represented by an "error" identifier.

After the foregoing process is completed, the reader and the tag may enter an access (access) phase and then shift to an Acknowledge (acknowledge) state. Details are not described in this embodiment.

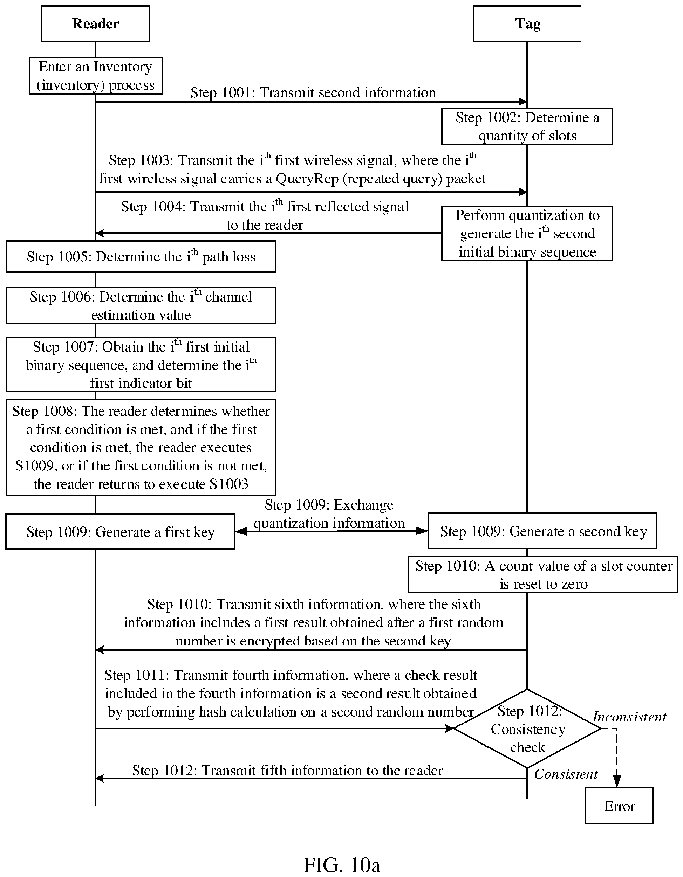

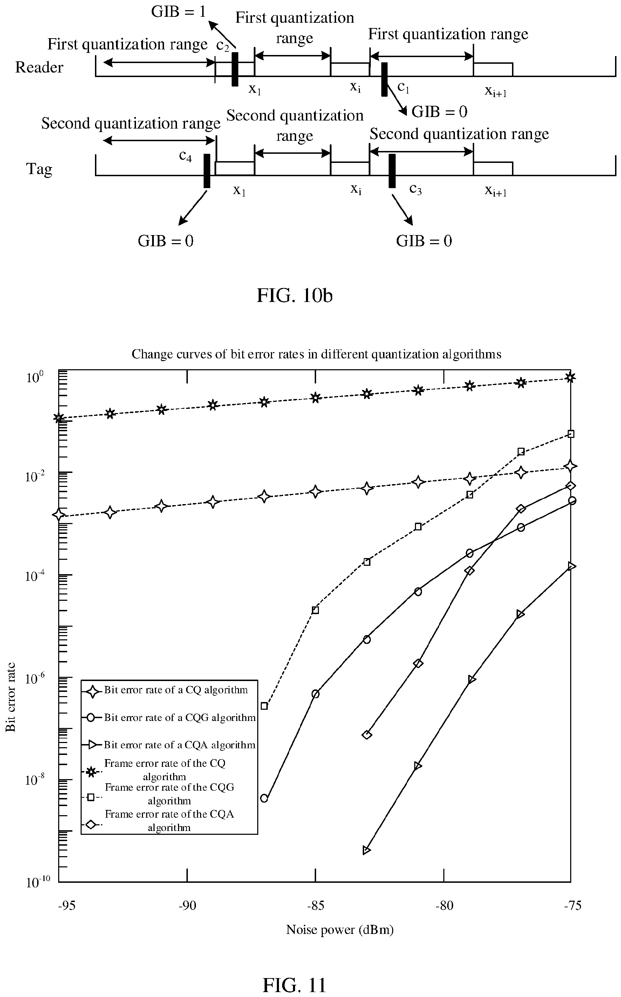

In a solution in which embodiments of the foregoing key generation method and the foregoing information check method are compatible with an EPC protocol in the field of zero-power-consumption devices, a quantization algorithm that requires information interaction may further be used to improve performance. With reference to FIG. 10a and FIG. 10b, a CQG algorithm is used as an example, and an example in which a first device is a reader and a second device is a tag is used for description.

Step 1001: After the reader completes a Select (select) operation, the reader enters an Inventory (inventory) process, and the reader transmits second information.

Step 1002: The tag receives the second information and determines a quantity of slots.

Step 1003: The reader transmits the ith first wireless signal, where the ith first wireless signal may carry a QueryRep (repeated query) packet.

Transmission strength of the ith first wireless signal is represented as RSSI$_{Reader, i}$. The QueryRep (repeated query) packet may further instruct the tag to decrement a count value of a slot counter of the tag.

Step 1004: The tag receives the ith first wireless signal, and transmits the ith first reflected signal to the reader.

In this step, the tag may further quantize received strength ($RSSI_{Tag,i}$) of the ith first wireless signal, to generate the ith second initial binary sequence $Q_{T,i}$ on the tag side. A length of the ith second initial binary sequence is represented as b bits.

Step 1005: The reader receives the ith first reflected signal, and determines the ith path loss based on received strength of the ith first reflected signal and the transmission strength of the ith first wireless signal.

Step 1006: The reader determines the ith channel estimation value based on the ith path loss and the transmission strength of the ith first wireless signal.

Specific processes of the foregoing steps 1001 to 1006 are the same as those in steps 901 to 906, and therefore is not described again.

Step 1007: The reader quantizes the ith channel estimation value based on a preset quantization algorithm, to obtain the ith first initial binary sequence, and determines the ith first indicator bit.

In addition, the tag quantizes the received strength of the ith first wireless signal based on the preset quantization algorithm, to obtain the ith second initial binary sequence, and determines the ith second indicator bit based on the received strength of the ith first wireless signal.

The ith first indicator bit may specifically be the ith first GIB, and the ith second indicator bit may specifically be the ith second GIB.

It is assumed that a quantization guard-band range is set in advance. The reader determines whether the $i^{th}$ channel estimation value $RSSI_{Tag, i}$ is located in the quantization guard-band. If the $i^{th}$ channel estimation value is located in the quantization guard-band, that is, beyond a first quantization range, the $i^{th}$ first GIB is set to 1 for indicating that the $i^{th}$ first initial binary sequence corresponding to the $i^{th}$ channel estimation value needs to be deleted. If the $i^{th}$ channel estimation value is located outside the quantization guard-band, that is, within the first quantization range, the $i^{th}$ first GIB is set to 0, and this value is normally quantized to obtain the $i^{th}$ first initial binary sequence. Then, the reader transmits a GIB sequence of the reader to the tag.

Similarly, on the tag side, the tag determines whether the extracted received strength $RSSI_{Tag,i}$ of the $i^{th}$ first wireless signal is located in a guard band, and generates the $i^{th}$ second GIB.

Referring to FIG. 10b, an example is used for description. For example, quantization guard-bands set by the reader are represented as $x_1$, $x_i$, and $x_{i+1}$. Quantization guard-bands are also set on the tag side, and may be the same as those set by the reader, and are also $x_1$, $x_i$, and $x_{i+1}$. An area between the quantization guard-bands of the reader is a first quantization range, and similarly, an area between the quantization guard-bands of the tag is a second quantization range. For example, in FIG. 10b, the first quantization range and the second quantization range are between $x_1$ and $x_i$. c1 and c2 represent channel estimation values corresponding to two first reflected signals received on the reader side. It may be learned that c1 is located in the first quantization range, and therefore, a GIB corresponding to c1 is 0. c2 is located outside the first quantization range, and therefore, a GIB corresponding to c2 is 1. c3 and c4 on the tag side are received strength of two first wireless signals, and are both located in the second quantization range. Therefore, GIBs corresponding to c3 and c4 are both 0.

Step 1008: The reader determines whether a first condition is met, and if the first condition is met, the reader executes S1009, or if the first condition is not met, the reader returns to execute S1003.

Similarly, the tag determines whether a second condition is met, and if the second condition is met, the tag executes S1009, or if the second condition is not met, the tag returns to execute S 1004.

Before executing this step, the reader side combines the $i^{th}$ first initial binary sequence and the $(i-1)^{th}$ first combination sequence, to obtain the $i^{th}$ first combination sequence, and uses the $i^{th}$ first combination sequence as the first sequence.

The first condition includes at least one of the following: a total length of the first sequence is greater than or equal to a preset length; or a quantity of times the first wireless signal is transmitted reaches a preset quantity, where the first wireless signal is used by the second device to generate a second key.

That is, if the reader and the tag are two parties of legitimate communication, in a case in which the $i^{th}$ first initial binary sequence with b bits that is obtained by the reader by quantizing the $i^{th}$ channel estimation value is less than a required key length KeyLen (that is, the preset length), step 1003 to step 1008 are repeated for m times until $m \cdot b \geq$ KeyLen (the preset length). Then, the next step is executed.

After each loop process, both parties of legitimate communication separately concatenate binary bits that are generated sequentially. For example, the $i^{th}$ first combination sequence obtained after the $i^{th}$ loop process by the reader is $Q_{Reader}(i) = Q_{Reader}(i - 1)\|Q_{R,i}$, and the $i^{th}$ second combination sequence obtained after the $i^{th}$ loop process by the tag is

$$Q_{Tag}(i) = Q_{Tag}(i-1)\|Q_{T,i}.$$

Due to short-term reciprocity of a wireless channel, it may be learned that $RSSI_{Tag, i} \approx RSSI_{Tag,i}$. Therefore, $Q_{Reader}(i) \cong Q_{Tag}(i)$.

Step 1009: The reader exchanges quantization information with the tag, the reader generates a first key, and the tag generates the second key.

Specifically, the reader transmits first information to the tag, and the tag transmits third information to the reader, where the third information includes M second indicator bits. The first information and the third information may be the foregoing quantization information exchanged between the reader and the tag.

The first information carries M first indicator bits (that is, a first GIB sequence formed by M first GIBs), and the third information carries the M second indicator bits (that is, a second GIB sequence formed by M second GIBs). After receiving the GIB sequence transmitted by the opposite party, the tag and the reader compare a GIB sequence of a corresponding bit. As long as a GIB of one party is equal to 1, both the tag and the reader delete the channel estimation values corresponding thereto. Finally, a target binary sequence is extracted by using a value of a GIB equal to 0. Then, the reader generates the first key, and the tag generates the second key.

That is, the tag transmits the second GIB sequence of the tag to the reader, and the reader transmits the first GIB sequence to the tag. Then, the two parties determine their respective keys.

When two parties of legitimate communication exchange GIB sequences on a common channel, eavesdropping may inevitably occurs. However, a GIB only represents whether a channel estimation value is within a guard-band, and does not disclose any key-related information. Therefore, the CQG quantization algorithm is secure and reliable.

Step 1010: In a case in which the count value of the slot counter is reset to zero, the tag transmits sixth information to the reader.

The sixth information includes a first result obtained after a first random number is encrypted based on the second key.

That is, the tag processes a third sequence $Q_{Tag}$, to obtain a fourth sequence, and generates the second key $K_{Tag}$ on the tag side based on the fourth sequence. The tag does not return the first result (represented as TReply) obtained through encryption by using the second key $K_{Tag}$ until a quantity of slots for the tag is reset to zero, that is, the tag transmits the sixth information that includes the first result in a selected slot (the first slot after the quantity of slots is reset to zero).

A calculation manner of the first result is: TReply = $Encryption_{KTag}$(RN16), where $Encryption_{KTag}(\cdot)$ represents an encryption operator at the tag end under a condition that $K_{Tag}$ exists, and RN16 is the first random number.

In this step, the tag enters the Reply (reply) state from Arbitrate (arbitrate).

Step 1011: In a case in which the reader receives the sixth information transmitted by the tag, the reader transmits fourth information to the tag.

Specifically, the reader processes the first sequence $Q_{Reader}$, to obtain a second sequence, and generates a first key $K_{Reader}$ on the reader side based on the second sequence. The reader performs, by using a locally generated first key $K_{Reader}$, decryption on the first result TReply included in the received sixth information, to restore RN16' (that is, a second random number), that is, RN16' = $Decryption_{KReader}$(TResponse), where $Decryption_{KReader}(\cdot)$ represents a decryption operator at the reader end under a condition that $K_{Reader}$ exists. Then, the reader transmits the fourth information.

A check result that may be included in the fourth information is a second result obtained by performing hash calculation on the second random number (which may be represented as Hash(RN16')). The fourth information may be an ACK (acknowledgment information).

Step 1012: The tag receives the fourth information, and transmits fifth information to the reader.

Specifically, the tag end performs hash calculation on the first random number (RN16), to obtain a third result (which may be represented as Hash(RN16)), and performs consistency check on the third result against the second result included in the fourth information, to obtain a check result.

The performing consistency check on the third result against the second result included in the fourth information may be verifying whether RN16' is consistent with RN16. If the verification succeeds, the fifth information that includes a first check result obtained after encryption is performed based on the second key is transmitted, for example, a 135-bit sequence response encrypted by using $K_{Reader}$ (the second key), which may further include another bit such as EPC. If the verification fails, the fifth information that includes a second check result is transmitted, where the second check result may be represented by an "error" identifier.

It may be learned that, by using the solution provided in this embodiment, in a case in which a second device generates a second key based on received strength of a wireless signal, the second device receives fourth information transmitted by a first device and generated based on a first key, and transmits fifth information to the first device, where the fifth information includes a check result of checking on the first key against the second key. Because a reflected signal is obtained based on reflection of the wireless signal, it is more applicable to a zero-power-consumption scenario. In addition, because the first key is obtained according to received strength of the reflected signal of the wireless signal transmitted by the first device, randomness of the generated key may be ensured, and further security of the key is ensured. Therefore, security protection for a zero-power-consumption device by using a physical layer key is implemented. In addition, after the first device and the second device generate respective keys, the second device further performs check thereon. Therefore, key consistency between the two devices is ensured, thereby ensuring security of subsequent processes of the two devices.

Specifically, it may be learned from the foregoing examples that, a physical layer key generation process that may be used in the key generation method and the information check method provided in this embodiment may be performed alternately in an Inventory process. Key generation only needs to be performed on the reader and the tag, and a signalling procedure specified in a GS1 protocol standard does not need to be modified. This may be well compatible with an existing RFID communications system.

In addition, the key generation method and the information check method provided in this embodiment may be well compatible with a security suite based on an ISO/IEC 29167 series. Because the physical layer key generation process used in the methods provided in this embodiment may be performed before authentication and secure communication defined in the 29167 series security suite, an initial key distribution problem and a subsequent key management problem of the 29167 series security suite can be resolved. The 29167 may have a plurality of types of key lengths. Therefore, each extracted key length may be determined based on an actual requirement. Therefore, a finally generated key may meet various requirements, and is relatively well compatible with a security suite. Therefore, flexibility of extracting a physical layer key is ensured, and key length requirements of different security suites can be met. In terms of security requirements, the foregoing may be flexibly applied to different risk management requirements, thereby ensuring adaptability to more scenarios.

Further, in the methods provided in this embodiment, a second device, that is, a tag device, only needs to perform signal strength extraction and quantization steps with extremely low complexity. Therefore, implementation complexity is low, and the methods are more applicable to a zero-power-consumption device. In addition, in the solution provided in this embodiment, randomness of a generated key not only comes from legitimate channel fading, but also comes from strength of a first wireless signal randomly transmitted by a reader (first device). In this way, the randomness is stronger than randomness of a key generated only by using channel fading. Therefore, security is higher.

Finally, it should be noted that the present invention may resolve a security problem of a zero-power-consumption device in a plurality of scenarios, for example, may be applicable to a smart factory scenario, a wearable scenario, and a smart home scenario.

The quantization algorithm as used in this embodiment, which requires information interaction, may further use another quantization algorithm, for example, a CQA algorithm, and is not enumerated exhaustively herein. FIG. 11 is a performance comparison diagram in which different quantization algorithms are used. It may be learned from FIG. 11 that, in different cases of noise power, changes of bit error rates and frame error rates in different quantization algorithms are different. In actual processing, a proper quantization algorithm may be selected according to a requirement. For example, in a case in which noise power is relatively large (as shown by -75 dBm in FIG. 11), both bit error rates and frame error rates of a CGA algorithm, a CQ algorithm, and a CQG algorithm do not differ greatly, and may be randomly selected from the three. In a case in which noise power is relatively small (as shown by -80 dBm in FIG. 11), a bit error rate of the CQA algorithm is less than that of the CQ algorithm and that of the CQG algorithm, and a frame error rate of the CQA algorithm is also less than that of the CQ algorithm and that of the CQG algorithm. Therefore, the CQA algorithm may be selected for use in processing. A manner of performing selection based on another noise power is similar to the foregoing manner, and may be selected with reference to a change situation shown in FIG. 11. Details are not described herein again.

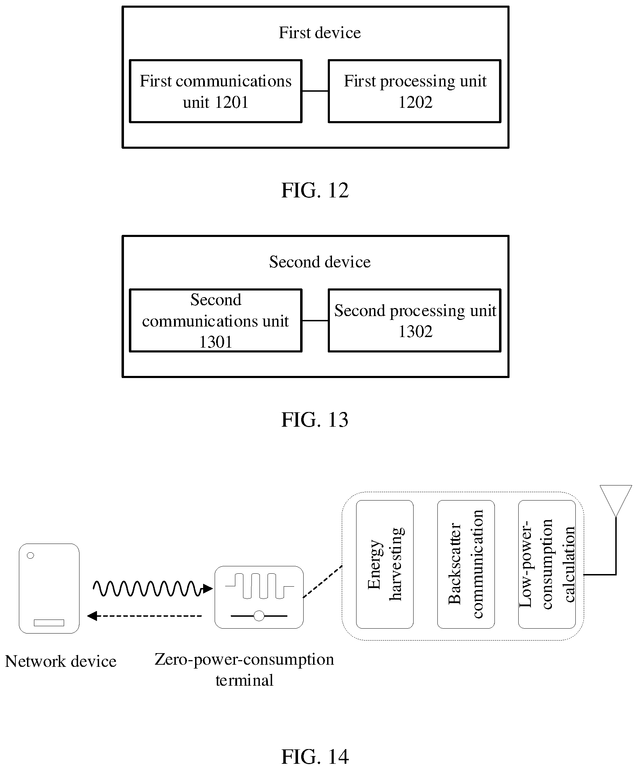

FIG. 12 is a schematic structural diagram of a first device according to an embodiment of this application. The first device includes: a first communications unit 1201, configured to transmit a first wireless signal and receive a first reflected signal, where the first reflected signal is transmitted by a second device based on the first wireless signal; and a first processing unit 1202, configured to generate a first key based on received strength of the first reflected signal.

The first processing unit 1202 is configured to generate a first sequence based on the received strength of the first reflected signal, and generate the first key based on the first sequence.

The first processing unit 1202 is configured to: generate the $i^{th}$ first initial binary sequence based on received strength of the $i^{th}$ first reflected signal, where i is an integer greater than or equal to 1; and combine the $i^{th}$ first initial binary sequence and the $(i-1)^{th}$ first combination sequence, to obtain the $i^{th}$ first combination sequence, and use the $i^{th}$ first combination sequence as the first sequence.

The first processing unit 1202 is configured to: determine the $i^{th}$ path loss based on the received strength of the $i^{th}$ first reflected signal and transmission strength of the $i^{th}$ first wireless signal; determine, by the first device, the $i^{th}$ channel estimation value based on the $i^{th}$ path loss and the transmission strength of the $i^{th}$ first wireless signal; and quantize, by the first device, the $i^{th}$ channel estimation value based on a preset quantization algorithm, to obtain the $i^{th}$ first initial binary sequence.

The first processing unit 1202 is configured to: subtract a reflection loss of the second device and the received strength of the $i^{th}$ first reflected signal from a sum of the transmission strength of the $i^{th}$ first wireless signal, an antenna gain of the first device, and an antenna gain of the second device, to obtain a first value; and divide the first value by 2 to obtain the $i^{th}$ path loss.

The first processing unit 1202 is configured to subtract the $i^{th}$ path loss from a sum of adding up the transmission strength of the $i^{th}$ first wireless signal and an antenna gain of the first device, to obtain the $i^{th}$ channel estimation value.

The first processing unit 1202 is configured to: in a case in which the $i^{th}$ channel estimation value falls within a first quantization range, set the $i^{th}$ first indicator bit to a first value, where the $i^{th}$ first indicator bit is one of M first indicator bits, and M is an integer greater than or equal to 1; or in a case in which the $i^{th}$ channel estimation value does not fall within the first quantization range, set the $i^{th}$ first indicator bit to a second value.

The first communications unit 1201 is configured to transmit first information to the second device, and the first information includes the M first indicator bits.

The first processing unit 1202 is configured to quantize the $i^{th}$ channel estimation value based on the preset quantization algorithm and first strength feature related information, to obtain the $i^{th}$ first initial binary sequence.

The first strength feature related information includes at least one of the following: an average value of first strength feature information or a standard deviation of the first strength feature information.

The preset quantization algorithm includes one of the following: a channel quantization CQ algorithm, a uniform quantization algorithm, a channel quantization with guard-band CQG algorithm, or a channel quantization alternating CQA algorithm.

The received strength of the $i^{th}$ first reflected signal is an average value of a plurality of measurement values obtained by performing a plurality of times of measurement on the $i^{th}$ first reflected signal.

The first processing unit 1202 is configured to generate the first key based on the first sequence in a case in which a first condition is met.

The first condition includes at least one of the following: a total length of the first sequence is greater than or equal to a preset length; or a quantity of times the first wireless signal is transmitted reaches a preset quantity, where the first wireless signal is used by the second device to generate a second key.

The first communications unit 1201 is configured to transmit second information to the second device, where the second information includes at least one of the following: the preset length or the preset quantity.

The first processing unit 1202 is configured to obtain a second sequence based on the first sequence, and use the second sequence as the first key.

The first processing unit 1202 is configured to determine a target binary sequence from the first sequence based on M second indicator bits, where the M second indicator bits are used to indicate whether received strength of receiving M first wireless signals by the second device falls within a second quantization range; and the first device forms the second sequence based on the target binary sequence.

The first processing unit 1202 is configured to combine the M second indicator bits and M first indicator bits, to obtain M combination indicator bits, and determine the target binary sequence from the first sequence based on the M combination indicator bits.

The first processing unit 1202 is configured to: in a case in which both the $r^{th}$ second indicator bit and the $r^{th}$ first indicator bit are a first value, determine that the $r^{th}$ combination indicator bit is the first value, where r is an integer greater than or equal to 1 and less than or equal to M; or in a case in which at least one of the $r^{th}$ second indicator bit and the $r^{th}$ first indicator bit is a second value, determine that the $r^{th}$ combination indicator bit is the second value.

The first processing unit 1202 is configured to: in a case in which the $j^{th}$ combination indicator bit in the M combination indicator bits is a first value, determine that the $j^{th}$ group of binary bits in the first sequence is one of the target binary sequence, where j is an integer greater than or equal to 1 and less than or equal to M.

The first communications unit 1201 is configured to receive third information transmitted by the second device, where the third information includes the M second indicator bits.

The first processing unit 1202 is configured to use the first sequence as the first key.

The first device in this embodiment of this application can implement corresponding functions in the foregoing key generation method embodiments. For procedures, functions, implementations, and beneficial effects corresponding to modules (submodules, units, or components) in the first device, refer to corresponding descriptions in the foregoing method embodiments. Details are not described herein again. It should be noted that functions of modules (submodules, units, components, or the like) in the first device in this embodiment of this application may be implemented by different modules (submodules, units, components, or the like), or may be implemented by a same module (submodule, unit, component, or the like).

FIG. 13 is a schematic block diagram of a second device according to an embodiment of this application. The second device 1300 may include: a second communications unit 1301, configured to receive a first wireless signal; and a second processing unit 1302, configured to generate a second key based on received strength of the first wireless signal.

The second processing unit 1302 is configured to generate a third sequence based on the received strength of the first wireless signal, and generate the second key based on the third sequence.

The second processing unit 1302 is configured to: generate the $w^{th}$ second initial binary sequence based on received strength of the $w^{th}$ first wireless signal, where w is an integer greater than or equal to 1; and combine the $w^{th}$ second initial binary sequence and the $(w-1)^{th}$ second combination sequence, to obtain the $w^{th}$ second combination sequence, and use the $w^{th}$ first combination sequence as the third sequence.

The second processing unit 1302 is configured to quantize the received strength of the $w^{th}$ first wireless signal based on a preset quantization algorithm, to obtain the $w^{th}$ second initial binary sequence.

The second processing unit 1302 is configured to: in a case in which the received strength of the $w^{th}$ first wireless signal falls within a second quantization range, set the $w^{th}$ second indicator bit to a first value, where the $w^{th}$ second indicator bit is one of M second indicator bits; or in a case in which the received strength of the $w^{th}$ first wireless signal does not fall within the second quantization range, set the $w^{th}$ second indicator bit to a second value.

The second communications unit 1301 is configured to transmit third information to a first device, and the third information includes the M second indicator bits.

The second processing unit 1302 is configured to quantize the received strength of the $w^{th}$ first wireless signal based on the preset quantization algorithm and second strength feature related information, to obtain the $w^{th}$ second initial binary sequence.

The second strength feature related information includes at least one of the following: an average value of second strength feature information or a standard deviation of the second strength feature information.

The preset quantization algorithm includes one of the following: a channel quantization CQ algorithm, a uniform quantization algorithm, a channel quantization with guard-band CQG algorithm, or a channel quantization alternating CQA algorithm.

The received strength of the $w^{th}$ first wireless signal is an average value of a plurality of measurement values obtained by performing a plurality of times of measurement on the $w^{th}$ first wireless signal.

The second processing unit 1302 is configured to generate the second key based on the third sequence in a case in which a second condition is met.

The second condition includes one of the following: a total length of the third sequence is greater than or equal to a preset length; or a quantity of times the first wireless signal is received reaches a preset quantity, where the first wireless signal is used by the second device to generate the second key.

The second communications unit 1301 is configured to receive second information transmitted by the first device, where the second information includes at least one of the following: the preset length or the preset quantity.

The second processing unit 1302 is configured to obtain a fourth sequence based on the third sequence, and use the fourth sequence as the second key.

The second processing unit 1302 is configured to: determine a target binary sequence from the third sequence based on M first indicator bits, where the M first indicator bits are used to indicate whether a channel estimation value obtained by the first device based on received strength of M first reflected signals falls within a first quantization range; and form the fourth sequence based on the target binary sequence.

The second processing unit 1302 is configured to combine the M first indicator bits and M second indicator bits, to obtain M combination indicator bits, and determine the target binary sequence from the third sequence based on the M combination indicator bits.

The second processing unit 1302 is configured to: in a case in which both the $q^{th}$ second indicator bit and the $q^{th}$ first indicator bit are a first value, determine that the $q^{th}$ combination indicator bit is the first value, where q is an integer greater than or equal to 1 and less than or equal to M; or in a case in which at least one of the $q^{th}$ second indicator bit and the $q^{th}$ first indicator bit is a second value, determine that the $q^{th}$ combination indicator bit is the second value.

The second processing unit 1302 is configured to: in a case in which the $t^{th}$ combination indicator bit in the M combination indicator bits is a first value, determine, by the second device, that the $t^{th}$ group of binary bits in the third sequence is one of the target binary sequence, where t is an integer greater than or equal to 1 and less than or equal to M.

The second communications unit 1301 is configured to receive first information transmitted by the first device, where the first information includes the M first indicator bits.

The second processing unit 1302 is configured to use the third sequence as the second key.

The second device in this embodiment of this application can implement corresponding functions of the second device in the foregoing method embodiments. For procedures, functions, implementations, and beneficial effects corresponding to modules (submodules, units, or components) in the second device, refer to corresponding descriptions in the foregoing method embodiments. Details are not described herein again. It should be noted that functions of modules (submodules, units, components, or the like) in the second device in this embodiment of this application may be implemented by different modules (submodules, units, components, or the like), or may be implemented by a same module (submodule, unit, component, or the like).

Another embodiment of this application provides a first device. A schematic block diagram of the first device in this embodiment may be the same as that in the foregoing FIG. 12. The first device may include: a first communications unit 1201, configured to: transmit fourth information to a second device, where the fourth information includes check information generated based on a first key, the first key is related to received strength of a first reflected signal, and the first reflected signal is transmitted by the second device based on a first wireless signal transmitted by the first device; and receive fifth information transmitted by the second device, where the fifth information includes a check result of checking on a second key against the first key, and the second key is related to received strength of receiving the first wireless signal by the second device.

The first key is generated based on a first sequence, and the first sequence is generated based on the received strength of the first reflected signal.

The first sequence is the $i^{th}$ first combination sequence, and i is an integer greater than or equal to 1; the $i^{th}$ first combination sequence is obtained by combining the $i^{th}$ first initial binary sequence and the $(i-1)^{th}$ first combination sequence; and the $i^{th}$ first initial binary sequence is generated based on received strength of the $i^{th}$ first reflected signal.

The $i^{th}$ first initial binary sequence is obtained by quantizing the $i^{th}$ channel estimation value based on a preset quantization algorithm.

The $i^{th}$ channel estimation value is determined based on the $i^{th}$ path loss and transmission strength of the $i^{th}$ first wireless signal, where the $i^{th}$ path loss is determined based on the received strength of the $i^{th}$ first reflected signal and the transmission strength of the $i^{th}$ first wireless signal.

The $i^{th}$ channel estimation value is obtained by subtracting the $i^{th}$ path loss from a sum of adding up the transmission strength of the $i^{th}$ first wireless signal and an antenna gain of the first device.

The $i^{th}$ path loss is obtained by dividing a first value by 2, and the first value is obtained by subtracting a reflection loss of the second device and the received strength of the $i^{th}$ first reflected signal from a sum of the transmission strength of the $i^{th}$ first wireless signal, an antenna gain of the first device, and an antenna gain of the second device.

The first device further includes: a first processing unit 1202, configured to: in a case in which the $i^{th}$ channel estimation value falls within a first quantization range, set the $i^{th}$ first indicator bit to a first value, where the $i^{th}$ first indicator bit is one of M first indicator bits; or in a case in which the $i^{th}$ channel estimation value does not fall within the first quantization range, set the $i^{th}$ first indicator bit to a second value.

The first communications unit is configured to transmit first information to the second device, and the first information includes the M first indicator bits.

The $i^{th}$ first initial binary sequence is obtained by quantizing the $i^{th}$ channel estimation value based on the preset quantization algorithm and first strength feature related information.

The first strength feature related information includes at least one of the following: an average value of first strength feature information or a standard deviation of the first strength feature information.

The preset quantization algorithm includes one of the following: a channel quantization CQ algorithm, a uniform quantization algorithm, a channel quantization with guard-band CQG algorithm, or a channel quantization alternating CQA algorithm.

The received strength of the $i^{th}$ first reflected signal is an average value of a plurality of measurement values obtained by performing a plurality of times of measurement on the $i^{th}$ first reflected signal.

The first key is generated based on the first sequence in a case in which a first condition is met.

The first condition includes one of the following: a total length of the first sequence is greater than or equal to a preset length; or a quantity of times the first wireless signal is transmitted reaches a preset quantity, where the first wireless signal is used by the second device to generate the second key.

The first communications unit is configured to transmit second information to the second device, where the second information includes at least one of the following: the preset length or the preset quantity.

The first key is a second sequence obtained based on the first sequence.

The second sequence includes a target binary sequence, the target binary sequence is determined from the first sequence based on M second indicator bits, and the M second indicator bits are used to indicate whether received strength of receiving M first wireless signals by the second device falls within a second quantization range.

The target binary sequence is determined from the first sequence based on M combination indicator bits.

The M combination indicator bits are obtained by combining the M second indicator bits and M first indicator bits.

The first processing unit is configured to: in a case in which both the $r^{th}$ second indicator bit and the $r^{th}$ first indicator bit are a first value, determine that the $r^{th}$ combination indicator bit is the first value, where r is an integer greater than or equal to 1 and less than or equal to M; or in a case in which at least one of the $r^{th}$ second indicator bit and the $r^{th}$ first indicator bit is a second value, determine that the $r^{th}$ combination indicator bit is the second value.

The first processing unit is configured to: in a case in which the $j^{th}$ combination indicator bit in the M combination indicator bits is a first value, determine that the $j^{th}$ group of binary bits in the first sequence is one of the target binary sequence, where j is an integer greater than or equal to 1 and less than or equal to M.

The first communications unit is configured to receive third information transmitted by the second device, where the third information includes the M second indicator bits.

The first key is the first sequence.

The check information includes one of the following: a first parity check code generated based on the first key; or information obtained by performing hash calculation based on the first key.

The first communications unit is configured to: in a case in which sixth information transmitted by the second device is received, transmit the fourth information to the second device.

The sixth information includes a first result obtained after a first random number is encrypted based on the second key.

The check information is a second result obtained by performing hash calculation on a second random number, and the second random number is obtained by decrypting the first result based on the first key.

The first communications unit is configured to: in a case in which sixth information transmitted by the second device is not received, transmit a second wireless signal to the second device.

The second wireless signal is used to instruct the second device to decrement a count value of a slot counter, and is not used by the second device to generate the second key.

The fifth information includes one of the following: a first check result obtained after encryption is performed based on the second key, where the first check result indicates that the second key is consistent with the first key; or a second check result, where the second check result indicates that the second key is inconsistent with the first key.

The first device in this embodiment of this application can implement corresponding functions of the first device in the foregoing information check method embodiments. For procedures, functions, implementations, and beneficial effects corresponding to modules (submodules, units, or components) in the first device, refer to corresponding descriptions in the foregoing method embodiments. Details are not described herein again. It should be noted that functions of modules (submodules, units, components, or the like) in the first device in this embodiment of this application may be implemented by different modules (submodules, units, components, or the like), or may be implemented by a same module (submodule, unit, component, or the like).

Another embodiment of this application provides a second device. A schematic block diagram of the first device in this embodiment may be the same as that in the foregoing FIG. 13. The second device may include: a second communications unit 1301, configured to: receive fourth information transmitted by a first device, where the fourth information includes check information generated based on a first key, the first key is related to received signal strength of a first reflected signal, and the first reflected signal is transmitted by the second device based on a first wireless signal transmitted by the first device; and transmit fifth information to the first device, where the fifth information includes a check result of checking on a second key against the first key, and the second key is related to received strength of receiving the first wireless signal by the second device.

The second key is generated based on a third sequence, and the third sequence is generated based on the received strength of the first wireless signal.

The third sequence is the $w^{th}$ second combination sequence, and w is an integer greater than or equal to 1.

The $w^{th}$ second combination sequence is obtained by combining the $w^{th}$ second initial binary sequence and the $(w-1)^{th}$ second combination sequence.

The $w^{th}$ second initial binary sequence is generated based on received strength of the $w^{th}$ first wireless signal.

The $w^{th}$ second initial binary sequence is obtained by quantizing the received strength of the $w^{th}$ first wireless signal based on a preset quantization algorithm.

The second device further includes: a second processing unit 1302, configured to: in a case in which the received strength of the $w^{th}$ first wireless signal falls within a second quantization range, set the $w^{th}$ second indicator bit to a first value, where the $w^{th}$ second indicator bit is one of M second indicator bits; or in a case in which the received strength of the $w^{th}$ first wireless signal does not fall within the second quantization range, set the $w^{th}$ second indicator bit to a second value.

The second communications unit is configured to transmit third information to the first device, and the third information includes the M second indicator bits.

The $w^{th}$ second initial binary sequence is obtained by quantizing the received strength of the $w^{th}$ first wireless signal based on the preset quantization algorithm and second strength feature related information.

The second strength feature related information includes at least one of the following: an average value of second strength feature information or a standard deviation of the second strength feature information.

The preset quantization algorithm includes one of the following: a channel quantization CQ algorithm, a uniform quantization algorithm, a channel quantization with guard-band CQG algorithm, or a channel quantization alternating CQA algorithm.

The received strength of the $w^{th}$ first wireless signal is an average value of a plurality of measurement values obtained by performing a plurality of times of measurement on the $w^{th}$ first wireless signal.

The second key is generated based on the third sequence in a case in which a second condition is met.

The second condition includes one of the following: a total length of the third sequence is greater than or equal to a preset length; or a quantity of times the first wireless signal is received reaches a preset quantity, where the first wireless signal is used by the second device to generate the second key.

The second communications unit is configured to receive second information transmitted by the first device, where the second information includes at least one of the following: the preset length or the preset quantity.

The second key is a fourth sequence obtained based on the third sequence.

The fourth sequence includes a target binary sequence, the target binary sequence is determined from the third sequence based on M first indicator bits, and the M first indicator bits are used to indicate whether a channel estimation value obtained by the first device based on received strength of M first reflected signals falls within a first quantization range.

The target binary sequence is determined from the third sequence based on M combination indicator bits.

The M combination indicator bits are obtained by combining the M second indicator bits and M first indicator bits.

The second device further includes: a second processing unit, configured to: in a case in which both the $q^{th}$ second indicator bit and the $q^{th}$ first indicator bit are a first value, determine that the $q^{th}$ combination indicator bit is the first value, where q is an integer greater than or equal to 1 and less than or equal to M; or in a case in which at least one of the $q^{th}$ second indicator bit and the $q^{th}$ first indicator bit is a second value, determine that the $q^{th}$ combination indicator bit is the second value.

The second processing unit is configured to: in a case in which the $t^{th}$ combination indicator bit in the M combination indicator bits is the first value, determine that the $t^{th}$ group of binary bits is one of the target binary sequence, where the $t^{th}$ group of binary bits is generated based on received strength of the $t^{th}$ first wireless signal, and t is an integer greater than or equal to 1 and less than or equal to M; or in a case in which the $t^{th}$ combination indicator bit in the M combination indicator bits is the second value, determine that the $t^{th}$ group of binary bits is not one of the target binary sequence.

The second communications unit is configured to receive first information transmitted by the first device, where the first information includes the M first indicator bits.

The second key is the third sequence.

The check information includes one of the following: a first parity check code generated based on the first key; or

**EP 4 482 185 A1**

information obtained by performing hash calculation based on the first key.

The second device further includes: a second processing unit, configured to generate a second parity check code based on the second key, and determine a check result based on the second parity check code and the first parity check code.

The second communications unit is configured to: in a case in which a count value of a slot counter is reset to zero, transmit sixth information to the first device, where the sixth information includes a first result obtained after a first random number is encrypted based on the second key.

The check information is a second result obtained by performing hash calculation on a second random number, and the second random number is obtained by decrypting the first result based on the first key.

The second processing unit is configured to perform hash calculation on the first random number, to obtain a third result, and perform consistency check on the third result against the second result, to obtain a check result.

The second processing unit is configured to: in a case in which the third result is consistent with the second result, obtain a first check result, where the first check result indicates that the second key is consistent with the first key; or in a case in which the third result is inconsistent with the second result, obtain a second check result, where the second check result indicates that the second key is inconsistent with the first key.

The fifth information includes one of the following: the first check result obtained after encryption is performed based on the second key; or the second check result.

The count value of the slot counter is decremented based on the first wireless signal; and/or, the count value of the slot counter is decremented based on a second wireless signal, where the second wireless signal is used to instruct the second device to decrement a count value of a slot counter, and is not used by the second device to generate the second key.

The second device in this embodiment of this application can implement corresponding functions of the second device in the foregoing information check method embodiments. For procedures, functions, implementations, and beneficial effects corresponding to modules (submodules, units, or components) in the second device, refer to corresponding descriptions in the foregoing method embodiments. Details are not described herein again. It should be noted that functions of modules (submodules, units, components, or the like) in the second device in this embodiment of this application may be implemented by different modules (submodules, units, components, or the like), or may be implemented by a same module (submodule, unit, component, or the like).

Finally, the first device and the second device provided in this embodiment are described in detail.

The first device may be a reader, which may specifically be a user equipment (UE, User Equipment) or a network device. The second device may be a zero-power-consumption terminal, a zero-power-consumption device, or a zero-power-consumption internet of things terminal. The second device (the zero-power-consumption terminal, the zero-power-consumption device, or the zero-power-consumption internet of things terminal) may specifically be an electronic tag (or referred to as a tag), and may be integrated with a memory for data access, and/or, may be integrated with a sensor to collect sensing information. Since the second device is generally used on a large scale (for example, a tag is attached on each asset or device), both a cost and power consumption of the second device need to be mainly considered.

The foregoing first device and the foregoing second device may form a zero-power-consumption communications system. A prominent technical advantage of zero-power-consumption communication is battery-free communication. Because key technologies such as radio-frequency energy harvesting, backscatter, and low power calculation are used, a terminal may be battery-free and support extremely low hardware complexity. Therefore, zero-power-consumption communication can meet requirements for extremely low power consumption, an extremely small size, and an extremely low cost. It is foreseeable that zero-power-consumption technologies will have significant application advantages in a wide range of application fields, for example, application in fields such as vertical-industry-oriented industrial sensor networks, smart transportation, smart logistics, smart warehousing, smart agriculture, smart city, and energy, and applications in scenarios such as individual-consumer-oriented smart wearable, smart home, and medical care. In this section, some typical scenarios are selected to illustrate application potentials of zero-power-consumption communication in these fields.

With different application scenarios, requirements for the foregoing first device may also be different from those for the foregoing second device. For example, in an application scenario of an industrial sensor network, requirements for the first device and those for the second device may include:

In a case in which the first device (that is, the reader) is a network device, requirements for (or features of) the first device are as follows:

Basic settings and flexible deployment based on a cellular network: For example, the first device may be deployed in an outdoor pole station or deployed with a distance from a DIS (Digital Indoor System, digital indoor system) station indoors, to provide basic coverage. For another example, the first device may be deployed as required to fill a coverage hole or expand coverage.

Coverage requirement: It is requited that a coverage distance of a single station should be greater than 30 m indoors or greater than 100 m outdoors.

Network security: Authorization-based tag reading protects privacy and data security.

Connection requirement: A sufficient system capacity is supported, and reading of data for a large quantity of terminals is supported.

Features of the second device (the zero-power-consumption terminal, the zero-power-consumption device, or the zero-power-consumption internet of things terminal) include but are not limited to the following:
Power consumption: may be less than 1 mw; passive, battery-free, and maintenance-free.

Working environment: it is required to be able to adapt to special environments, for example, to normally work in special environments such as a high temperature, high pressure, extreme coldness, and radiation.

Volume: an extremely small volume, facilitating large-scale application.

Communication distance: the communication distance may range from tens of meters to hundreds of meters.

Material type: there may be paper tags and anti-metal tags.

It should be understood that the foregoing describes the typical requirements for the first device and those for the second device by using only an application scenario of an industrial sensor network. However, the application scenario of the industrial sensor network may further include another requirement, but is not enumerated exhaustively herein. In addition, in another application scenario, requirements for the first device and those for the second device may be different from the foregoing requirements of the industrial sensor network. For example, in application scenarios of smart logistics and smart warehousing, a connection requirement may further be added (due to a large quantity of goods, a large quantity of tags need to be detected at the same time, and therefore thousands of connections per second may need to be implemented). For another example, in an application scenario of smart home, a communication delay requirement may be added (smart home appliance adjustment: at a level of 10 ms to 100 ms; housewares positioning: at a level of 100 ms to 1s), and a requirement for an excitation signal may be added (for example, a Wi-Fi signal of a smart device in a family such as a smart phone, a CPE (Customer Premise Equipment, customer-premises equipment) is used as an energy excitation signal of a passive terminal, and no additional excitation signals are required, which simplifies a network layout), which is not enumerated exhaustively herein.

The foregoing first device and the foregoing second device (the zero-power-consumption device) may form a zero-power-consumption communications system, which is based on backscatter. In the zero-power-consumption communications system based on backscatter, the second device, that is, the zero-power-consumption device, backscatters a received RF (Radio Frequency, radio frequency) signal that is modulated and reflected by a transmitter, to transmit data, instead of generating an RF signal itself. This technology has been widely applied in practice and production, such as RFID (Radio Frequency Identification, radio frequency identification), a tracking device, a remote switch, medical telemetry, and a low-cost sensor network. For details on that the foregoing first device and the foregoing second device (the zero-power-consumption device) may form a zero-power-consumption communications system based on backscatter, reference may be made to FIG. 14. In FIG. 14, a network device is the first device (for example, the reader), and a zero-power-consumption terminal is the second device.

As shown in FIG. 14, the zero-power-consumption terminal (that is, the second device) may include functions such as energy harvesting, backscatter communication, and low-power-consumption calculation. Energy harvesting and backscatter communication may be implemented by the second communications unit of the foregoing second device, and low-power-consumption calculation may be implemented by the second processing unit of the foregoing second device. The foregoing energy harvesting, backscatter communication, and low-power-consumption calculation are described separately.

First, A basic principle for energy harvesting, that is, radio-frequency energy harvesting, is to harvest energy of a spatial electromagnetic wave through electromagnetic induction. An essence of radio-frequency energy harvesting is to convert radio-frequency energy into direct current voltage (RF-DC). In application to zero-power-consumption communication, a core requirement for radio-frequency energy harvesting is to effectively use harvested energy for the driving of a load circuit (low-power-consumption operation, a sensor, or the like), and radio-frequency energy, so as to implement battery-free communication.

Second, backscatter (Back Scattering) was first proposed by Stockman in 1948. However, conventional backscatter communication cannot be widely applied to a data-intensive wireless communications system due to the following limitations. First, in conventional backscatter communication, a backscatter transmitter needs to be placed near a radio-frequency source of the backscatter transmitter, which limits usage and a coverage area for a device. Second, in conventional backscatter communication, a backscatter receiver and a radio-frequency transmit source are located in a same device, that is, a reader (reader), which results in self-interference between a receive antenna and a transmit antenna and thus reduces communication performance. Further, a conventional backscatter communications system is passively operated, that is, the backscatter transmitter transmits data only when a backscatter receiver queries.

Ambient backscatter communication (Ambient Backscatter Communication, AmBC) has become a more promising technology for enabling low-power-consumption communication, and can effectively resolve the foregoing limitations in the conventional backscatter communications system. Therefore, the AmBC technology is more widely used in actual application.

An ambient backscatter communications system generally includes three parts: an ambient radio-frequency source (ambient radio-frequency (RF) source), a backscatter device (backscatter device (BD)), and a reader (reader).

The zero-power-consumption device (that is, the second device, such as a backscatter tag) receives a carrier signal transmitted by the reader (that is, the first device), harvests energy by using an RF energy harvesting module (energy harvesting, that is, radio-frequency energy harvesting), to supply energy to a low-power-consumption processing module (that is, low-power-consumption calculation). After energy is obtained, backscatter communication drives a corresponding circuit to modulate an incoming signal, and performs backscatter.

Third, low-power-consumption calculation.

A main feature of a zero-power-consumption communication technology is to implement backscatter communication by modulating an incoming signal. In addition, the zero-power-consumption communication technology may further obtain energy through energy harvesting, to drive a digital logic circuit or a chip (such as an MCU (Microcontroller Unit, microcontroller unit) or a sensor chip) to implement functions such as encoding, encryption, or simple calculation of a signal. Conversion efficiency of radio-frequency energy is usually less than 10%, which determines that it is required that a power consumption for driving a digital logic circuit or a chip to fulfill calculation cannot be extremely high. For example, although a quantity of times of calculation that may be supported by 1 microjoule of energy is improved with process improvement and design optimization, a quantity of times of calculation for which 1 microjoule of energy may be used. A low-power-consumption receiver and a zero-power-consumption device may be classified into two types in terms of a function requirement. A main function of the first type is broadcast transmission similar to a beacon. To reduce structural complexity and power consumption, a receiver function may not be implemented. The other type is a receiver in consideration for a simple design and low power consumption. ASK and FSK manners that are commonly used for backscatter may be implemented by using simple circuit design. With respect to an encoding technology, inverse non-zero and Manchester encoding are two encoding manners in a backscatter system that are most commonly used. In addition thereto, simple and easy-to-implement encoding manners such as unipolar return to zero (Unipolar RZ) encoding, differential bi-phase (DBP) encoding, Miller (Miller) encoding, and FM0 encoding are also suitable for backscatter communication. With simple encoding and modulation, computational power consumption of zero-power-consumption communication may also be reduced to a great extent.

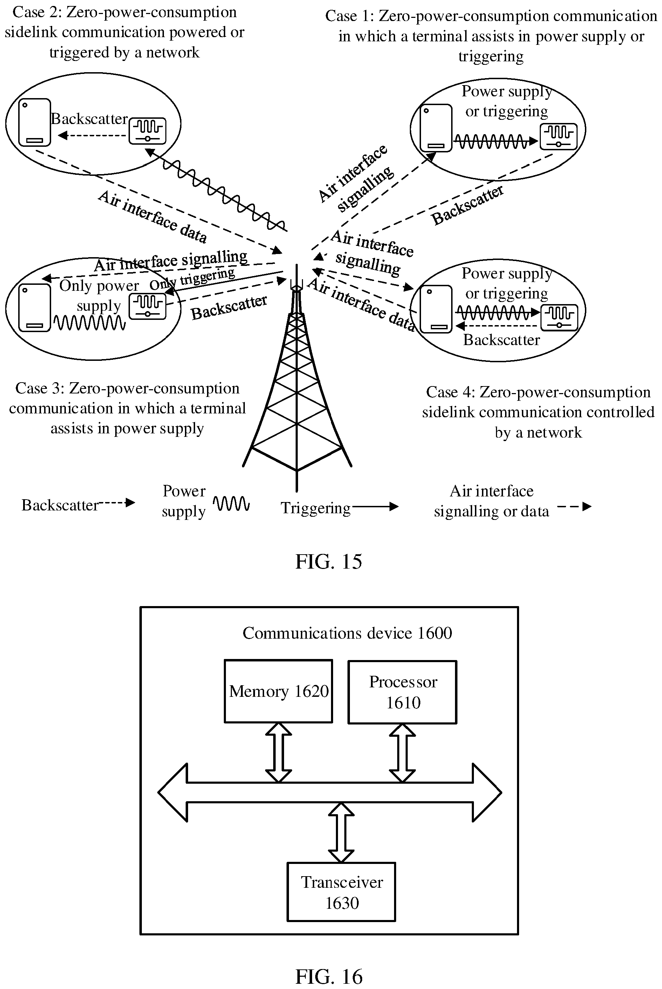

With reference to FIG. 15, the following describes in detail different cases of a hybrid zero-power-consumption communications system based on cellular communication and/or sidelink communication.

Case 1: Zero-power-consumption communication in which an intelligent terminal assists in power supply and triggering: A zero-power-consumption terminal is powered and triggered by the intelligent terminal in a network, and a backscatter signal of the zero-power-consumption terminal is received by a base station. The operations of power supply, triggering and power supply, and triggering performed by the intelligent terminal may be controlled by the base station by using air interface signalling.

Case 2: Zero-power-consumption sidelink (sidelink) communication which is powered or triggered by a network: A base station provides wireless power supply and transmits trigger signalling to a zero-power-consumption terminal, and a backscatter signal of the zero-power-consumption terminal is received by an intelligent terminal, and sidelink communication is accomplished. Further, the intelligent terminal transmits air interface data to the base station.

Case 3: Zero-power-consumption communication in which an intelligent terminal assists in power supply: The intelligent terminal in a network provides auxiliary power supply for a zero-power-consumption terminal; a base station transmits trigger information to the zero-power-consumption terminal, and receives a backscatter signal of the zero-power-consumption terminal. A process in which the intelligent terminal performs auxiliary power supply for the zero-power-consumption terminal may be controlled by the base station by using air interface signalling.

Case 4: Zero-power-consumption sidelink communication controlled by a network: An intelligent terminal receives air interface signalling and data of the network. The intelligent terminal supplies power to and triggers a zero-power-consumption terminal, and receives a backscatter signal of the zero-power-consumption terminal, so that sidelink communication is accomplished.

The solution provided in this embodiment is particularly applicable to the foregoing case 4. In the foregoing case 4, the intelligent terminal is the foregoing first device, and the zero-power-consumption terminal is the foregoing second device, that is, the intelligent terminal (that is, the first device) receives air interface signalling and data of the network. The intelligent terminal (that is, the first device) supplies power to and triggers the zero-power-consumption terminal (that is, the second device), and receives a backscatter signal of the zero-power-consumption terminal (that is, the second device), such that sidelink communication is accomplished.

FIG. 16 is a schematic structural diagram of a communications device 1600 according to an embodiment of this application. The communications device 1600 includes a processor 1610, and the processor 1610 may invoke a computer program from a memory and run the computer program, to cause the communications device 1600 to implement a method in embodiments of this application.

In a possible implementation, the communications device 1600 may further include a memory 1620. The processor 1610 may invoke a computer program from the memory 1620 and run the computer program, to cause the communications device 1600 to implement a method in embodiments of this application.

The memory 1620 may be a separate component independent of the processor 1610, or may be integrated into the processor 1610.

In a possible implementation, the communications device 1600 may further include a transceiver 1630. The processor 1610 may control the transceiver 1630 to communicate with another device, and specifically, may transmit information or data to another device, or receive information or data transmitted by the other device.

The transceiver 1630 may include a transmitter and a receiver. The transceiver 1630 may further include an antenna, and a quantity of antennas may be one or more.

In a possible implementation, the communications device 1600 may be the first device in embodiments of this application, and the communications device 1600 may implement a corresponding procedure implemented by the first device in the methods according to embodiments of this application. For brevity, details are not described herein again.

In a possible implementation, the communications device 1600 may be the second device in embodiments of this application, and the communications device 1600 may implement a corresponding procedure implemented by the second device in the methods according to embodiments of this application. For brevity, details are not described herein again.

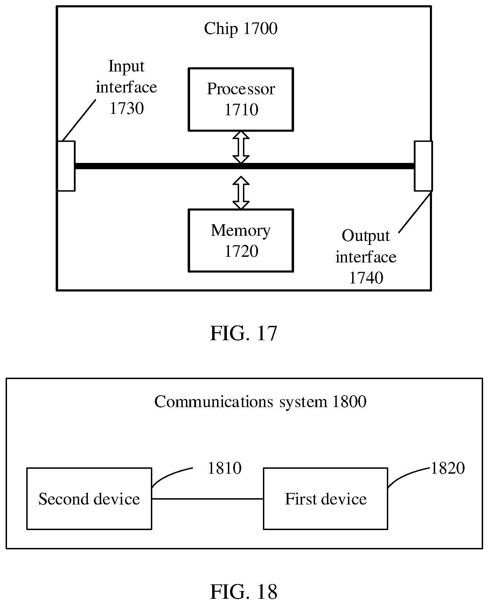

FIG. 17 is a schematic structural diagram of a chip 1700 according to an embodiment of this application. The chip 1700 includes a processor 1710, and the processor 1710 may invoke a computer program from a memory and run the computer program to implement a method in embodiments of this application.

In a possible implementation, the chip 1700 may further include a memory 1720. The processor 1710 may invoke a computer program from the memory 1720 and run the computer program, to implement a method executed by the second device or the first device in embodiments of this application.

The memory 1720 may be a separate component independent of the processor 1710, or may be integrated into the processor 1710.

In a possible implementation, the chip 1700 may further include an input interface 1730. The processor 1710 may control the input interface 1730 to communicate with another device or chip, and specifically, may obtain information or data transmitted by the other device or chip.

In a possible implementation, the chip 1700 may further include an output interface 1740. The processor 1710 may control the output interface 1740 to communicate with another device or chip, and specifically, may output information or data to the other device or chip.

In a possible implementation, the chip may be applied to a first device in embodiments of this application, and the chip may implement corresponding procedures implemented by a first device in methods according to embodiments of this application. For brevity, details are not described herein again.

In a possible implementation, the chip may be applied to a second device in embodiments of this application, and the chip may implement corresponding procedures implemented by a second device in methods according to embodiments of this application. For brevity, details are not described herein again.

Chips applied to the first device and the second device may be the same or different chips.

It should be understood that the chip mentioned in this embodiment of this application may alternatively be referred to as a system-level chip, a system chip, a chip system, or a system-on-chip.

The processor mentioned above may be a general-purpose processor, a digital signal processor (digital signal processor, DSP), a field-programmable gate array (field programmable gate array, FPGA), an application-specific integrated circuit (application specific integrated circuit, ASIC) or another programmable logic device, a transistor logic device, a discrete hardware component, or the like. The general-purpose processor may be a microprocessor, or may be any conventional processor or the like.

The foregoing mentioned memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM).

It should be understood that, by way of example but not limitative description, for example, the memory in this embodiment of this application may alternatively be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synch link DRAM, SLDRAM), a direct Rambus random access memory (Direct Rambus RAM, DR RAM), or the like. In other words, the memory in embodiments of this application includes but is not limited to these memories and any memory of another proper type.

FIG. 18 is a schematic block diagram of a communications system 1800 according to an embodiment of this application. The communications system 1800 includes a second device 1810 and a first device 1820.

The second device 1810 may be configured to implement corresponding functions implemented by a second device in the foregoing methods, and the first device 1820 may be configured to implement corresponding functions implemented by a first device in the foregoing methods. For brevity, details are not described herein again.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (Digital Subscriber Line, DSL)) manner or a wireless (such as infrared, wireless, and microwave) manner. The computer-readable storage medium may be any available medium accessible by a computer or a data storage device such as a server or a data center that integrates one or more available media. The available medium may be a magnetic medium (for example, a floppy disk, a hard disk, or a magnetic tape), an optical medium (for example, a DVD), a semiconductor medium (for example, a solid state disk (Solid State Disk, SSD)), or the like.

It should be understood that, in embodiments of this application, sequence numbers of the foregoing processes do not mean execution sequences. The execution sequences of the processes should be determined based on functions and internal logic of the processes, and should not be construed as any limitation on the implementation processes of embodiments of this application.

It may be clearly understood by a person skilled in the art that, for the purpose of convenient and brief description, for a detailed working process of the foregoing system, apparatus, and unit, reference may be made to corresponding processes in the foregoing method embodiments, and details are not described herein again.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of and the claims.

**Claims**

1. A key generation method, comprising:

   transmitting, by a first device, a first wireless signal, and receiving a first reflected signal, wherein the first reflected signal is transmitted by a second device based on the first wireless signal; and
   generating, by the first device, a first key based on received strength of the first reflected signal.

2. The method according to claim 1, wherein the generating, by the first device, a first key based on received strength of the first reflected signal comprises:

   generating, by the first device, a first sequence based on the received strength of the first reflected signal; and
   generating, by the first device, the first key based on the first sequence.

3. The method according to claim 2, wherein the generating, by the first device, a first sequence based on the received strength of the first reflected signal comprises:

   generating, by the first device, the $i^{th}$ first initial binary sequence based on received strength of the $i^{th}$ first reflected signal, wherein i is an integer greater than or equal to 1; and
   combining, by the first device, the $i^{th}$ first initial binary sequence and the $(i-1)^{th}$ first combination sequence, to obtain the $i^{th}$ first combination sequence, and using the $i^{th}$ first combination sequence as the first sequence.

4. The method according to claim 3, wherein the generating, by the first device, the $i^{th}$ first initial binary sequence based on received strength of the $i^{th}$ first reflected signal comprises:

   determining, by the first device, the $i^{th}$ path loss based on the received strength of the $i^{th}$ first reflected signal and transmission strength of the $i^{th}$ first wireless signal;
   determining, by the first device, the $i^{th}$ channel estimation value based on the $i^{th}$ path loss and the transmission strength of the $i^{th}$ first wireless signal; and
quantizing, by the first device, the $i^{th}$ channel estimation value based on a preset quantization algorithm, to obtain the $i^{th}$ first initial binary sequence.

5. The method according to claim 4, wherein the determining, by the first device, the $i^{th}$ path loss based on the received strength of the $i^{th}$ first reflected signal and transmission strength of the $i^{th}$ first wireless signal comprises: subtracting, by the first device, a reflection loss of the second device and the received strength of the $i^{th}$ first reflected signal from a sum of the transmission strength of the $i^{th}$ first wireless signal, an antenna gain of the first device, and an antenna gain of the second device, to obtain a first value; and dividing the first value by 2 to obtain the $i^{th}$ path loss.

6. The method according to claim 4 or 5, wherein the determining, by the first device, the $i^{th}$ channel estimation value based on the $i^{th}$ path loss and the transmission strength of the $i^{th}$ first wireless signal comprises: subtracting, by the first device, the $i^{th}$ path loss from a sum of adding up the transmission strength of the $i^{th}$ first wireless signal and an antenna gain of the first device, to obtain the $i^{th}$ channel estimation value.

7. The method according to any one of claims 4 to 6, wherein the method further comprises:

in a case in which the $i^{th}$ channel estimation value falls within a first quantization range, setting, by the first device, the $i^{th}$ first indicator bit to a first value, wherein the $i^{th}$ first indicator bit is one of M first indicator bits, and M is an integer greater than or equal to 1; or
in a case in which the $i^{th}$ channel estimation value does not fall within the first quantization range, setting, by the first device, the $i^{th}$ first indicator bit to a second value.

8. The method according to claim 7, wherein the method further comprises: transmitting, by the first device, first information to the second device, wherein the first information comprises the M first indicator bits.

9. The method according to any one of claims 4 to 8, wherein the quantizing, by the first device, the $i^{th}$ channel estimation value based on a preset quantization algorithm, to obtain the $i^{th}$ first initial binary sequence comprises:

quantizing, by the first device, the $i^{th}$ channel estimation value based on the preset quantization algorithm and first strength feature related information, to obtain the $i^{th}$ first initial binary sequence, wherein
the first strength feature related information comprises at least one of following: an average value of first strength feature information or a standard deviation of the first strength feature information.

10. The method according to any one of claims 4 to 9, wherein the preset quantization algorithm comprises one of following:
a channel quantization CQ algorithm, a uniform quantization algorithm, a channel quantization with guard-band CQG algorithm, or a channel quantization alternating CQA algorithm.

11. The method according to any one of claims 3 to 10, wherein the received strength of the $i^{th}$ first reflected signal is an average value of a plurality of measurement values obtained by performing a plurality of times of measurement on the $i^{th}$ first reflected signal.

12. The method according to any one of claims 2 to 11, wherein the generating, by the first device, the first key based on the first sequence comprises:

in a case in which a first condition is met, generating, by the first device, the first key based on the first sequence, wherein
the first condition comprises at least one of following:

a total length of the first sequence is greater than or equal to a preset length; or
a quantity of times the first wireless signal is transmitted reaches a preset quantity, wherein the first wireless signal is used by the second device to generate a second key.

13. The method according to claim 12, wherein the method further comprises: transmitting, by the first device, second information to the second device, wherein the second information comprises at least one of following: the preset length or the preset quantity.

14. The method according to any one of claims 2 to 13, wherein the generating, by the first device, the first key based on the first sequence comprises:
obtaining, by the first device, a second sequence based on the first sequence, and using the second sequence as the first key.

15. The method according to claim 14, wherein the obtaining, by the first device, a second sequence based on the first sequence comprises:

determining, by the first device, a target binary sequence from the first sequence based on M second indicator bits, wherein the M second indicator bits are used to indicate whether received strength of receiving M first wireless signals by the second device falls within a second quantization range; and
forming, by the first device, the second sequence based on the target binary sequence.

16. The method according to claim 15, wherein the determining, by the first device, a target binary sequence from the first sequence based on M second indicator bits comprises:

combining, by the first device, the M second indicator bits and M first indicator bits, to obtain M combination indicator bits; and
determining, by the first device, the target binary sequence from the first sequence based on the M combination indicator bits.

17. The method according to claim 16, wherein the combining, by the first device, the M second indicator bits and M first indicator bits, to obtain M combination indicator bits comprises:

in a case in which both the $r^{th}$ second indicator bit and the $r^{th}$ first indicator bit are a first value, determining, by the first device, that the $r^{th}$ combination indicator bit is the first value, wherein r is an integer greater than or equal to 1 and less than or equal to M; or
in a case in which at least one of the $r^{th}$ second indicator bit and the $r^{th}$ first indicator bit is a second value, determining, by the first device, that the $r^{th}$ combination indicator bit is the second value.

18. The method according to claim 16 or 17, wherein the determining, by the first device, the target binary sequence from the first sequence based on the M combination indicator bits comprises:
in a case in which the $j^{th}$ combination indicator bit in the M combination indicator bits is a first value, determining, by the first device, that the $j^{th}$ group of binary bits in the first sequence is one of the target binary sequence, wherein j is an integer greater than or equal to 1 and less than or equal to M.

19. The method according to any one of claims 16 to 18, wherein the method further comprises:
receiving, by the first device, third information transmitted by the second device, wherein the third information comprises the M second indicator bits.

20. The method according to any one of claims 2 to 13, wherein the generating, by the first device, the first key based on the first sequence comprises:
using, by the first device, the first sequence as the first key.

21. A key generation method, comprising:

receiving, by a second device, a first wireless signal; and
generating, by the second device, a second key based on received strength of the first wireless signal.

22. The method according to claim 21, wherein the generating, by the second device, a second key based on received strength of the first wireless signal comprises:

generating, by the second device, a third sequence based on the received strength of the first wireless signal; and
generating, by the second device, the second key based on the third sequence.

23. The method according to claim 22, wherein the generating, by the second device, a third sequence based on the received strength of the first wireless signal comprises:

generating, by the second device, the $w^{th}$ second initial binary sequence based on received strength of the $w^{th}$ first wireless signal, wherein w is an integer greater than or equal to 1; and

combining, by the second device, the $w^{th}$ second initial binary sequence and the $(w-1)^{th}$ second combination sequence, to obtain the $w^{th}$ second combination sequence, and using the $w^{th}$ first combination sequence as the third sequence.

24. The method according to claim 23, wherein the generating, by the second device, the $w^{th}$ second initial binary sequence based on received strength of the $w^{th}$ first wireless signal comprises:
quantizing, by the second device, the received strength of the $w^{th}$ first wireless signal based on a preset quantization algorithm, to obtain the $w^{th}$ second initial binary sequence.

25. The method according to claim 24, wherein the method further comprises:

in a case in which the received strength of the $w^{th}$ first wireless signal falls within a second quantization range, setting the $w^{th}$ second indicator bit to a first value, wherein the $w^{th}$ second indicator bit is one of M second indicator bits; or
in a case in which the received strength of the $w^{th}$ first wireless signal does not fall within the second quantization range, setting the $w^{th}$ second indicator bit to a second value.

26. The method according to claim 25, wherein the method further comprises:
transmitting, by the second device, third information to a first device, wherein the third information comprises the M second indicator bits.

27. The method according to any one of claims 23 to 26, wherein the quantizing, by the second device, the received strength of the $w^{th}$ first wireless signal based on a preset quantization algorithm, to obtain the $w^{th}$ second initial binary sequence comprises:

quantizing, by the second device, the received strength of the $w^{th}$ first wireless signal based on the preset quantization algorithm and second strength feature related information, to obtain the $w^{th}$ second initial binary sequence, wherein
the second strength feature related information comprises at least one of following: an average value of second strength feature information or a standard deviation of the second strength feature information.

28. The method according to any one of claims 23 to 27, wherein the preset quantization algorithm comprises one of following:
a channel quantization CQ algorithm, a uniform quantization algorithm, a channel quantization with guard-band CQG algorithm, or a channel quantization alternating CQA algorithm.

29. The method according to any one of claims 23 to 28, wherein the received strength of the $w^{th}$ first wireless signal is an average value of a plurality of measurement values obtained by performing a plurality of times of measurement on the $w^{th}$ first wireless signal.

30. The method according to any one of claims 22 to 29, wherein the generating, by the second device, the second key based on the third sequence comprises:

in a case in which a second condition is met, generating, by the second device, the second key based on the third sequence, wherein
the second condition comprises one of following:

a total length of the third sequence is greater than or equal to a preset length; or
a quantity of times the first wireless signal is received reaches a preset quantity, wherein the first wireless signal is used by the second device to generate the second key.

31. The method according to claim 30, wherein the method further comprises:
receiving, by the second device, second information transmitted by the first device, wherein the second information comprises at least one of following: the preset length or the preset quantity.

32. The method according to any one of claims 22 to 31, wherein the generating, by the second device, the second key based on the third sequence comprises:
obtaining, by the second device, a fourth sequence based on the third sequence, and using the fourth sequence as the second key.

33. The method according to claim 32, wherein the obtaining, by the second device, a fourth sequence based on the third sequence comprises:

determining, by the second device, a target binary sequence from the third sequence based on M first indicator bits, wherein the M first indicator bits are used to indicate whether a channel estimation value obtained by the first device based on received strength of M first reflected signals falls within a first quantization range; and
forming, by the second device, the fourth sequence based on the target binary sequence.

34. The method according to claim 33, wherein the determining, by the second device, a target binary sequence from the third sequence based on M first indicator bits comprises:

combining, by the second device, the M first indicator bits and M second indicator bits, to obtain M combination indicator bits; and
determining, by the second device, the target binary sequence from the third sequence based on the M combination indicator bits.

35. The method according to claim 34, wherein the combining, by the second device, the M first indicator bits and M second indicator bits, to obtain M combination indicator bits comprises:

in a case in which both the $q^{th}$ second indicator bit and the $q^{th}$ first indicator bit are a first value, determining, by the second device, that the $q^{th}$ combination indicator bit is the first value, wherein q is an integer greater than or equal to 1 and less than or equal to M; or
in a case in which at least one of the $q^{th}$ second indicator bit and the $q^{th}$ first indicator bit is a second value, determining, by the second device, that the $q^{th}$ combination indicator bit is the second value.

36. The method according to claim 34 or 35, wherein the determining, by the second device, the target binary sequence from the third sequence based on the M combination indicator bits comprises:
in a case in which the $t^{th}$ combination indicator bit in the M combination indicator bits is a first value, determining, by the second device, that the $t^{th}$ group of binary bits in the third sequence is one of the target binary sequence, wherein t is an integer greater than or equal to 1 and less than or equal to M.

37. The method according to any one of claims 33 to 36, wherein the method further comprises:
receiving, by the second device, first information transmitted by the first device, wherein the first information comprises the M first indicator bits.

38. The method according to any one of claims 22 to 31, wherein the generating, by the second device, the second key based on the third sequence comprises:
using, by the second device, the third sequence as the second key.

39. An information check method, comprising:

transmitting, by a first device, fourth information to a second device, wherein the fourth information comprises check information generated based on a first key, the first key is related to received strength of a first reflected signal, and the first reflected signal is transmitted by the second device based on a first wireless signal transmitted by the first device; and
receiving, by the first device, fifth information transmitted by the second device, wherein the fifth information comprises a check result of checking on a second key against the first key, and the second key is related to received strength of receiving the first wireless signal by the second device.

40. The method according to claim 39, wherein the first key is generated based on a first sequence, and the first sequence is generated based on the received strength of the first reflected signal.

41. The method according to claim 40, wherein the first sequence is the $i^{th}$ first combination sequence, and i is an integer greater than or equal to 1;

the i<sup>th</sup> first combination sequence is obtained by combining the i<sup>th</sup> first initial binary sequence and the (i-1)<sup>th</sup> first combination sequence; and

the i<sup>th</sup> first initial binary sequence is generated based on received strength of the i<sup>th</sup> first reflected signal.

42. The method according to claim 41, wherein

the i<sup>th</sup> first initial binary sequence is obtained by quantizing the i<sup>th</sup> channel estimation value based on a preset quantization algorithm; and

the i<sup>th</sup> channel estimation value is determined based on the i<sup>th</sup> path loss and transmission strength of the i<sup>th</sup> first wireless signal, wherein the i<sup>th</sup> path loss is determined based on the received strength of the i<sup>th</sup> first reflected signal and the transmission strength of the i<sup>th</sup> first wireless signal.

43. The method according to claim 42, wherein the i<sup>th</sup> channel estimation value is obtained by subtracting the i<sup>th</sup> path loss from a sum of adding up the transmission strength of the i<sup>th</sup> first wireless signal and an antenna gain of the first device.

44. The method according to claim 42 or 43, wherein the i<sup>th</sup> path loss is obtained by dividing a first value by 2, and the first value is obtained by subtracting a reflection loss of the second device and the received strength of the i<sup>th</sup> first reflected signal from a sum of the transmission strength of the i<sup>th</sup> first wireless signal, an antenna gain of the first device, and an antenna gain of the second device.

45. The method according to any one of claims 42 to 44, wherein the method further comprises:

in a case in which the i<sup>th</sup> channel estimation value falls within a first quantization range, setting the i<sup>th</sup> first indicator bit to a first value, wherein the i<sup>th</sup> first indicator bit is one of M first indicator bits; or

in a case in which the i<sup>th</sup> channel estimation value does not fall within the first quantization range, setting the i<sup>th</sup> first indicator bit to a second value.

46. The method according to claim 45, wherein the method further comprises:
transmitting, by the first device, first information to the second device, wherein the first information comprises the M first indicator bits.

47. The method according to any one of claims 42 to 46, wherein the i<sup>th</sup> first initial binary sequence is obtained by quantizing the i<sup>th</sup> channel estimation value based on the preset quantization algorithm and first strength feature related information, and

the first strength feature related information comprises at least one of following: an average value of first strength feature information or a standard deviation of the first strength feature information.

48. The method according to any one of claims 42 to 47, wherein the preset quantization algorithm comprises one of following:
a channel quantization CQ algorithm, a uniform quantization algorithm, a channel quantization with guard-band CQG algorithm, or a channel quantization alternating CQA algorithm.

49. The method according to any one of claims 41 to 48, wherein the received strength of the i<sup>th</sup> first reflected signal is an average value of a plurality of measurement values obtained by performing a plurality of times of measurement on the i<sup>th</sup> first reflected signal.

50. The method according to any one of claims 40 to 49, wherein the first key is generated based on the first sequence in a case in which a first condition is met, and
the first condition comprises one of following:

a total length of the first sequence is greater than or equal to a preset length; or
a quantity of times the first wireless signal is transmitted reaches a preset quantity, wherein the first wireless signal is used by the second device to generate the second key.

51. The method according to claim 50, wherein the method further comprises:
transmitting, by the first device, second information to the second device, wherein the second information comprises at least one of following: the preset length or the preset quantity.

52. The method according to any one of claims 40 to 51, wherein the first key is a second sequence obtained based on the first sequence.

53. The method according to claim 52, wherein the second sequence comprises a target binary sequence, the target binary sequence is determined from the first sequence based on M second indicator bits, and the M second indicator bits are used to indicate whether received strength of receiving M first wireless signals by the second device falls within a second quantization range.

54. The method according to claim 53, wherein the target binary sequence is determined from the first sequence based on M combination indicator bits, and
the M combination indicator bits are obtained by combining the M second indicator bits and M first indicator bits.

55. The method according to claim 54, wherein the method further comprises:

in a case in which both the $r^{th}$ second indicator bit and the $r^{th}$ first indicator bit are a first value, determining, by the first device, that the $r^{th}$ combination indicator bit is the first value, wherein r is an integer greater than or equal to 1 and less than or equal to M; or
in a case in which at least one of the $r^{th}$ second indicator bit and the $r^{th}$ first indicator bit is a second value, determining, by the first device, that the $r^{th}$ combination indicator bit is the second value.

56. The method according to claim 54 or 55, wherein the method further comprises:
in a case in which the $j^{th}$ combination indicator bit in the M combination indicator bits is a first value, determining, by the first device, that the $j^{th}$ group of binary bits in the first sequence is one of the target binary sequence, wherein j is an integer greater than or equal to 1 and less than or equal to M.

57. The method according to any one of claims 53 to 56, wherein the method further comprises:
receiving, by the first device, third information transmitted by the second device, wherein the third information comprises the M second indicator bits.

58. The method according to any one of claims 40 to 51, wherein the first key is the first sequence.

59. The method according to any one of claims 39 to 58, wherein the check information is one of following:

a first parity check code generated based on the first key; or
information obtained by performing hash calculation based on the first key.

60. The method according to claim 59, wherein the transmitting, by a first device, fourth information to a second device comprises:

in a case in which the first device receives sixth information transmitted by the second device, transmitting, by the first device, the fourth information to the second device, wherein
the sixth information comprises a first result obtained after a first random number is encrypted based on the second key.

61. The method according to claim 60, wherein the check information is a second result obtained by performing hash calculation on a second random number, and the second random number is obtained by decrypting the first result based on the first key.

62. The method according to claim 61, wherein the method further comprises:

in a case in which the first device does not receive the sixth information transmitted by the second device, transmitting, by the first device, a second wireless signal to the second device, wherein
the second wireless signal is used to instruct the second device to decrement a count value of a slot counter, and is not used by the second device to generate the second key.

63. The method according to any one of claims 59 to 62, wherein the fifth information comprises one of following:

a first check result obtained after encryption is performed based on the second key, wherein the first check result indicates that the second key is consistent with the first key; or
a second check result, wherein the second check result indicates that the second key is inconsistent with the first key.

64. An information check method, comprising:

receiving, by a second device, fourth information transmitted by a first device, wherein the fourth information comprises check information generated based on a first key, the first key is related to received signal strength of a first reflected signal, and the first reflected signal is transmitted by the second device based on a first wireless signal transmitted by the first device; and
transmitting, by the second device, fifth information to the first device, wherein the fifth information comprises a check result of checking on a second key against the first key, and the second key is related to received strength of receiving the first wireless signal by the second device.

65. The method according to claim 64, wherein the second key is generated based on a third sequence, and the third sequence is generated based on the received strength of the first wireless signal.

66. The method according to claim 65, wherein the third sequence is the $w^{th}$ second combination sequence, and w is an integer greater than or equal to 1;

the $w^{th}$ second combination sequence is obtained by combining the $w^{th}$ second initial binary sequence and the $(w-1)^{th}$ second combination sequence; and
the $w^{th}$ second initial binary sequence is generated based on received strength of the $w^{th}$ first wireless signal.

67. The method according to claim 66, wherein the $w^{th}$ second initial binary sequence is obtained by quantizing the received strength of the $w^{th}$ first wireless signal based on a preset quantization algorithm.

68. The method according to claim 67, wherein the method further comprises:

in a case in which the received strength of the $w^{th}$ first wireless signal falls within a second quantization range, setting the $w^{th}$ second indicator bit to a first value, wherein the $w^{th}$ second indicator bit is one of M second indicator bits; or
in a case in which the received strength of the $w^{th}$ first wireless signal does not fall within the second quantization range, setting the $w^{th}$ second indicator bit to a second value.

69. The method according to claim 68, wherein the method further comprises:
transmitting, by the second device, third information to a first device, wherein the third information comprises the M second indicator bits.

70. The method according to any one of claims 67 to 69, wherein the $w^{th}$ second initial binary sequence is obtained by quantizing the received strength of the $w^{th}$ first wireless signal based on the preset quantization algorithm and second strength feature related information, wherein
the second strength feature related information comprises at least one of following: an average value of second strength feature information or a standard deviation of the second strength feature information.

71. The method according to any one of claims 67 to 70, wherein the preset quantization algorithm comprises one of following:
a channel quantization CQ algorithm, a uniform quantization algorithm, a channel quantization with guard-band CQG algorithm, or a channel quantization alternating CQA algorithm.

72. The method according to any one of claims 67 to 71, wherein the received strength of the $w^{th}$ first wireless signal is an average value of a plurality of measurement values obtained by performing a plurality of times of measurement on the $w^{th}$ first wireless signal.

73. The method according to any one of claims 65 to 71, wherein the second key is generated based on the third sequence in a case in which a second condition is met, and
the second condition comprises one of following:

a total length of the third sequence is greater than or equal to a preset length; or
a quantity of times the first wireless signal is received reaches a preset quantity, wherein the first wireless signal is used by the second device to generate the second key.

74. The method according to claim 73, wherein the method further comprises:
receiving, by the second device, second information transmitted by the first device, wherein the second information comprises at least one of following: the preset length or the preset quantity.

75. The method according to any one of claims 65 to 74, wherein the second key is a fourth sequence obtained based on the third sequence.

76. The method according to claim 75, wherein the fourth sequence comprises a target binary sequence, the target binary sequence is determined from the third sequence based on M first indicator bits, and the M first indicator bits are used to indicate whether a channel estimation value obtained by the first device based on received strength of M first reflected signals falls within a first quantization range.

77. The method according to claim 76, wherein the target binary sequence is determined from the third sequence based on M combination indicator bits, and
the M combination indicator bits are obtained by combining the M second indicator bits and M first indicator bits.

78. The method according to claim 77, wherein the method further comprises:

in a case in which both the $q^{th}$ second indicator bit and the $q^{th}$ first indicator bit are a first value, determining, by the second device, that the $q^{th}$ combination indicator bit is the first value, wherein q is an integer greater than or equal to 1 and less than or equal to M; or
in a case in which at least one of the $q^{th}$ second indicator bit and the $q^{th}$ first indicator bit is a second value, determining, by the second device, that the $q^{th}$ combination indicator bit is the second value.

79. The method according to claim 78, wherein the method further comprises:

in a case in which the $t^{th}$ combination indicator bit in the M combination indicator bits is the first value, determining, by the second device, that the $t^{th}$ group of binary bits is one of the target binary sequence, wherein the $t^{th}$ group of binary bits is generated based on received strength of the $t^{th}$ first wireless signal, and t is an integer greater than or equal to 1 and less than or equal to M; or
in a case in which the $t^{th}$ combination indicator bit in the M combination indicator bits is the second value, determining, by the second device, that the $t^{th}$ group of binary bits is not one of the target binary sequence.

80. The method according to any one of claims 77 to 79, wherein the method further comprises:
receiving, by the second device, first information transmitted by the first device, wherein the first information comprises the M first indicator bits.

81. The method according to any one of claims 65 to 74, wherein the second key is the third sequence.

82. The method according to any one of claims 64 to 81, wherein the check information is one of following:

a first parity check code generated based on the first key; or
information obtained by performing hash calculation based on the first key.

83. The method according to claim 82, wherein the method further comprises:
generating, by the second device, a second parity check code based on the second key, and determining a check result based on the second parity check code and the first parity check code.

84. The method according to claim 82, wherein the method further comprises:
in a case in which a count value of a slot counter is reset to zero, transmitting, by the second device, sixth information to the first device, wherein the sixth information comprises a first result obtained after a first random number is encrypted based on the second key.

85. The method according to claim 84, wherein the check information is a second result obtained by performing hash calculation on a second random number, and the second random number is obtained by decrypting the first result based on the first key.

86. The method according to claim 85, wherein the method further comprises:

    performing, by the second device, hash calculation on the first random number, to obtain a third result; and
    performing, by the second device, consistency check on the third result against the second result, to obtain a check result.

87. The method according to claim 86, wherein the performing, by the second device, consistency check on the third result against the second result, to obtain a check result comprises:

    in a case in which the third result is consistent with the second result, obtaining, by the second device, a first check result, wherein the first check result indicates that the second key is consistent with the first key; or
    in a case in which the third result is inconsistent with the second result, obtaining, by the second device, a second check result, wherein the second check result indicates that the second key is inconsistent with the first key.

88. The method according to claim 87, wherein the fifth information comprises one of following:

    the first check result obtained after encryption is performed based on the second key; or
    the second check result.

89. The method according to any one of claims 84 to 88, wherein

    the count value of the slot counter is decremented based on the first wireless signal; and/or,
    the count value of the slot counter is decremented based on a second wireless signal, wherein the second wireless signal is used to instruct the second device to decrement a count value of the slot counter of the second device, and is not used by the second device to generate the second key.

90. A first device, comprising:

    a first communications unit, configured to transmit a first wireless signal and receive a first reflected signal, wherein the first reflected signal is transmitted by a second device based on the first wireless signal; and
    a first processing unit, configured to generate a first key based on received strength of the first reflected signal.

91. The first device according to claim 90, wherein the first processing unit is configured to generate a first sequence based on the received strength of the first reflected signal, and generate the first key based on the first sequence.

92. The first device according to claim 91, wherein the first processing unit is configured to:
    generate the $i^{th}$ first initial binary sequence based on received strength of the $i^{th}$ first reflected signal, wherein i is an integer greater than or equal to 1; and combine the $i^{th}$ first initial binary sequence and the $(i-1)^{th}$ first combination sequence, to obtain the $i^{th}$ first combination sequence, and use the $i^{th}$ first combination sequence as the first sequence.

93. The first device according to claim 92, wherein the first processing unit is configured to: determine the $i^{th}$ path loss based on the received strength of the $i^{th}$ first reflected signal and transmission strength of the $i^{th}$ first wireless signal; determine, by the first device, the $i^{th}$ channel estimation value based on the $i^{th}$ path loss and the transmission strength of the $i^{th}$ first wireless signal; and quantize, by the first device, the $i^{th}$ channel estimation value based on a preset quantization algorithm, to obtain the $i^{th}$ first initial binary sequence.

94. The first device according to claim 93, wherein the first processing unit is configured to: subtract a reflection loss of the second device and the received strength of the $i^{th}$ first reflected signal from a sum of the transmission strength of the $i^{th}$ first wireless signal, an antenna gain of the first device, and an antenna gain of the second device, to obtain a first value; and divide the first value by 2 to obtain the $i^{th}$ path loss.

95. The first device according to claim 93 or 94, wherein the first processing unit is configured to subtract the $i^{th}$ path loss from a sum of adding up the transmission strength of the $i^{th}$ first wireless signal and an antenna gain of the first device, to obtain the $i^{th}$ channel estimation value.

96. The first device according to any one of claims 93 to 95, wherein the first processing unit is configured to:

in a case in which the $i^{th}$ channel estimation value falls within a first quantization range, set the $i^{th}$ first indicator bit to a first value, wherein the $i^{th}$ first indicator bit is one of M first indicator bits, and M is an integer greater than or equal to 1; or
in a case in which the $i^{th}$ channel estimation value does not fall within the first quantization range, set the $i^{th}$ first indicator bit to a second value.

97. The first device according to claim 96, wherein the first communications unit is configured to transmit first information to the second device, and the first information comprises the M first indicator bits.

98. The first device according to any one of claims 93 to 97, wherein the first processing unit is configured to quantize the $i^{th}$ channel estimation value based on the preset quantization algorithm and first strength feature related information, to obtain the $i^{th}$ first initial binary sequence, wherein
the first strength feature related information comprises at least one of following: an average value of first strength feature information or a standard deviation of the first strength feature information.

99. The first device according to any one of claims 93 to 98, wherein the preset quantization algorithm comprises one of following:
a channel quantization CQ algorithm, a uniform quantization algorithm, a channel quantization with guard-band CQG algorithm, or a channel quantization alternating CQA algorithm.

100. The first device according to any one of claims 92 to 99, wherein the received strength of the $i^{th}$ first reflected signal is an average value of a plurality of measurement values obtained by performing a plurality of times of measurement on the $i^{th}$ first reflected signal.

101. The first device according to any one of claims 91 to 100, wherein the first processing unit is configured to generate the first key based on the first sequence in a case in which a first condition is met, and
the first condition comprises at least one of following:

a total length of the first sequence is greater than or equal to a preset length; or
a quantity of times the first wireless signal is transmitted reaches a preset quantity, wherein the first wireless signal is used by the second device to generate a second key.

102. The first device according to claim 101, wherein the first communications unit is configured to transmit second information to the second device, and the second information comprises at least one of following: the preset length or the preset quantity.

103. The first device according to any one of claims 91 to 102, wherein the first processing unit is configured to obtain a second sequence based on the first sequence, and use the second sequence as the first key.

104. The first device according to claim 103, wherein the first processing unit is configured to determine a target binary sequence from the first sequence based on M second indicator bits, wherein the M second indicator bits are used to indicate whether received strength of receiving M first wireless signals by the second device falls within a second quantization range; and the first device forms the second sequence based on the target binary sequence.

105. The first device according to claim 104, wherein the first processing unit is configured to combine the M second indicator bits and M first indicator bits, to obtain M combination indicator bits, and determine the target binary sequence from the first sequence based on the M combination indicator bits.

106. The first device according to claim 105, wherein the first processing unit is configured to: in a case in which both the $r^{th}$

second indicator bit and the $r^{th}$ first indicator bit are a first value, determine that the $r^{th}$ combination indicator bit is the first value, wherein r is an integer greater than or equal to 1 and less than or equal to M; or

in a case in which at least one of the $r^{th}$ second indicator bit and the $r^{th}$ first indicator bit is a second value, determine that the $r^{th}$ combination indicator bit is the second value.

**107.**
The first device according to claim 105 or 106, wherein the first processing unit is configured to: in a case in which the $j^{th}$ combination indicator bit in the M combination indicator bits is a first value, determine that the $j^{th}$ group of binary bits in the first sequence is one of the target binary sequence, wherein j is an integer greater than or equal to 1 and less than or equal to M.

**108.**
The first device according to any one of claims 105 to 107, wherein the first communications unit is configured to receive third information transmitted by the second device, and the third information comprises the M second indicator bits.

**109.**
The first device according to any one of claims 91 to 102, wherein the first processing unit is configured to use the first sequence as the first key.

**110.**
A second device, comprising:

a second communications unit, configured to receive a first wireless signal; and
a second processing unit, configured to generate a second key based on received strength of the first wireless signal.

**111.** The second device according to claim 110, wherein the second processing unit is configured to generate a third sequence based on the received strength of the first wireless signal, and generate the second key based on the third sequence.

**112.**
The second device according to claim 111, wherein the second processing unit is configured to: generate the $w^{th}$ second initial binary sequence based on received strength of the $w^{th}$ first wireless signal, wherein w is an integer greater than or equal to 1; and combine the $w^{th}$ second initial binary sequence and the $(w-1)^{th}$ second combination sequence, to obtain the $w^{th}$ second combination sequence, and use the $w^{th}$ first combination sequence as the third sequence.

**113.**
The second device according to claim 112, wherein the second processing unit is configured to quantize the received strength of the $w^{th}$ first wireless signal based on a preset quantization algorithm, to obtain the $w^{th}$ second initial binary sequence.

**114.**
The second device according to claim 113, wherein the second processing unit is configured to: in a case in which the received strength of the $w^{th}$ first wireless signal falls within a second quantization range, set the $w^{th}$ second indicator bit to a first value, wherein the $w^{th}$ second indicator bit is one of M second indicator bits; or

in a case in which the received strength of the $w^{th}$ first wireless signal does not fall within the second quantization range, setting the $w^{th}$ second indicator bit to a second value.

**115.**
The second device according to claim 114, wherein the second communications unit is configured to transmit third information to a first device, wherein the third information comprises the M second indicator bits.

**116.**
The second device according to any one of claims 112 to 115, wherein the second processing unit is configured to quantize the received strength of the $w^{th}$ first wireless signal based on a preset quantization algorithm and second strength feature related information, to obtain the $w^{th}$ second initial binary sequence, wherein

the second strength feature related information comprises at least one of following: an average value of second strength feature information or a standard deviation of the second strength feature information.

**117.**

The second device according to any one of claims 112 to 116, wherein the preset quantization algorithm comprises one of following:

a channel quantization CQ algorithm, a uniform quantization algorithm, a channel quantization with guard-band CQG algorithm, or a channel quantization alternating CQA algorithm.

**118.**

The second device according to any one of claims 112 to 117, wherein the received strength of the $w^{th}$ first wireless signal is an average value of a plurality of measurement values obtained by performing a plurality of times of measurement on the $w^{th}$ first wireless signal.

**119.**

The second device according to any one of claims 111 to 118, wherein the second processing unit is configured to generate the second key based on the third sequence in a case in which a second condition is met, and

the second condition comprises one of following:

a total length of the third sequence is greater than or equal to a preset length; or
a quantity of times the first wireless signal is received reaches a preset quantity, wherein the first wireless signal is used by the second device to generate the second key.

**120.**

The second device according to claim 119, wherein the second communications unit is configured to receive second information transmitted by a first device, and the second information comprises at least one of following: the preset length or the preset quantity.

**121.**

The second device according to any one of claims 111 to 120, wherein the second processing unit is configured to obtain a fourth sequence based on the third sequence, and use the fourth sequence as the second key.

**122.**

The second device according to claim 121, wherein the second processing unit is configured to: determine a target binary sequence from the third sequence based on M first indicator bits, wherein the M first indicator bits are used to indicate whether a channel estimation value obtained by the first device based on received strength of M first reflected signals falls within a first quantization range; and form the fourth sequence based on the target binary sequence.

**123.**

The second device according to claim 122, wherein the second processing unit is configured to combine the M first indicator bits and M second indicator bits, to obtain M combination indicator bits, and determine the target binary sequence from the third sequence based on the M combination indicator bits.

**124.**

The second device according to claim 123, wherein the second processing unit is configured to: in a case in which both the $q^{th}$ second indicator bit and the $q^{th}$ first indicator bit are a first value, determine that the $q^{th}$ combination indicator bit is the first value, wherein q is an integer greater than or equal to 1 and less than or equal to M; or in a case in which at least one of the $q^{th}$ second indicator bit and the $q^{th}$ first indicator bit is a second value, determine that the $q^{th}$ combination indicator bit is the second value.

**125.**

The second device according to claim 123 or 124, wherein the second processing unit is configured to: in a case in which the $t^{th}$ combination indicator bit in the M combination indicator bits is a first value, determine, by the second device, that the $t^{th}$ group of binary bits in the third sequence is one of the target binary sequence, wherein t is an integer greater than or equal to 1 and less than or equal to M.

**126.**

The second device according to any one of claims 122 to 125, wherein the second communications unit is configured to receive first information transmitted by the first device, and the first information comprises the M first indicator bits.

**127.**

The second device according to any one of claims 111 to 120, wherein the second processing unit is configured to use the third sequence as the second key.

**128.**

A first device, comprising:

a first communications unit, configured to: transmit fourth information to a second device, wherein the fourth information comprises check information generated based on a first key, the first key is related to received strength of a first reflected signal, and the first reflected signal is transmitted by the second device based on a first wireless signal transmitted by the first device;

and receive fifth information transmitted by the second device, wherein the fifth information comprises a check result of checking on a second key against the first key, and the second key is related to received strength of receiving the first wireless signal by the second device.

**129.**

The first device according to claim 128, wherein the first key is generated based on a first sequence, and the first sequence is generated based on the received strength of the first reflected signal.

**130.**

The first device according to claim 129, wherein the first sequence is the $i^{th}$ first combination sequence, and i is an integer greater than or equal to 1;

the $i^{th}$ first combination sequence is obtained by combining the $i^{th}$ first initial binary sequence and the $(i-1)^{th}$ first combination sequence; and

the $i^{th}$ first initial binary sequence is generated based on received strength of the $i^{th}$ first reflected signal.

**131.**

The first device according to claim 130, wherein

the $i^{th}$ first initial binary sequence is obtained by quantizing the $i^{th}$ channel estimation value based on a preset quantization algorithm; and

the $i^{th}$ channel estimation value is determined based on the $i^{th}$ path loss and transmission strength of the $i^{th}$ first wireless signal, wherein the $i^{th}$ path loss is determined based on the received strength of the $i^{th}$ first reflected signal and the transmission strength of the $i^{th}$ first wireless signal.

**132.**

The first device according to claim 131, wherein the $i^{th}$ channel estimation value is obtained by subtracting the $i^{th}$ path loss from a sum of adding up the transmission strength of the $i^{th}$ first wireless signal and an antenna gain of the first device.

**133.**

The first device according to claim 131 or 132, wherein the $i^{th}$ path loss is obtained by dividing a first value by 2, and the first value is obtained by subtracting a reflection loss of the second device and the received strength of the $i^{th}$ first reflected signal from a sum of the transmission strength of the $i^{th}$ first wireless signal, an antenna gain of the first device, and an antenna gain of the second device.

**134.**

The first device according to any one of claims 131 to 133, wherein the first device further comprises:

a first processing unit, configured to: in a case in which the $i^{th}$ channel estimation value falls within a first quantization range, set the $i^{th}$ first indicator bit to a first value, wherein the $i^{th}$ first indicator bit is one of M first indicator bits; or

in a case in which the $i^{th}$ channel estimation value does not fall within the first quantization range, set the $i^{th}$ first indicator bit to a second value.

**135.**

The first device according to claim 134, wherein the first communications unit is configured to transmit first information to the second device, and the first information comprises the M first indicator bits.

**136.**

The first device according to any one of claims 131 to 135, wherein the $i^{th}$ first initial binary sequence is obtained by quantizing the $i^{th}$ channel estimation value based on the preset quantization algorithm and first strength feature related information, and

the first strength feature related information comprises at least one of following: an average value of first strength feature information or a standard deviation of the first strength feature information.

**137.**

The first device according to any one of claims 131 to 136, wherein the preset quantization algorithm comprises one of following:

a channel quantization CQ algorithm, a uniform quantization algorithm, a channel quantization with guard-band CQG algorithm, or a channel quantization alternating CQA algorithm.

**138.**

The first device according to any one of claims 130 to 137, wherein the received strength of the $i^{th}$ first reflected signal is an average value of a plurality of measurement values obtained by performing a plurality of times of measurement on the $i^{th}$ first reflected signal.

**139.**

The first device according to any one of claims 129 to 138, wherein the first key is generated based on the first sequence in a case in which a first condition is met, and

the first condition comprises one of following:

a total length of the first sequence is greater than or equal to a preset length; or
a quantity of times the first wireless signal is transmitted reaches a preset quantity, wherein the first wireless signal is used by the second device to generate the second key.

**140.**

The first device according to claim 139, wherein the first communications unit is configured to transmit second information to the second device, and the second information comprises at least one of following: the preset length or the preset quantity.

**141.**

The first device according to any one of claims 129 to 140, wherein the first key is a second sequence obtained based on the first sequence.

**142.**

The first device according to claim 141, wherein the second sequence comprises a target binary sequence, the target binary sequence is determined from the first sequence based on M second indicator bits, and the M second indicator bits are used to indicate whether received strength of receiving M first wireless signals by the second device falls within a second quantization range.

**143.**

The first device according to claim 142, wherein the target binary sequence is determined from the first sequence based on M combination indicator bits, and

the M combination indicator bits are obtained by combining the M second indicator bits and M first indicator bits.

**144.**

The first device according to claim 143, wherein the first processing unit is configured to: in a case in which both the $r^{th}$ second indicator bit and the $r^{th}$ first indicator bit are a first value, determine that the $r^{th}$ combination indicator bit is the first value, wherein r is an integer greater than or equal to 1 and less than or equal to M; or

in a case in which at least one of the $r^{th}$ second indicator bit and the $r^{th}$ first indicator bit is a second value, determine that the $r^{th}$ combination indicator bit is the second value.

**145.**

The first device according to claim 143 or 144, wherein the first processing unit is configured to: in a case in which the $j^{th}$ combination indicator bit in the M combination indicator bits is a first value, determine that the $j^{th}$ group of binary bits in the first sequence is one of the target binary sequence, wherein j is an integer greater than or equal to 1 and less than or equal to M.

**146.**

The first device according to any one of claims 142 to 145, wherein the first communications unit is configured to receive third information transmitted by the second device, and the third information comprises the M second indicator bits.

**147.**

The first device according to any one of claims 129 to 140, wherein the first key is the first sequence.

**148.**

The first device according to any one of claims 128 to 147, wherein the check information is one of following:

a first parity check code generated based on the first key; or
information obtained by performing hash calculation based on the first key.

**149.**

The first device according to claim 148, wherein the first communications unit is configured to: in a case in which sixth information transmitted by the second device is received, transmit the fourth information to the second device, wherein the sixth information comprises a first result obtained after a first random number is encrypted based on the second key.

**150.**

The first device according to claim 149, wherein the check information is a second result obtained by performing hash calculation on a second random number, and the second random number is obtained by decrypting the first result based on the first key.

**151.**

The first device according to claim 150, wherein the first communications unit is configured to: in a case in which the sixth information transmitted by the second device is not received, transmit a second wireless signal to the second device, and the second wireless signal is used to instruct the second device to decrement a count value of a slot counter, and is not used by the second device to generate the second key.

**152.**

The first device according to any one of claims 148 to 151, wherein the fifth information comprises one of following:

a first check result obtained after encryption is performed based on the second key, wherein the first check result indicates that the second key is consistent with the first key; or
a second check result, wherein the second check result indicates that the second key is inconsistent with the first key.

**153.**

A second device, comprising:
a second communications unit, configured to: receive fourth information transmitted by a first device, wherein the fourth information comprises check information generated based on a first key, the first key is related to received signal strength of a first reflected signal, and the first reflected signal is transmitted by the second device based on a first wireless signal transmitted by the first device; and transmit fifth information to the first device, wherein the fifth information comprises a check result of checking on a second key against the first key, and the second key is related to received strength of receiving the first wireless signal by the second device.

**154.**

The second device according to claim 153, wherein the second key is generated based on a third sequence, and the third sequence is generated based on the received strength of the first wireless signal.

**155.**

The second device according to claim 154, wherein the third sequence is the $w^{th}$ second combination sequence, and w is an integer greater than or equal to 1;

the $w^{th}$ second combination sequence is obtained by combining the $w^{th}$ second initial binary sequence and the $(w-1)^{th}$ second combination sequence; and

the $w^{th}$ second initial binary sequence is generated based on received strength of the $w^{th}$ first wireless signal.

**156.**
The second device according to claim 155, wherein the $w^{th}$ second initial binary sequence is obtained by quantizing the received strength of the $w^{th}$ first wireless signal based on a preset quantization algorithm.

**157.**
The second device according to claim 156, wherein the second device further comprises:

a second processing unit, configured to: in a case in which the received strength of the $w^{th}$ first wireless signal falls within a second quantization range, set the $w^{th}$ second indicator bit to a first value, wherein the $w^{th}$ second indicator bit is one of M second indicator bits; or
in a case in which the received strength of the $w^{th}$ first wireless signal does not fall within the second quantization range, setting the $w^{th}$ second indicator bit to a second value.

**158.**
The second device according to claim 157, wherein the second communications unit is configured to transmit third information to the first device, and the third information comprises the M second indicator bits.

**159.**
The second device according to any one of claims 156 to 158, wherein the $w^{th}$ second initial binary sequence is obtained by quantizing the received strength of the $w^{th}$ first wireless signal based on the preset quantization algorithm and second strength feature related information, wherein
the second strength feature related information comprises at least one of following: an average value of second strength feature information or a standard deviation of the second strength feature information.

**160.**
The second device according to any one of claims 156 to 159, wherein the preset quantization algorithm comprises one of following:
a channel quantization CQ algorithm, a uniform quantization algorithm, a channel quantization with guard-band CQG algorithm, or a channel quantization alternating CQA algorithm.

**161.**
The second device according to any one of claims 156 to 160, wherein the received strength of the $w^{th}$ first wireless signal is an average value of a plurality of measurement values obtained by performing a plurality of times of measurement on the $w^{th}$ first wireless signal.

**162.**
The second device according to any one of claims 154 to 160, wherein the second key is generated based on the third sequence in a case in which a second condition is met, and
the second condition comprises one of following:

a total length of the third sequence is greater than or equal to a preset length; or
a quantity of times the first wireless signal is received reaches a preset quantity, wherein the first wireless signal is used by the second device to generate the second key.

**163.**
The second device according to claim 162, wherein the second communications unit is configured to receive second information transmitted by the first device, and the second information comprises at least one of following: the preset length or the preset quantity.

**164.**
The second device according to any one of claims 154 to 163, wherein the second key is a fourth sequence obtained based on the third sequence.

**165.**
The second device according to claim 164, wherein the fourth sequence comprises a target binary sequence, the target binary sequence is determined from the third sequence based on M first indicator bits, and the M first indicator bits are used to indicate whether a channel estimation value obtained by the first device based on received strength of M first reflected signals falls within a first quantization range.

**166.**

The second device according to claim 165, wherein the target binary sequence is determined from the third sequence based on M combination indicator bits, and
the M combination indicator bits are obtained by combining the M second indicator bits and M first indicator bits.

**167.**

The second device according to claim 166, wherein the second device further comprises:

a second processing unit, configured to: in a case in which both the $q^{th}$ second indicator bit and the $q^{th}$ first indicator bit are a first value, determine that the $q^{th}$ combination indicator bit is the first value, wherein q is an integer greater than or equal to 1 and less than or equal to M; or
in a case in which at least one of the $q^{th}$ second indicator bit and the $q^{th}$ first indicator bit is a second value, determine that the $q^{th}$ combination indicator bit is the second value.

**168.**

The second device according to claim 167, wherein the second processing unit is configured to: in a case in which the $t^{th}$ combination indicator bit in the M combination indicator bits is the first value, determine that the $t^{th}$ group of binary bits is one of the target binary sequence, wherein the $t^{th}$ group of binary bits is generated based on received strength of the $t^{th}$ first wireless signal, and t is an integer greater than or equal to 1 and less than or equal to M; or
in a case in which the $t^{th}$ combination indicator bit in the M combination indicator bits is the second value, determine that the $t^{th}$ group of binary bits is not one of the target binary sequence.

**169.**

The second device according to any one of claims 166 to 168, wherein the second communications unit is configured to receive first information transmitted by the first device, and the first information comprises the M first indicator bits.

**170.**

The second device according to any one of claims 154 to 163, wherein the second key is the third sequence.

**171.**

The second device according to any one of claims 153 to 170, wherein the check information is one of following:

a first parity check code generated based on the first key; or
information obtained by performing hash calculation based on the first key.

**172.**

The second device according to claim 171, wherein the second device further comprises:
a second processing unit, configured to generate a second parity check code based on the second key, and determine a check result based on the second parity check code and the first parity check code.

**173.**

The second device according to claim 172, wherein the second communications unit is configured to: in a case in which a count value of a slot counter is reset to zero, transmit sixth information to the first device, wherein the sixth information comprises a first result obtained after a first random number is encrypted based on the second key.

**174.**

The second device according to claim 173, wherein the check information is a second result obtained by performing hash calculation on a second random number, and the second random number is obtained by decrypting the first result based on the first key.

**175.**

The second device according to claim 174, wherein the second processing unit is configured to perform hash calculation on the first random number, to obtain a third result, and perform consistency check on the third result against the second result, to obtain a check result.

**176.**
The second device according to claim 175, wherein the second processing unit is configured to: in a case in which the third result is consistent with the second result, obtain a first check result, wherein the first check result indicates that the second key is consistent with the first key; or

in a case in which the third result is inconsistent with the second result, obtain a second check result, wherein the second check result indicates that the second key is inconsistent with the first key.

**177.**
The second device according to claim 176, wherein the fifth information comprises one of following:

the first check result obtained after encryption is performed based on the second key; or
the second check result.

**178.**
The second device according to any one of claims 173 to 177, wherein

the count value of the slot counter is decremented based on the first wireless signal; and/or,
the count value of the slot counter is decremented based on a second wireless signal, wherein the second wireless signal is used to instruct the second device to decrement the count value of the slot counter, and is not used by the second device to generate the second key.

**179.**
A first device, comprising a processor and a memory, wherein the memory is configured to store a computer program, and the processor is configured to invoke and run the computer program stored in the memory to cause the terminal device to execute the method according to any one of claims 1 to 20 or the method according to any one of claims 39 to 63.

**180.**
A second device, comprising a processor and a memory, wherein the memory is configured to store a computer program, and the processor is configured to invoke and run the computer program stored in the memory to cause the terminal device to execute the method according to any one of claims 21 to 28 or the method according to any one of claims 64 to 89.

**181.**
A chip, comprising a processor, configured to invoke a computer program from a memory and run the computer program, to cause a device on which the chip is installed to execute the method according to any one of claims 1 to 20 or the method according to any one of claims 39 to 63.

**182.**
A chip, comprising a processor, configured to invoke a computer program from a memory and run the computer program, to cause a device on which the chip is installed to execute the method according to any one of claims 21 to 28 or the method according to any one of claims 64 to 89.

**183.**
A computer-readable storage medium, configured to store a computer program, wherein the computer program, when is run by a device, causes the device to execute a method according to any one of claims 1 to 89.

100

FIG. 1

A first device transmits a first wireless signal and receives a first reflected signal, where the first reflected signal is transmited by a second device based on the first wireless signal transmited by the first device — S210

The first device generates a first key based on received strength of the first reflected signal — S220

FIG. 2

S310
A first device transmits a first wireless signal and receives a first reflected signal, where the first reflected signal is transmitted by a second device based on the first wireless signal

S321
The first device generates a first sequence based on received strength of the first reflected signal

No

S322
Whether a first condition is met

Yes

S323
The first device generates a first key based on the first sequence

FIG. 3

A second device receives a first wireless signal — S410

The second device generates a second key based on received strength of the first wireless signal — S420

FIG. 4

A second device receives a first wireless signal — S510

The second device generates a third sequence based on received strength of the first wireless signal — S521

Whether a second condition is met — S522

No

Yes

The second device generates a second key based on the third sequence — S523

FIG. 5

A first device transmits fourth information to a second device, where the fourth information includes check information generated based on a first key, the first key is related to received strength of a first reflected signal, and the first reflected signal is transmitted by the second device based on a first wireless signal transmitted by the first device — S610

The first device receives fifth information transmitted by the second device, where the fifth information includes a check result of checking on a second key against the first key, and the second key is related to received strength of receiving the first wireless signal by the second device — S620

FIG. 6

A second device receives fourth information transmitted by a first device, where the fourth information includes check information generated based on a first key, the first key is related to received signal strength of a first reflected signal, and the first reflected signal is transmitted by the second device based on a first wireless signal transmitted by the first device — S710

The second device transmits fifth information to the first device, where the fifth information includes a check result of checking on a second key against the first key, and the second key is related to received strength of receiving the first wireless signal by the second device — S720

FIG. 7

**Reader**          **Tag**

Step 801: Transmit the $i^{th}$ first wireless signal

Step 802: Transmit the $i^{th}$ first reflected signal

Quantize received strength of the $i^{th}$ first wireless signal, to generate the $i^{th}$ second initial binary sequence

Step 803: Determine the $i^{th}$ path loss

Step 804: Determine the $i^{th}$ channel estimation value

Step 805: Obtain the $i^{th}$ first initial binary sequence

Step 806: The reader determines whether a first condition is met, and if the first condition is met, the reader executes step 807, or if the first condition is not met, the reader returns to execute step 801

Step 807: Transmit fourth information

Step 808: Transmit fifth information to the reader

FIG. 8a

$RSSI_{Reader}$    $RSSI_{Tag}$

...

$RSSI_{TRes}$

Reader    Tag

$RSSI_{REve}$    $RSSI_{TEve}$

Eavesdropper

FIG. 8b

Reader

Tag

Enter an Inventory
(inventory) process

Step 901: Transmit second information

Step 902: Determine a
quantity of slots

Step 903: Transmit the $i^{th}$ first wireless signal,
where the $i^{th}$ first wireless signal carries a
QueryRep (repeated query) packet

Step 904: Transmit the $i^{th}$ first reflected signal to the
reader

Perform quantization to
generate the $i^{th}$ second
initial binary sequence

Step 905: Determine the $i^{th}$ path
loss

Step 906: Determine the $i^{th}$
channel estimation value

Step 907: Obtain the $i^{th}$ first
initial binary sequence

Step 908: The reader
determines whether a first
condition is met, and if the first
condition is met, the reader
executes S910, or if the first
condition is not met, the reader
returns to execute S903

Step 909: A count value of a slot counter
is reset to zero

Step 909: Transmit sixth information, where the sixth information
includes a first result obtained after a first random number is
encrypted based on a second key

Step 910: Transmit fourth information, where a check result
included in the fourth information is a second result obtained
by performing hash calculation on a second random number

Step 911:
Consistency
check

Inconsistent

Consistent

Step 911: Transmit fifth information to the reader

Error

FIG. 9

| Reader | | Tag |
|---|---|---|

Enter an Inventory (inventory) process

Step 1001: Transmit second information →

Step 1002: Determine a quantity of slots

Step 1003: Transmit the $i^{th}$ first wireless signal, where the $i^{th}$ first wireless signal carries a QueryRep (repeated query) packet →

Step 1004: Transmit the $i^{th}$ first reflected signal to the reader ←

Perform quantization to generate the $i^{th}$ second initial binary sequence

Step 1005: Determine the $i^{th}$ path loss

Step 1006: Determine the $i^{th}$ channel estimation value

Step 1007: Obtain the $i^{th}$ first initial binary sequence, and determine the $i^{th}$ first indicator bit

Step 1008: The reader determines whether a first condition is met, and if the first condition is met, the reader executes S1009, or if the first condition is not met, the reader returns to execute S1003

Step 1009: Exchange quantization information ←→

Step 1009: Generate a first key

Step 1009: Generate a second key

Step 1010: A count value of a slot counter is reset to zero

Step 1010: Transmit sixth information, where the sixth information includes a first result obtained after a first random number is encrypted based on the second key ←

Step 1011: Transmit fourth information, where a check result included in the fourth information is a second result obtained by performing hash calculation on a second random number →

Step 1012: Consistency check

Inconsistent

Consistent

Step 1012: Transmit fifth information to the reader ←

Error

FIG. 10a

FIG. 10b

Change curves of bit error rates in different quantization algorithms

FIG. 11

First device

First communications
unit 1201

First processing unit
1202

FIG. 12

Second device

Second
communications unit
1301

Second processing unit
1302

FIG. 13

Energy
harvesting

Backscatter
communication

Low-power-
consumption
calculation

Network device    Zero-power-consumption
terminal

FIG. 14

Case 2: Zero-power-consumption sidelink communication powered or triggered by a network

Case 1: Zero-power-consumption communication in which a terminal assists in power supply or triggering

Backscatter

Power supply or triggering

Air interface data

Air interface signalling

Backscatter

Air interface signalling

Only power supply

Only triggering

Air interface signalling

Backscatter

Air interface data

Power supply or triggering

Backscatter

Case 3: Zero-power-consumption communication in which a terminal assists in power supply

Case 4: Zero-power-consumption sidelink communication controlled by a network

Backscatter ---▶    Power supply ﹏﹏    Triggering ⟶    Air interface signalling or data - -▶

FIG. 15

Communications device 1600

Memory 1620    Processor 1610

Transceiver 1630

FIG. 16

Chip 1700

Input
interface
1730

Processor
1710

Memory
1720

Output
interface
1740

FIG. 17

Communications system 1800

1810

Second device

First device

1820

FIG. 18

<div style="text-align:center">**INTERNATIONAL SEARCH REPORT**</div>

| International application No. |
|---|
| **PCT/CN2022/076818** |

### A.　CLASSIFICATION OF SUBJECT MATTER

H04W 12/04(2021.01)i

According to International Patent Classification (IPC) or to both national classification and IPC

### B.　FIELDS SEARCHED

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; EPTXT; USTXT: 信号, 功率, 强度, 密钥, 生成, 序列, 校验, 随机数, 一致, 物理层, 特征, 信道, 状态, signal, power, key, generate, sequence, verify, random data, consistent, physical layer, characteristic, channel, state

### C.　DOCUMENTS CONSIDERED TO BE RELEVANT

| Category* | Citation of document, with indication, where appropriate, of the relevant passages | Relevant to claim No. |
|---|---|---|
| X | CN 112202511 A (INFORMATION ENGINEERING UNIVERSITY OF PLA) 08 January 2021 (2021-01-08)<br>description, paragraphs [0029]-[0083] | 1-183 |
| X | CN 108696867 A (NANJING UPSEC CYBER NETWORK SECURITY TECHNOLOGY RESEARCH INSTITUTE CO., LTD.) 23 October 2018 (2018-10-23)<br>description, paragraphs [0035]-[0052] | 1-183 |
| X | CN 107148017 A (XIDIAN UNIVERSITY) 08 September 2017 (2017-09-08)<br>description, paragraphs [0074]-[0156] | 1-38, 90-127, 179-182 |
| X | CN 107124716 A (SOUTHEAST UNIVERSITY) 01 September 2017 (2017-09-01)<br>description, paragraphs [0025]-[0029] | 1-38, 90-127, 179-182 |
| A | US 7333611 B1 (NORTHWESTERN UNIVERSITY) 19 February 2008 (2008-02-19)<br>entire document | 1-183 |
| A | US 2010067701 A1 (PATWARI Neal et al.) 18 March 2010 (2010-03-18)<br>entire document | 1-183 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 October 2022** | **27 October 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

International application No.

**PCT/CN2022/076818**

| Patent document cited in search report | | | Publication date (day/month/year) | Patent family member(s) | | | Publication date (day/month/year) |
|---|---|---|---|---|---|---|---|
| CN | 112202511 | A | 08 January 2021 | None | | | |
| CN | 108696867 | A | 23 October 2018 | CN | 108696867 | B | 20 April 2021 |
| CN | 107148017 | A | 08 September 2017 | CN | 107148017 | B | 23 July 2019 |
| CN | 107124716 | A | 01 September 2017 | CN | 107124716 | B | 12 July 2019 |
| US | 7333611 | B1 | 19 February 2008 | None | | | |
| US | 2010067701 | A1 | 18 March 2010 | US | 2011280397 | A1 | 17 November 2011 |
| | | | | US | 8503673 | B2 | 06 August 2013 |
| | | | | US | 8515061 | B2 | 20 August 2013 |
| | | | | WO | 2010030927 | A2 | 18 March 2010 |
| | | | | WO | 2010030927 | A3 | 14 October 2010 |

Form PCT/ISA/210 (patent family annex) (January 2015)